# EUROPÄISCHE PATENTSCHRIFT

(11) **EP 1 965 990 B1**
(45) Veröffentlichungstag und Bekanntmachung des Hinweises auf die Patenterteilung: **20.07.2016**
(21) Anmeldenummer: 06829808.2
(22) Anmeldetag: 21.12.2006
(51) Int. Cl.: B42D 25/00, B42D 25/342

(54) **SICHERHEITSELEMENT**
SECURITY ELEMENT
ELEMENT DE SECURITE

(30) Priorität: 23.12.2005 DE 102005062132
(43) Veröffentlichungstag der Anmeldung: 10.09.2008
(73) Patentinhaber: Giesecke & Devrient GmbH, 81677 München (DE)
(72) Erfinder: KAULE, Wittich, 82275 Emmering (DE); RAUSCHER, Wolfgang, 81677 München (DE)
(86) Internationale Anmeldenummer: PCT/EP2006/012374
(87) Internationale Veröffentlichungsnummer: WO 2007/076952

(56) Entgegenhaltungen:
- WO-A-94/27254
- WO-A-2005/106601
- US-A1- 2005 180 020
- HUTLEY M C ET AL: "The moire magnifier" PURE AND APPLIED OPTICS. JOURNAL OF THE EUROPEAN OPTICAL SOCIETY PART A, INSTITUTE OF PHYSICS PUBLISHING, BRISTOL, GB, Bd. 3, Nr. 2, 1. März 1994 (1994-03-01), Seiten 133-142, XP020071153 ISSN: 0963-9659 in der Anmeldung erwähnt

## Beschreibung

Die Erfindung betrifft ein Sicherheitselement für Sicherheitspapiere, Wertdokumente und dergleichen, und betrifft insbesondere ein derartiges Sicherheitselement mit einer mikrooptischen Moire-Vergrößerungsanordnung. Die Erfindung betrifft ferner ein Verfahren zum Herstellen eines solchen Sicherheitselements, ein Sicherheitspapier sowie einen Datenträger mit einem derartigen Sicherheitselement.

Datenträger, wie Wert- oder Ausweisdokumente, oder auch andere Wertgegenstände, wie etwa Markenartikel, werden zur Absicherung oft mit Sicherheitselementen versehen, die eine Überprüfung der Echtheit des Datenträgers gestatten und die zugleich als Schutz vor unerlaubter Reproduktion dienen. Datenträger im Sinne der vorliegenden Erfindung sind insbesondere Banknoten, Aktien, Anleihen, Urkunden, Gutscheine, Schecks, hochwertige Eintrittskarten, aber auch andere fälschungsgefährdete Papiere, wie Pässe und sonstige Ausweisdokumente, sowie Produktsicherungselemente, wie Etiketten, Siegel, Verpackungen und dergleichen. Der Begriff "Datenträger" schließt im Folgenden alle derartigen Gegenstände, Dokumente und Produktsicherungsmittel ein. Unter dem Begriff "Sicherheitspapier" wird nachfolgend die noch nicht umlauffähige Vorstufe eines Wertdokuments verstanden, die üblicherweise in quasi endloser Form vorliegt und zu einem späteren Zeitpunkt weiterverarbeitet wird.

Die Sicherheitselemente können beispielsweise in Form eines in eine Banknote eingebetteten Sicherheitsfadens, eines Aufreißfadens für Produktverpackungen, eines aufgebrachten Sicherheitsstreifens oder eines selbsttragenden Transferelements ausgebildet sein, wie einem Patch oder einem Etikett, das nach seiner Herstellung auf ein Wertdokument aufgebracht wird.

Um die Nachstellung der Sicherheitselemente selbst mit hochwertigen Farbkopiergeräten zu verhindern, weisen sie vielfach optisch variable Elemente auf, die dem Betrachter unter unterschiedlichen Betrachtungswinkeln einen unterschiedlichen Bildeindruck vermitteln und etwa einen unterschiedlichen Farbeindruck oder unterschiedliche graphische Motive zeigen. Zu diesem Zweck werden die Sicherheitselemente beispielsweise mit Sicherheitsmerkmalen in Form beugungsoptisch wirksamer Mikro- oder Nanostrukturen ausgestattet, wie etwa mit konventionellen Prägehologrammen oder anderen hologrammähnlichen Beugungsstrukturen. Solche beugungsoptische Strukturen für Sicherheitselemente sind etwa in den Druckschriften EP 0 330 733 A1 oder EP 0 064 067 A1 beschreiben.

Seit einigen letzten Jahren werden Hologramme und hologrammartige Beutungsstrukturen allerdings in zunehmendem Maße nicht nur als Sicherheitsmerkmale, sondern auch rein dekorativ in sicherheitstechnisch unkritischen Anwendungen eingesetzt, so dass die Aufmerksamkeit der Betrachter für als Sicherheitsmerkmale verwendete Hologramme nachlässt. Der charakteristische visuelle Effekt wird von den Betrachtern vielfach nicht mehr als Sicherheitsmerkmal, sondern lediglich als Designvariante wahrgenommen, wodurch der Nutzen dieser Sicherheitsmerkmale für den Fälschungsschutz reduziert wird. Darüber hinaus lassen sich die beugungsoptisch erzeugten Bild- oder Farbeindrücke oft nur aus gewissen Betrachtungsrichtungen und bei guten Lichtverhältnissen vollständig und scharf erkennen. Insbesondere ist die Erkennbarkeit holographischer Motive bei schlechten Lichtverhältnissen, wie etwa bei diffuser Beleuchtung, oft stark eingeschränkt.

Es ist weiterhin bekannt, Linsensysteme als Sicherheitsmerkmale einzusetzen. So ist beispielsweise in der Druckschrift EP 0 238 043 A2 ein Sicherheitsfaden aus einem transparenten Material beschrieben, auf dessen Oberfläche ein Raster aus mehreren parallel laufenden Zylinderlinsen eingeprägt ist. Die Dicke des Sicherheitsfadens ist dabei so gewählt, dass sie in etwa der Fokuslänge der Zylinderlinsen entspricht. Auf der gegenüberliegenden Oberfläche ist ein Druckbild registergenau aufgebracht, wobei das Druckbild unter Berücksichtigung der optischen Eigenschaften der Zylinderlinsen gestaltet ist. Aufgrund der fokussierenden Wirkung der Zylinderlinsen und der Lage des Druckbilds in der Fokusebene sind je nach Betrachtungswinkel unterschiedliche Teilbereiche des Druckbilds sichtbar. Durch entsprechende Gestaltung des Druckbilds können damit Informationen eingebracht werden, die jedoch lediglich unter bestimmten Blickwinkeln sichtbar sind. Durch entsprechende Ausgestaltung des Druckbilds können zwar auch "bewegte" Bilder erzeugt werden. Das Motiv bewegt sich bei Drehung des Dokuments um eine zu den Zylinderlinsen parallel laufende Achse allerdings nur annähernd kontinuierlich von einem Ort auf dem Sicherheitsfaden zu einem anderen Ort. In dieser Anmeldung wird nicht nur die Anwendung zylindrischer Linsenraster, sondern auch die Anwendung von Rastern mit sphärischen Linsen und mit wabenförmiger Linsenanordnung zur Erzeugung bewegter Bilder offenbart.

Aus der Druckschrift WO 94/27254 ist die Verwendung einer Moire-Vergrößerungsanordnung als Sicherheitsmerkmal bekannt. Die dort beschriebene Sicherheitsvorrichtung weist eine regelmäßige Anordnung von im Wesentlichen identischen gedruckten Mikrobildern mit einer Größe bis zu 250 µm auf, sowie eine regelmäßige zweidimensionale Anordnung von im Wesentlichen identischen sphärischen Mikrolinsen. Die Mikrolinsen-Anordnung weist dabei im Wesentlichen dieselbe Teilung wie die Mikrobildanordnung auf. Wird die Mikrobildanordnung durch die Mikrolinsenanordnung betrachtet, so werden in den Bereichen, in denen die beiden Anordnungen im Wesentlichen im Register stehen, für den Betrachter eine oder mehrere vergrößerte Versionen der Mikrobilder erzeugt.
Die prinzipielle Funktionsweise derartiger Moiré-Vergrößerungsanordnungen ist in dem Artikel "The moiré magnifier", M.C. Hutley, R. Hunt, R.F. Stevens and P. Savander, Pure Appl. Opt. 3 (1994), pp. 133-142, beschrieben. Kurz gesagt bezeichnet Moire-Vergrößerung danach ein Phänomen, das bei der Betrachtung eines Rasters aus identischen Bildobjekten durch ein Linsenraster mit annähernd demselben Rastermaß auftritt. Wie bei jedem Paar ähnlicher Raster ergibt sich dabei ein Moirémuster, wobei in diesem Fall das "Moire" in Gestalt vergrößerter und/oder gedrehter Bilder der wiederholten Elemente des Bildrasters erscheint.

Dokument WO 2005/106601 A (= D1) beschreibt ein Sicherheitselement mit einer mikrooptischen Moire-Vergrößerungsanordnung mit einem Motivbild aus Mikromotivelementen und einer Anordnung einer Mehrzahl von Mikrofokussierelementen. Beim Kippen des Sicherheitselements tritt ein orthoparallaktischer Bewegungseffekt des vergrößerten Moire-Bildes auf.

Die Schrift Hutley et al., "The Moire Magnifier", PURE AND APPLIED OPTICS, JOURNAL OF THE EUROPEAN OPTICAL SOCIETY, PART A, Band 3, Nr. 2,1. März 1994, Seiten 133-142 (= D2) beschreibt ein Sicherheitselement mit einer mikrooptischen Moire-Vergrößerungsanordnung mit einem Motivbild aus Mikromotivelementen und einer Anordnung einer Mehrzahl von Mikrofokussierelementen. Beim Kippen des Sicherheitselements tritt ein orthoparallaktischer Bewegungseffekt des vergrößerten Moire-Bildes auf.

Dokument US 2005/180020 A (= D3) beschreibt ein Sicherheitselement mit einer mikrooptischen Moire-Vergrößerungsanordnung mit einem Motivbild aus Mikromotivelementen und einer Anordnung einer Mehrzahl von lang gestreckten Mikrofokussierelementen.

Die bekannten Moiré-Vergrößerungsanordnungen lassen sich jedoch durch Abprägen der Strukturen oder durch Nachstellung relativ leicht fälschen. Davon ausgehend liegt der Erfindung die Aufgabe zugrunde, ein gattungsgemäßes Sicherheitselement anzugeben, das die Nachteile des Standes der Technik vermeidet und das insbesondere eine hohe Fälschungssicherheit aufweist. Darüber hinaus soll ein Verfahren zum Herstellen derartiger Sicherheitselemente angegeben werden.

Diese Aufgabe wird durch das Sicherheitselement mit den Merkmalen der unabhängigen Ansprüche gelöst. Ein Verfahren zum Herstellen eines solchen Sicherheitselements, ein Sicherheitspapier sowie ein Datenträger mit einem solchen Sicherheitselement sind in den nebengeordneten Ansprüchen angegeben. Weiterbildungen der Erfindung sind Gegenstand der Unteransprüche.

Nach einer vorteilhaften Variante der Erfindung enthält ein gattungsgemäßes Sicherheitselement eine mikrooptische Moire-Vergrößerungsanordnung mit
- einem Motivbild, das aus einer planaren periodischen oder zumindest lokal periodischen Anordnung einer Mehrzahl von Mikromotivelementen besteht, und
- einer planaren periodischen oder zumindest lokal periodischen Anordnung einer Mehrzahl von Mikrofokussierelementen zur Moiré-vergrößerten Betrachtung der Mikromotivelemente des Motivbilds,
wobei die Anordnung von Mikromotivelementen und/oder die Anordnung von Mikrofokussierelementen in ihren periodischen oder zumindest lokal periodischen Bereichen keine Symmetrieachse in der Ebene der Anordnung aufweist.

Bei den folgenden Ausführungen stehen zunächst planare Moiré-Vergrößerungsanordnungen im Vordergrund. Auf die Besonderheiten gekrümmter Moiré-Vergrößerungsanordnungen, die nicht unter den Umfang der vorliegenden Ansprüche fallen, wird weiter unten im Detail eingegangen.

Gegenüber der Verwendung höhersymmetrischer Anordnungen bietet der erfindungsgemäße Einsatz einer Mikromotivelement-Anordnung bzw. einer Mikrofokussierelement-Anordnung mit niedriger Symmetrie mehrere Vorteile. Zum einen lässt sich eine derartige Moire-Vergrößerungsanordnung nur schwer nachahmen, da für die Entstehung eines korrekten Bilds bei der Betrachtung die nur schwer analysierbare niedrige Symmetrie der Anordnung genau nachgestellt werden muss.

Weiter schafft die niedrige Symmetrie einen großen Freiraum für unterschiedlich gewählt Gitterparameter, die somit als verborgene Kennzeichnung für erfindungsgemäß abgesicherte Produkte verwendet werden können, ohne dass dies für einen Betrachter am Moire-vergrößerten Bild ohne weiteres erkennbar wäre. Auf der anderen Seite können alle mit Moire-Vergrößerungsanordnungen höherer Symmetrie realisierbaren attraktiven Effekte auch mit den erfindungsgemäßen niedrigsymmetrischen Moiré-Vergrößerungsanordnungen verwirklicht werden.

In einer bevorzugten Erfindungsvariante sind dabei sowohl die Mehrzahl von Mikromotivelementen als auch die Mehrzahl von Mikrofokussierelementen periodisch angeordnet. Die Periodizitätslänge liegt dabei vorzugsweise zwischen 3 µm und 50 µm, bevorzugt zwischen 5 µm und 30 µm, besonders bevorzugt zwischen etwa 10 µm und etwa 20 µm.

Mit Vorteil bildet sowohl die Anordnung von Mikromotivelementen als auch die Anordnung von Mikrofokussierelementen jeweils ein zweidimensionales Bravais-Gitter, wobei zumindest die Anordnung von Mikromotivelementen ein Bravais-Gitter mit der Symmetrie eines Parallelogramm-Gitters bildet. Wie weiter unten im Detail beschrieben, lassen sich alle periodischen ebenen Anordnungen einem von fünf grundlegenden Bravais-Gittern zuordnen, wobei zur eindeutigen Zuordnung das Bravais-Gitter mit der höchsten Symmetrie gewählt wird. Hat ein Gitter somit die Symmetrie eines Parallelogramm-Gitters, so bedeutete dies, dass das Gitter keine höhere Symmetrie als die des allgemeinen Parallelogramm-Gitters aufweist, da es bei Vorliegen einer höheren Symmetrie dem entsprechenden höhersymmetrischen Bravais-Gittertyp zugeordnet würde.

Zweckmäßig werden die Gitterzellen der beiden Bravais-Gitter durch eine erste Seitenlänge s₁, eine zweite Seitenlänge s₂ und einen Zwischenwinkel σ beschrieben, wobei sich das Parallelogramm-Gitter der Mikromotivelemente von dem Bravais-Gitter der Mikrofokussierelemente bevorzugt in zumindest einem der Gitterparameter s₁, s₂ und σ um 0,01% bis 5%, vorzugsweise um 0,1% bis 2% unterscheidet. Die Tatsache, dass die Anordnung der Mikromotivelemente ein Bravais-Gitter mit der Symmetrie eines Parallelogramm-Gitters bildet, bedeutet durch die Gitterparameter ausgedrückt, dass unabhängig von der konkreten Wahl der Gitterzellen s₁ ungleich s₂ ist (ansonsten läge je nach Zwischenwinkel ein Rauten-Gitter, ein Sechseckgitter oder ein Quadratgitter vor) und dass der Zwischenwinkel σ ungleich 90° ist (sonst läge ein Rechteckgitter vor).

Alternativ oder zusätzlich kann vorgesehen sein, dass die Anordnung von Mikrofokussierelementen ein Bravais-Gitter mit der Symmetrie eines Parallelogramm-Gitters bildet. Zweckmäßig werden die Gitterzellen der beiden Bravais-Gitter auch in diesem Fall durch eine erste Seitenlänge s₁, eine zweite Seitenlänge s₂ und einen Zwischenwinkel σ beschrieben, wobei sich das Parallelogramm-Gitter der Mikrofokussierelemente von dem Bravais-Gitter der Mikromotivelemente in zumindest einem der Gitterparameter s₁, s₂ und σ um 0,01% bis 5%, vorzugsweise um 0,1% bis 2% unterscheidet.

In einer anderen, ebenfalls bevorzugten Erfindungsvariante sind sowohl die Mehrzahl von Mikromotivelementen als auch die Mehrzahl von Mikrofokussierelementen lokal periodisch angeordnet, wobei sich die lokalen Periodenparameter im Verhältnis zur Periodizitätslänge nur langsam ändern. Beispielsweise können die lokalen Periodenparameter über die Ausdehnung des Sicherheitselements periodisch moduliert sein, wobei die Modulationsperiode vorzugsweise mindestens 20-mal, bevorzugt mindestens 50-mal, besonders bevorzugt mindestens 100-mal größer ist als die lokale Periodizitätslänge. Eine derartige, langsame Änderung der lokalen Periodenparameter berührt die obigen grundlegenden Aussagen zur niedrigen Symmetrie der Anordnungen in den erfindungsgemäßen Gestaltungen nicht. Wegen der langsamen Änderung der Periodenparameter können die beiden Mikro-Anordnungen lokal stets mit hinreichender Genauigkeit durch Bravais-Gitter mit konstanten Gitterparametern beschrieben werden, welche erfindungsgemäß jeweils die vorgegebene Bedingung erfüllen, keine Symmetrieachse in der Ebene der Anordnung aufzuweisen.

Auch bei dieser Erfindungsvariante liegt die lokale Periodizitätslänge vorzugsweise zwischen 3 µm und 50 µm, bevorzugt zwischen 5 µm und 30 µm, besonders bevorzugt zwischen etwa 10 µm und etwa 20 µm.

Analog zur ersten Erfindungsvariante bilden sowohl die Anordnung von Mikromotivelementen als auch die Anordnung von Mikrofokussierelementen lokal jeweils ein zweidimensionales Bravais-Gitter, wobei zumindest die Anordnung von Mikromotivelementen lokal ein Bravais-Gitter mit der Symmetrie eines Parallelogramm-Gitters bildet. Zweckmäßig werden die Gitterzellen der beiden Bravais-Gitter lokal jeweils durch eine erste Seitenlänge s₁, eine zweite Seitenlänge s₂ und einen Zwischenwinkel σ beschrieben, wobei sich das Parallelogramm-Gitter der Mikromotivelemente von dem Bravais-Gitter der Mikrofokussierelemente bevorzugt in zumindest einem der Gitterparameter s₁, s₂ und σ um 0,01% bis 5%, vorzugsweise um 0,1% bis 2% unterscheidet.

Alternativ oder zusätzlich kann vorgesehen sein, dass die Anordnung von Mikrofokussierelementen lokal ein Bravais-Gitter mit der Symmetrie eines Parallelogramm-Gitters bildet. Auch hier werden die Gitterzellen der beiden Bravais-Gitter zweckmäßig lokal durch eine erste Seitenlänge s₁, eine zweite Seitenlänge s₂ und einen Zwischenwinkel σ beschrieben, wobei sich das Parallelogramm-Gitter der Mikrofokussierelemente von dem Bravais-Gitter der Mikromotivelemente bevorzugt in zumindest einem der Gitterparameter s₁, s₂ und σ um 0,01% bis 5%, vorzugsweise um 0,1% bis 2% unterscheidet.

Die Mikrofokussierelemente der Moiré-Vergrößerungsanordnung können als transmissive, refraktive oder diffraktive Linsen oder eine Mischform vorliegen. In bevorzugten Ausführungsformen sind sie durch zylindrische oder nicht-zylindrische Mikrolinsen, insbesondere auch durch Mikrolinsen mit einer kreisförmigen oder polygonal begrenzten Basisfläche gebildet.

Die Erfindung enthält in einem weiteren Aspekt, der nicht unter den Umfang der vorliegenden Ansprüche fällt, ein gattungsgemäßes Sicherheitselement mit einer mikrooptischen Moiré-Vergrößerungsanordnung mit
- einem Motivbild, das aus einer planaren oder auf gekrümmter Fläche aufgebrachten periodischen oder zumindest lokal periodischen Anordnung einer Mehrzahl von Mikromotivelementen besteht, und
- einer planaren oder auf gekrümmter Fläche aufgebrachten periodischen oder zumindest lokal periodischen Anordnung einer Mehrzahl von Mikrofokussierelementen zur Moiré-vergrößerten Betrachtung der Mikromotivelemente des Motivbilds,
wobei die Anordnung von Mikromotivelementen und/ oder die Anordnung von Mikrofokussierelementen durch lang gestreckte Mikromotivelemente bzw. Mikrofokussierelemente gebildet sind, deren Ausdehnung in Längsrichtung mindestens 5-mal größer, vorzugsweise 6-mal größer, besonders bevorzugt sogar 10-mal oder noch viel größer ist als die Ausdehnung in der zur Längsrichtung senkrechten Querrichtung.
Bevorzugt sind die Mikromotivelemente dabei durch lang gestreckte Motivelemente gebildet, deren Ausdehnung in Längsrichtung mehr als 250 µm, bevorzugt mehr als 300 µm, besonders bevorzugt mehr als 500 µm und insbesondere mehr als 1 mm beträgt. Die Ausdehnung der Mikromotivelemente in Querrichtung liegt bevorzugt zwischen 5 µm und 50 µm, vorzugsweise zwischen 10 µm und 30 µm.

In einer vorteilhaften Variante dieses Erfindungsaspekts sind die ausgedehnten, lang gestreckten Motivelemente mit normalen Mikrofokussierelementen kombiniert, insbesondere mit Mikrolinsen mit einer kreisförmigen oder polygonal begrenzten Basisfläche. Eine vorteilhafte Vorgehensweise bei der Berechnung des Aussehens der lang gestreckten Mikromotivbilder aus einem gewünschten zu sehenden Bild, einem gewünschten Bewegungsverhalten und einem vorgegebenen Linsenraster wird weiter unten im Detail beschrieben.

In einer anderen, ebenfalls vorteilhaften Variante diese Erfindungsaspekts sind die Mikrofokussierelemente durch lang gestreckte Zylinderlinsen gebildet, deren Ausdehnung in Längsrichtung mehr als 250 µm, bevorzugt mehr als 300 µm, besonders bevorzugt mehr als 500 µm und insbesondere mehr als 1 mm beträgt. Die Ausdehnung der Mikrofokussierelemente in Querrichtung liegt bevorzugt zwischen 5 µm und 50 µm, vorzugsweise zwischen 10 µm und 30 µm.

In einem weiteren Aspekt, der nicht unter den Umfang der vorliegenden Ansprüche fällt, enthält die Erfindung ein gattungsgemäßes Sicherheitselement mit einer mikrooptischen Moire-Vergrößerungsanordnung mit
- einem Motivbild, das aus einer planaren oder auf gekrümmter Fläche aufgebrachten periodischen oder zumindest lokal periodischen Anordnung einer Mehrzahl von Mikromotivelementen besteht, und
- einer planaren oder auf gekrümmter Fläche aufgebrachten periodischen oder zumindest lokal periodischen Anordnung einer Mehrzahl von Mikrofokussierelementen zur Moiré-vergrößerten Betrachtung der Mikromotivelemente des Motivbilds,
wobei das vergrößerte Moirébild sich beim Kippen des Sicherheitselements in eine vorgegebene Richtung bewegt, die mit der Kipprichtung einen Winkel γ ungleich 0° und ungleich 90° einschließt.

Die vorgegebene Richtung schließt mit der Kipprichtung vorzugsweise einen Winkel γ zwischen 5° und 85°, insbesondere zwischen 10° und 80°, zwischen 20° und 70° oder zwischen 30° und 60° ein.

In einer bevorzugten Ausgestaltung bilden die Anordnung von Mikromotivelementen und die Anordnung von Mikrofokussierelementen zumindest lokal jeweils ein zweidimensionales Bravais-Gitter, deren Gitterzellenvektoren durch *u̅ᵢ* und *w̅ᵢ* mit den Komponenten u₁ᵢ, u₂ᵢ bzw. w₁ᵢ, w₂ᵢ, mit i=1,2 gegeben sind. Das Gitter der Mikromotivelemente und das Gitter der Mikrofokussierelemente stehen dabei in der Beziehung ${U}^{↔} = {W}^{↔} - {{A}^{↔}}^{- 1} ⋅ {W}^{↔} ,$ wobei die Matrizen *W̅, U̅* und *̅A̅*̅ durch ${A}^{↔} = \left(\begin{matrix}{a}_{11} & {a}_{12} \\ {a}_{21} & {a}_{22}\end{matrix}\right) ,$ ${W}^{↔} = \left(\begin{matrix}{w}_{11} & {w}_{12} \\ {w}_{21} & {w}_{22}\end{matrix}\right)$ bzw. ${U}^{↔} = \left(\begin{matrix}{u}_{11} & {u}_{12} \\ {u}_{21} & {u}_{22}\end{matrix}\right)$ gegeben sind. Die Matrixelemente der Matrix *̅A̅*̅ werden so gewählt, dass sie mit der vorgegebenen Bewegungsrichtung über $tan {γ}_{1} = \frac{{a}_{21}}{{a}_{11}} , tan {γ}_{2} = \frac{{a}_{22}}{{a}_{12}}$ in Beziehung stehen, wobei γ₁ den Winkel zur Waagrechten darstellt, unter dem sich das vergrößerte Moirebild beim seitlichen Kippen des Sicherheitselements bewegt, und γ₂ den Winkel zur Waagrechten darstellt, unter dem sich das vergrößerte Moirebild beim vor-rückwärtigen Kippen des Sicherheitselements bewegt.

Nach einem weiteren Aspekt, der nicht unter den Umfang der vorliegenden Ansprüche fällt, enthält die Erfindung ein gattungsgemäßes Sicherheitselement mit einer mikrooptischen Moiré-Vergrößerungsanordnung mit
- einem Motivbild, das aus einer planaren oder auf gekrümmter Fläche aufgebrachten periodischen oder zumindest lokal periodischen Anordnung einer Mehrzahl von Mikromotivelementen besteht, und
- einer planaren oder auf gekrümmter Fläche aufgebrachten periodischen oder zumindest lokal periodischen Anordnung einer Mehrzahl von Mikrofokussierelementen zur Moire-vergrößerten Betrachtung der Mikromotivelemente des Motivbilds,
wobei die Anordnung von Mikromotivelementen und die Anordnung von Mikrofokussierelementen ungleichartige Gitter bilden, die so aufeinander abgestimmt sind, dass beim Kippen des Sicherheitselements ein orthoparallaktischer Bewegungseffekt des vergrößerten Moirebilds auftritt.

Die Erfindung beruht in diesem Aspekt auf dem Gedanken, dass ein orthoparallaktischer Bewegungseffekt nicht nur mithilfe gegeneinander verdrehter gleichartiger Motivraster und Linsenraster erzielt werden kann, sondern auch durch geeignet gegeneinander verzerrte, also ungleichartige Motivraster und Linsenraster.

In einer bevorzugten Ausgestaltung bilden die Anordnung von Mikromotivelementen und die Anordnung von Mikrofokussierelementen zumindest lokal jeweils ein zweidimensionales Bravais-Gitter, deren Gitterzellenvektoren durch *u̅ᵢ* und *̅w̅*̅₁ mit den Komponenten u₁ᵢ, u₂ᵢ bzw. w₁ᵢ, w₂ᵢ , mit i=1,2 gegeben sind, und bei dem das Gitter der Mikromotivelemente und das Gitter der Mikrofokussierelemente in der Beziehung ${U}^{↔} = {W}^{↔} - {{A}^{↔}}^{- 1} ⋅ {W}^{↔}$ stehen, wobei die Matrizen *W̅, U̅* und *̅A̅*̅ durch ${A}^{↔} = \left(\begin{matrix}{a}_{11} & {a}_{12} \\ {a}_{21} & {a}_{22}\end{matrix}\right) ,$ ${W}^{↔} = \left(\begin{matrix}{w}_{11} & {w}_{12} \\ {w}_{21} & {w}_{22}\end{matrix}\right)$ bzw. ${U}^{↔} = \left(\begin{matrix}{u}_{11} & {u}_{12} \\ {u}_{21} & {u}_{22}\end{matrix}\right)$ gegeben sind, und wobei *̅A̅*̅ die Form ${A}^{↔} = \left(\begin{matrix}0 & b \\ a & 0\end{matrix}\right) ,$ oder ${A}^{↔} = \left(\begin{matrix}0 & - b \\ a & 0\end{matrix}\right)$ oder ${A}^{↔} = \left(\begin{matrix}0 & b \\ - a & 0\end{matrix}\right)$ oder ${A}^{↔} = \left(\begin{matrix}0 & - b \\ - a & 0\end{matrix}\right)$ mit reellen Zahlen a, b hat. Vorzugsweise ist dabei a, b > 0 gewählt.

In allen genannten Erfindungsvarianten können das Motivbild und die Anordnung von Mikrofokussierelementen an gegenüberliegenden Flächen einer optischen Abstandsschicht angeordnet sein. Die Abstandsschicht kann beispielsweise eine Kunststofffolie und/oder eine Lackschicht umfassen.

Die Anordnung von Mikrofokussierelementen kann darüber hinaus mit einer Schutzschicht versehen sein, deren Brechungsindex vorzugsweise um mindestens 0,3 von dem Brechungsindex der Mikrofokussierelemente abweicht, falls lichtbrechende Linsen als Mikrofokussierelemente dienen. In diesem Fall ändert sich durch die Schutzschicht die Brennweite der Linsen, was bei der Dimensionierung der Linsen-Krümmungsradien und/ oder der Dicke der Abstandsschicht berücksichtigt werden muss. Neben dem Schutz vor Umwelteinflüssen verhindert eine derartige Schutzschicht auch, dass sich die Mikrofokussierelement-Anordnung zu Fälschungszwecken leicht abformen lässt. Werden die linsenförmigen Mikrofokussierelemente etwa aus Lacken mit einem Brechungsindex von 1,2 bis 1,5 hergestellt, bieten sich als Schutzschichten beispielsweise mit Nanopartikeln aus Titanoxid gefüllte Lacke an, die mit Brechungsindizes zwischen 1,7 und 2 kommerziell erhältlich sind. Falls der Brechungsindex der Schutzschicht größer ist als der Brechungsindex der Linsen, liegen die Linsen in konkaver Form vor und erst in Verbindung mit der Schutzschicht bilden sich fokussierende Elemente.

Die Gesamtdicke des Sicherheitselements liegt mit Vorteil unterhalb von 50 µm, was sicherstellt, dass es für die Verwendung in Sicherheitspapier, Wertdokumenten oder dergleichen gut geeignet ist.

Die Mikromotivelemente liegen bevorzugt in Form von Mikrozeichen oder Mikromustern vor. Insbesondere können die Mikromotivelemente in einer Druckschicht vorliegen. Es versteht sich, dass die Mikromotivelemente zur Erzeugung des Moiré-Vergrößerungseffekts weitgehend identisch sein müssen. Jedoch liegt auch eine langsame, insbesondere periodisch modulierte Veränderung des Erscheinungsbilds der Mikromotivelemente und damit auch der vergrößerten Bilder ebenfalls im Rahmen der Erfindung. Auch können einzelne oder ein Teil der Mikromotivelemente mit Zusatzinformationen ausgestattet sein, die im vergrößerten Moiré-Bild nicht in Erscheinung treten, die jedoch als zusätzliches Echtheitskennzeichen eingesetzt werden können.

Vorzugsweise sind die Form und Anordnung der Mikrofokussierelemente und die Form und Anordnung der Mikromotivelemente aufeinander abgestimmt, um ungenutzte Zwischenräume in dem vergrößerten Motivbild zu vermeiden. Dabei besteht sowohl die Möglichkeit, die Mikromotivelemente vorzugeben und die Form und Anordnung der Mikrofokussierelemente entsprechend zu wählen, als auch die Möglichkeit, die Mikrofokussierelemente vorzugeben und die Form und Anordnung der Mikromotivelemente entsprechend anzupassen.

Nach einer vorteilhaften Weiterbildung der Erfindung weist das Sicherheitselement weiter eine opake Abdeckschicht zur bereichsweisen Abdeckung der Moire-Vergrößerungsanordnung auf. Innerhalb des abgedeckten Bereichs tritt somit kein Moire-Vergrößerungseffekt auf, so dass der optisch variable Effekt mit herkömmlichen Informationen oder mit anderen Effekten kombiniert werden kann. Diese Abdeckschicht liegt mit Vorteil in Form von Mustern, Zeichen oder Codierungen vor und/ oder weist Aussparungen in Form von Mustern, Zeichen oder Codierungen auf. Die Abdeckschicht umfasst zweckmäßig eine Druckschicht oder eine Reflexionsschicht, insbesondere eine Metallschicht. In eine Metallschicht können beispielsweise mittels des in der Druckschrift WO 99/13157 A1 beschriebenen Waschverfahrens oder eines anderen Demetallisierungsverfahrens Aussparungen der gewünschten Form und Größe eingebracht werden.
Die Reflexionsschicht kann auch durch andere Schichten oder Schichtenfolgen gebildet sein, etwa durch ein reflektierendes Dünnschichtelement mit Farbkippeffekt. Ein derartiges Dünnschichtelement weist zweckmäßig eine Reflexionsschicht, eine Absorberschicht und eine zwischen der Reflexionsschicht und der Absorberschicht angeordnete dielektrische Abstandsschicht geeigneter Dicke auf.

Das Sicherheitselement selbst stellt bevorzugt einen Sicherheitsfaden, einen Aufreißfaden, ein Sicherheitsband, einen Sicherheitsstreifen, einen Patch oder ein Etikett zum Aufbringen auf ein Sicherheitspapier, Wertdokument oder dergleichen dar. In einer vorteilhaften Ausgestaltung kann das Sicherheitselement einen transparenten oder ausgesparten Bereich eines Datenträgers überspannen. Dabei können auf unterschiedlichen Seiten des Datenträgers unterschiedliche Erscheinungsbilder realisiert werden.

Nach einer vorteilhaften Weiterbildung der Erfindung ist das Element zum Aufbringen auf einer gekrümmten Fläche vorgesehen. In einer weiteren ebenfalls vorteilhaften Variante der Erfindung verändert sich das visuelle Erscheinungsbild des Moire-vergrößerten Bildes beim Krümmen oder Verbiegen des Sicherheitselements. Dabei kann insbesondere vorgesehen sein, dass i) ein vorbestimmtes Moire-vergrößertes Bildmotiv im planaren Zustand des Sicherheitselements nicht sichtbar ist und beim Krümmen oder Verbiegen des Sicherheitselement erscheint, dass ii) ein vorbestimmtes Moire-vergrößertes Bildmotiv im planaren Zustand des Sicherheitselements sichtbar ist und beim Krümmen oder Verbiegen des Sicherheitselement verschwindet, dass iii) ein vorbestimmtes Moire-vergrößertes Bildmotiv im planaren Zustand des Sicherheitselements sichtbar ist und beim Krümmen oder Verbiegen des Sicherheitselement durch ein weiteres vorbestimmtes Bildmotiv ergänzt wird, oder dass iv) ein erstes vorbestimmtes Moire-vergrößertes Bildmotiv im planaren Zustand des Sicherheitselements sichtbar ist und beim Krümmen oder Verbiegen des Sicherheitselement durch ein zweites vorbestimmtes Bildmotiv ersetzt wird.

Die Erfindung enthält auch ein Verfahren zum Herstellen eines Sicherheitselements mit einer mikrooptischen Moiré-Vergrößerungsanordnung, bei dem ein Motivbild, das aus einer planaren periodischen oder zumindest lokal periodischen Anordnung einer Mehrzahl von Mikromotivelementen besteht, und eine planare periodische oder zumindest lokal periodische Anordnung einer Mehrzahl von Mikrofokussierelementen so angeordnet werden, dass die Mikromotivelemente bei Betrachtung durch die Mikrofokussierelemente vergrößert erkennbar sind, und wobei die Anordnung von Mikromotivelementen und/ oder die Anordnung von Mikrofokussierelementen so gewählt werden, dass sie in ihren periodischen oder zumindest lokal periodischen Bereichen keine Symmetrieachse in der Ebene der Anordnung aufweisen.

In einer bevorzugten Weiterbildung des Verfahrens ist dabei vorgesehen, dass
a) ein gewünschtes, bei Betrachtung zu sehendes Bild mit einem oder mehreren Moire-Bildelementen festgelegt wird, wobei die Anordnung von vergrößerten Moire-Bildelementen in Form eines zweidimensionalen Bravais-Gitters, dessen Gitterzellen durch Vektoren *̅t̅*̅₁ und *̅t̅*̅₂ gegeben sind, gewählt werden,
b) eine Anordnung von Mikrofokussierelementen in Form eines zweidimensionalen Bravais-Gitters, dessen Gitterzellen durch Vektoren *̅w̅*̅₁ und *̅w̅*̅₂ gegeben sind, gewählt werden,
c) das Motivbild mit den Mikromotivelementen unter Verwendung der Beziehungen ${U}^{↔} = {W}^{↔} - {\left({T}^{↔}+{W}^{↔}\right)}^{- 1} ⋅ {T}^{↔}$ und $\vec{r} = {W}^{↔} ⋅ {\left({T}^{↔}+{W}^{↔}\right)}^{- 1} ⋅ \overline{R} + {\vec{r}}_{0}$ berechnet wird, wobei $\vec{R} = \left(\begin{matrix}X \\ Y\end{matrix}\right)$ einen Bildpunkt des gewünschten Bilds, $\vec{r} = \left(\begin{matrix}x \\ y\end{matrix}\right)$ einen Bildpunkt des Motivbilds, ${\vec{r}}_{0} = \left(\begin{matrix}{x}_{0} \\ {y}_{0}\end{matrix}\right)$ eine Verschiebung zwischen der Anordnung von Mikrofokussierelementen und der Anordnung von Mikromotivelementen darstellt und die Matrizen *T̅, W̅* und *̅U̅*̅ durch ${T}^{↔} = \left(\begin{matrix}{t}_{11} & {t}_{12} \\ {t}_{21} & {t}_{22}\end{matrix}\right) ,$ ${W}^{↔} = \left(\begin{matrix}{w}_{11} & {w}_{12} \\ {w}_{21} & {w}_{22}\end{matrix}\right)$ bzw. ${U}^{↔} = \left(\begin{matrix}{u}_{11} & {u}_{12} \\ {u}_{21} & {u}_{22}\end{matrix}\right)$ gegeben sind, wobei t₁ᵢ, t₂ᵢ, u₁ᵢ, u₂ᵢ bzw. w₁ᵢ, w₂ᵢ die Komponenten der Gitterzellenvektoren *̅t̅*̅ᵢ, *u̅ᵢ* und *w̅ᵢ*, mit i=1,2 darstellen.

Gemäß einer vorteilhaften Erfindungsvariante sind die Gitterparameter der Bravais-Gitter ortsunabhängig. Es ist jedoch ebenfalls möglich, die Vektoren *̅u̅*̅₁, und *̅u̅*̅₂, bzw. *̅w̅*̅₁ und *̅w̅*̅₂ ortsabhängig zu modulieren, wobei sich die lokalen Periodenparameter |*̅u̅*̅₁|, |*̅u̅*̅₂|, ∠(*̅u̅*̅₁, *̅u̅*̅₂) bzw. |*̅w̅*̅₁ |, |*w̅*₂|, ∠(*̅w̅*̅₁, ,*̅w̅*̅₂) im Verhältnis zur Periodizitätslänge erfindungsgemäß nur langsam ändern. Dadurch ist sichergestellt, dass die Anordnungen stets sinnvoll durch Bravais-Gitter beschrieben werden können.
In einer anderen, ebenfalls bevorzugten Weiterbildung des Verfahrens ist vorgesehen, dass
a) ein gewünschtes, bei Betrachtung zu sehendes Bild mit einem oder mehreren Moiré-Bildelementen festgelegt wird,
b) eine Anordnung von Mikrofokussierelementen in Form eines zweidimensionalen Bravais-Gitters, dessen Gitterzellen durch Vektoren *̅w̅*̅₁ und *̅w̅*̅₂ gegeben sind, gewählt werden,
c) eine gewünschte Bewegung des zu sehenden Bildes beim seitlichen Kippen und beim vor-rückwärtigen Kippen der Moire-Vergrößerungsanordnung festgelegt wird, wobei die gewünschte Bewegung in Form der Matrixelemente einer Transformationsmatrix *̅A̅*̅ vorgegeben wird, und
d) das Motivbild mit den Mikromotivelementen unter Verwendung der Beziehungen ${U}^{↔} = \left({I}^{↔}-{{A}^{↔}}^{- 1}\right) ⋅ {W}^{↔}$ und $\vec{r} = {{A}^{↔}}^{- 1} ⋅ \vec{R} + {\vec{r}}_{0}$ berechnet wird, wobei $\vec{R} = \left(\begin{matrix}X \\ Y\end{matrix}\right)$ einen Bildpunkt des gewünschten Bilds, $\vec{r} = \left(\begin{matrix}x \\ y\end{matrix}\right)$ einen Bildpunkt des Motivbilds, ${\vec{r}}_{0} = \left(\begin{matrix}{x}_{0} \\ {y}_{0}\end{matrix}\right)$ eine Verschiebung zwischen der Anordnung von Mikrofokussierelementen und der Anordnung von Mikromotivelementen darstellt, und die Matrizen *A̅, W̅* und *̅U̅*̅ durch ${A}^{↔} = \left(\begin{matrix}{a}_{11} & {a}_{12} \\ {a}_{21} & {a}_{22}\end{matrix}\right) ,$ ${W}^{↔} = \left(\begin{matrix}{w}_{11} & {w}_{12} \\ {w}_{21} & {w}_{22}\end{matrix}\right)$ bzw. ${U}^{↔} = \left(\begin{matrix}{u}_{11} & {u}_{12} \\ {u}_{21} & {u}_{22}\end{matrix}\right)$ gegeben sind, wobei u₁ᵢ, u₂ᵢ bzw. w₁ᵢ, w₂ᵢ die Komponenten der Gitterzellenvektoren *̅u̅*̅ᵢ und *w̅ᵢ*, mit i=1,2 darstellen.

Für die nunmehr folgenden Ausführungen, insbesondere mit Bezug auf Moire-Magnifier mit Zylinderlinsen und gekrümmte Moire-Magnifier, werden die Rastermatrizen auch ohne Doppelpfeil geschrieben, wenn sich aus dem Zusammenhang klar ergibt, dass es sich um Matrizen handelt.

In einem weiteren Aspekt, der nicht unter den Umfang der vorliegenden Ansprüche fällt, stellt die Erfindung ein Verfahren zum Herstellen eines Sicherheitselements mit einer mikrooptischen Moire-Vergrößerungsanordnung bereit, bei dem ein Motivbild, das aus einer planaren oder auf gekrümmter Fläche aufgebrachten periodischen oder zumindest lokal periodischen Anordnung einer Mehrzahl von Mikromotivelementen besteht, und eine planare oder auf gekrümmter Fläche aufgebrachte periodische oder zumindest lokal periodische Anordnung einer Mehrzahl von Mikrofokussierelementen so angeordnet werden, dass die Mikromotivelemente bei Betrachtung durch die Mikrofokussierelemente vergrößert erkennbar sind, und wobei die Anordnung von Mikromotivelementen und/oder die Anordnung von Mikrofokussierelementen durch lang gestreckte Mikromotivelemente bzw. Mikrofokussierelemente gebildet werden, deren Ausdehnung in Längsrichtung mindestens 5-mal größer, vorzugsweise 6-mal größer, besonders bevorzugt sogar 10-mal oder noch viel größer ist als die Ausdehnung in der zur Längsrichtung senkrechten Querrichtung.

Dabei wird in einer bevorzugten Weiterbildung
a) eine Anordnung von Mikrofokussierelementen in Form eines Zylinderlinsenrasters mit Zylinderlinsenabstand d und Orientierung der Linsenrasters φ gewählt,
b) ein gewünschtes, bei Betrachtung zu sehendes Bild mit einem oder mehreren Moire-Bildelementen festgelegt, wobei die Anordnung von vergrößerten Moire-Bildelementen in Form eines Translationsgitters mit einem Translationsvektor ${\vec{t}}_{1} = \left(\begin{matrix}{t}_{11} \\ {t}_{21}\end{matrix}\right)$ gewählt werden, wodurch eine gewünschte Bewegungsrichtung *̅t̅*̅₁ beim Kippen der Anordnung festgelegt wird, und
c) das Motivbild unter Verwendung der Beziehungen $v = \frac{{t}_{11}}{{u}_{11}} = \frac{{t}_{21}}{{u}_{21}} = \frac{d}{d - {u}_{11} cos φ - {u}_{21} sin φ} = \frac{d + {t}_{11} cos φ + {t}_{21} sin φ}{d}$ und $\left(\begin{matrix}x \\ y\end{matrix}\right) = {A}^{- 1} \left(\begin{matrix}X \\ Y\end{matrix}\right) = \frac{1}{d} \left(\begin{matrix}d - {u}_{11} cos φ & - {u}_{11} sin φ \\ - {u}_{21} cos φ & d - {u}_{21} sin φ\end{matrix}\right) ⋅ \left(\begin{matrix}X \\ Y\end{matrix}\right)$ berechnet, wobei $\vec{R} = \left(\begin{matrix}X \\ Y\end{matrix}\right)$ einen Bildpunkt des gewünschten Bilds und $\vec{r} = \left(\begin{matrix}x \\ y\end{matrix}\right)$ einen Bildpunkt des Motivbilds darstellen.

Wie oben erwähnt, können ausgedehnte, lang gestreckte Motivelemente auch mit normalen Mikrofokussierelementen kombiniert werden. Dazu kann insbesondere
a) ein gewünschtes, bei Betrachtung zu sehendes Bildmotiv festgelegt werden, wobei das zu sehende Bildmotiv durch Bildpunkte $\vec{R} = \left(\begin{matrix}X \\ Y\end{matrix}\right)$ beschrieben wird,
b) ein Translationsrapport ${\vec{t}}_{1} = \left(\begin{matrix}{t}_{11} \\ {t}_{21}\end{matrix}\right)$ festgelegt werden, wobei eine gewünschte Bewegungsrichtung ψ beim Kippen der Anordnung gegeben ist durch tan ψ = t₂₁/t₁₁,
c) eine Anordnung von Mikrofokussierelementen in Form eines zweidimensionalen Bravais-Gitters, dessen Gitterzellen durch Vektoren *̅w̅*̅₁ und *̅w̅*̅₂ gegeben sind, gewählt werden,
d) die Motivtranslation ${\vec{u}}_{1} = \left(\begin{matrix}{u}_{11} \\ {u}_{21}\end{matrix}\right)$ der Mikromotivelemente unter Verwendung der Beziehungen $v = \frac{{t}_{11}}{{u}_{11}} = \frac{{t}_{21}}{{u}_{21}} = \frac{{w}_{11} {w}_{22} - {w}_{12} {w}_{21}}{{w}_{11} {w}_{22} - {w}_{12} {w}_{21} + {t}_{11} {w}_{22} - {w}_{12} {t}_{21}}$ berechnet werden,
e) die Verzerrungsmatrix A⁻¹ unter Verwendung der Beziehung ${A}^{- 1} = \frac{1}{DetW} \left(\begin{matrix}DetW - {u}_{11} {w}_{22} & {u}_{11} {w}_{12} \\ - {u}_{21} {w}_{22} & DetW + {u}_{21} {w}_{12}\end{matrix}\right)$ mit Det W = w₁₁w₂₂ - w₁₂w₂₁ berechnet werden,
f) mit der Verzerrungsmatrix aus den Bildpunkten des gewünschten zu sehenden Bildmotivs die Bildpunkte des anzulegenden Mikromotivelements berechnet werden durch $\left(\begin{matrix}x \\ y\end{matrix}\right) = {A}^{- 1} \left(\begin{matrix}X \\ Y\end{matrix}\right) ,$ und
g) das so berechnete, anzulegende Mikromotivelement mit dem Translationsvektor ${\vec{u}}_{1} = \left(\begin{matrix}{u}_{11} \\ {u}_{21}\end{matrix}\right)$ wiederholt verschoben angeordnet werden.

Vorzugsweise werden dabei in Schritt b) das gewünschte zu sehende Bildmotiv (X,Y) und die sich aus dem gewünschten Bewegungsverhaltens ergebende Moiré-Verschiebung t₁₁, t₂₁, so aufeinander abgestimmt, dass Überschneidungen vermieden werden. Dies kann beispielsweise mithilfe eines gängigen Zeichenprogramms erfolgen.

Nach einer weiteren vorteilhaften Weiterbildung des Verfahrens ist vorgesehen, dass
a) eine Anordnung von Mikrofokussierelementen in Form eines zweidimensionalen Bravais-Gitters, dessen Gitterzellen durch Vektoren *̅w̅*̅₁ und *̅w̅*̅₂ gegeben sind, gewählt werden,
b) eine vorbestimmte Verbiegung für die Betrachtung bei gekrümmter Moire-Vergrößerungsanordnung festgelegt wird, wobei die vorbestimmte Verbiegung in Form der Matrixelemente der Verbiegungsmatrizen für Linsenraster und Motivraster *V*_{L}, *V*_{M} vorgegeben wird,
c) ein gewünschtes Bewegungs- und Vergrößerungsverhalten des zu sehenden Bildes entweder vor der Verbiegung durch eine Transformationsmatrix A oder nach der Verbiegung durch eine Transformationsmatrix A' vorgegeben wird, und
d) das Motivbild mit den Mikromotivelementen unter Verwendung der Beziehungen ${U}^{↔} = {W}^{↔} - {{A}^{↔}}^{- 1} ⋅ {W}^{↔}$ und $Aʹ = {\left(I-{V}_{M}\left(I-{A}^{- 1}\right){V}_{L}^{- 1}\right)}^{- 1}$ bzw. $A = {\left(I-{{V}_{M}}^{- 1}\left(I-{Aʹ}^{- 1}\right){V}_{L}\right)}^{- 1}$ berechnet wird.

Ein Sicherheitspapier für die Herstellung von Sicherheits- oder Wertdokumenten, wie Banknoten, Schecks, Ausweiskarten, Urkunden oder dergleichen, ist vorzugsweise mit einem Sicherheitselement der oben beschriebenen Art ausgestattet. Das Sicherheitspapier kann insbesondere ein Trägersubstrat aus Papier oder Kunststoff umfassen.

Die Erfindung enthält auch einen Datenträger, insbesondere einen Markenartikel, ein Wertdokument oder dergleichen, mit einem Sicherheitselement der oben beschriebenen Art. Das Sicherheitselement kann dabei insbesondere in einem Fensterbereich, also einem transparenten oder ausgesparten Bereich des Datenträgers angeordnet sein.

Weitere Ausführungsbeispiele sowie Vorteile der Erfindung werden nachfolgend anhand der Figuren erläutert. Zur besseren Anschaulichkeit wird in den Figuren auf eine maßstabs- und proportionsgetreue Darstellung verzichtet.

Es zeigen:
- Fig. 1: eine schematische Darstellung einer Banknote mit einem eingebetteten Sicherheitsfaden und einem aufgeklebten Transferelement,
- Fig. 2: schematisch den Schichtaufbau eines erfindungsgemäßen Sicherheitselements im Querschnitt,
- Fig. 3: in (a) eine Aufsicht auf einen Fensterbereich eines erfindungsgemäßen Sicherheitsfadens, und in (b) und (c) Ansichten des Fensterbereichs von (a) bei einer Verkippung des Sicherheitsfaden in eine der beiden Pfeilrichtungen,
- Fig. 4: in (a) bis (e) die fünf möglichen zweidimensionalen BravaisGitter,
- Fig. 5: schematisch die Verhältnisse bei der Betrachtung einer MoiréVergrößerungsanordnung zur Definition der auftretenden Größen,
- Fig. 6: in (a) ein Motivbild, dessen Mikromotivelemente durch verzerrte, auf den Gitterplätzen eines niedrigsymmetrischen Bravais-Gitters liegende Buchstaben "F" gebildet sind, und in (b) das vergrößerte Moire-Bild, das sich bei Betrachtung einer erfindungsgemäßen Moire-Vergrößerungsanordnung mit dem Motivbild von (a) ergibt,
- Fig. 7: eine Darstellung wie in Fig. 6 für ein weiteres Ausführungsbeispiel der Erfindung,
- Fig. 8: in (a) ein Motivbild, dessen Mikromotivelemente durch verzerrte, auf den Gitterplätzen niedrigsymmetrischer Bravais-Gitter liegende Buchstaben "F" bzw. "P" gebildet sind, und in (b) das vergrößerte Moiré-Bild, das sich bei Betrachtung einer erfindungsgemäßen Moire-Vergrößerungsanordnung mit dem Motivbild von (a) ergibt; die Bewegungsrichtungen der beiden Buchstabenarrays beim Vor-Rück-Kippen (senkrechte Pfeile in (a)) sind durch die schräg verlaufenden Pfeile in (b) angegeben,
- Fig. 9: in (a) die Umrissenlinien eines Linsenrasters, in (b) das Linsenraster von (a) mit eingepassten Mikromotivelementen und in (c) das als Moire erscheinende vergrößerte Bild,
- Fig.10: eine bevorzugte erfindungsgemäße Ausgestaltung in einer Darstellung wie in Fig. 9, bei der die Einzellinsen zur Vermeidung von Leerraum im vergrößerten Bild in ihrer Form an die Form der Mikromotivelemente angepasst wurden,
- Fig. 11: in (a) bis (c) jeweils in der linken Bildhälfte eine Darstellung wie in Fig. 9(b) und in der rechten Bildhälfte eine Darstellung wie in Fig. 9 (c), wobei bei den gezeigten Ausgestaltungen zur Vermeidung von Leerraum im vergrößerten Bild die Motive passend zum Linsenraster verzerrt wurden und eine unverzerrt erscheinendes Bild durch eine geeignete Wahl der Abbildungsmatrix sichergestellt wurde,
- Fig. 12: einen Moire-Magnifier, dessen Erscheinungsbild sich beim Krümmen oder Biegen verändert, wobei (a) das Erscheinungsbild im planaren Zustand, ohne dass ein Motiv zu erkennen ist, zeigt, (b) das Erscheinungsbild im konvex gebogenen Zustand mit Motiv zeigt und (c) das Erscheinungsbild im konkav gebogenen Zustand mit spiegelverkehrtem Motiv zeigt,
- Fig. 13: einen Moire-Magnifier, bei dem eine in (a) gezeigte planare Motivkomponente durch einen Motivteil ergänzt ist, der erst bei der in (b) gezeigten Verbiegung des Moire-Magnifiers sichtbar wird,
- Fig. 14: einen Moire-Magnifier, bei dem ein im planaren Zustand (a) sichtbares erstes Motiv bei Verbiegung (b) des MoiréMagnifiers durch ein zweites Motiv ersetzt wird,
- Fig. 15: in (a) schematisch einen Moiré-Magnifier mit sphärischen Linsen in zweidimensionaler Gitternetz-Anordnung, und in (b) einen Moiré-Magnifier mit Zylinderlinsen in Strichgitter-Anordnung,
- Fig.16: in (a), (c) und (e) verschieden orientierte lange Motivelemente und in (b), (d) und (f) jeweils das aus einer Mehrzahl solcher langer Motivelemente zusammengesetzte Moire-vergrößerte Bild,
- Fig. 17: eine Darstellung wie Fig.16 für entlang einer gekrümmten Linie angeordnete lange Motivelemente, wie sie im Moire erscheinen sollen,
- Fig.18: in (a) ein zur Erzeugung des Bildelements der Fig. 17(a) berechnete Mikromotivelement und in (b) das periodische Mikromotivraster,
- Fig. 19: in (a) bis (c) einen Vergleich der Verzerrungsverhältnisse bei einem Zylinderlinsen-Moiré-Magnifier und einem Moiré-Magnifier mit normalen Linsen und in (d) und (e) vorteilhafte Strichraster- bzw. Punktrasterausführungen der Mikromotivelemente,
- Fig.20: einen Moiré-Magnifier mit einem örtlich variierenden Zylinderlinsenraster,
- Fig. 21: eine Mesa-Struktur in einem Zwischenschritt bei der Herstellung eines örtlich variierendem Zylinderlinsenrasters,
- Fig. 22: ein anamorphotisches Linsengitter aus zwei sich kreuzenden, übereinander liegenden Zylinderlinsen-Gittern, und
- Fig. 23: in (a) schematisch eine Aufsicht auf eine weitere MoiréMagnifier-Anordnung nach einem Ausführungsbeispiel der Erfindung mit sphärischen Linsen und ausgedehnten, lang gestreckten Mikromotivelementen und in (b) das Erscheinungsbild bei Übereinanderlegen von Motivraster und Linsenraster.

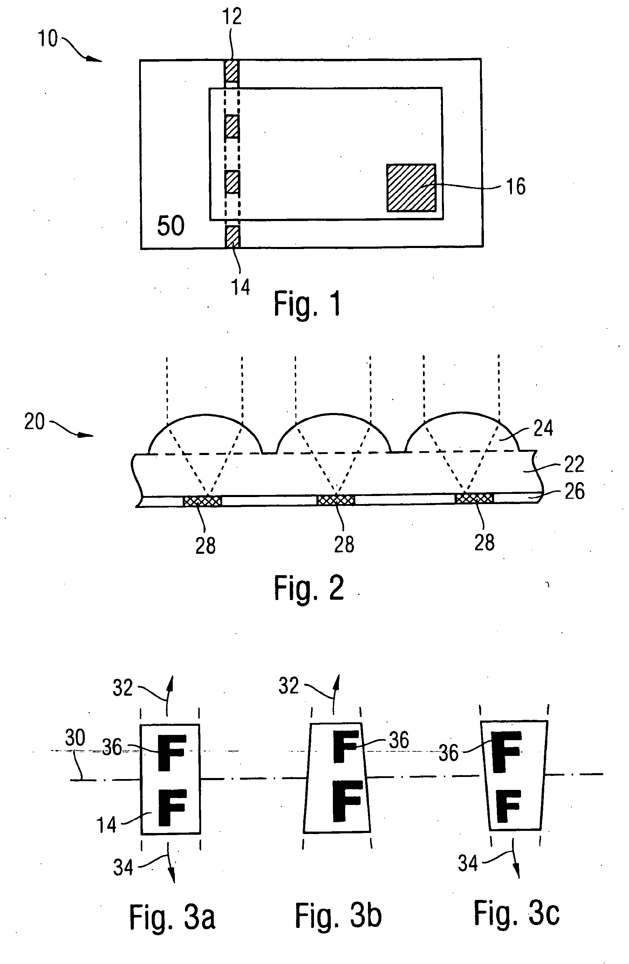

Die Erfindung wird nun am Beispiel einer Banknote erläutert. Fig.1 zeigt dazu eine schematische Darstellung einer Banknote 10, die mit zwei Sicherheitselementen 12 und 16 nach Ausführungsbeispielen der Erfindung versehen ist. Das erste Sicherheitselement stellt dabei einen Sicherheitsfaden 12 dar, der an bestimmten Fensterbereichen 14 an der Oberfläche der Banknote 10 hervortritt, während er in den dazwischen liegenden Bereichen im Inneren der Banknote 10 eingebettet ist. Das zweite Sicherheitselement ist durch ein aufgeklebtes Transferelement 16 beliebiger Form gebildet.

Die beiden Sicherheitselemente 12,16 verwirklichen eine besonders fälschungssichere Variante einer Moire-Vergrößerungsanordnung, deren Funktionsprinzip zunächst mit Bezug auf die Figuren 2 und 3 erläutert wird.

Fig. 2 zeigt schematisch den Schichtaufbau eines erfindungsgemäßen Sicherheitselements 20 im Querschnitt, wobei nur die für die Erläuterung des Funktionsprinzips erforderlichen Teile des Schichtaufbaus dargestellt sind. Das Sicherheitselement 20 kann beispielsweise einen Sicherheitsfaden 12 oder ein Transferelement 16, wie in Fig. 1 gezeigt, darstellen.

Das Sicherheitselement 20 enthält eine optische Abstandsschicht 22, deren Oberseite mit einer regelmäßigen Anordnung von Mikrolinsen 24 versehen ist. Wie weiter unten im Detail erläutert, bildet die Anordnung der Mikrolinsen 24 ein zweidimensionales Bravais-Gitter mit einer vorgewählten Symmetrie. Für die nachfolgende Erläuterung wird von einer annähernd hexagonalen Symmetrie ausgegangen, auch wenn das Bravais-Gitter nach der Erfindung eine niedrigere Symmetrie und damit eine allgemeinere Form aufweisen kann. Die Mikrolinsen 24 selbst weisen einen Durchmesser und Abstand von weniger als 50 µm, typischerweise von etwa 10 µm bis etwa 20 µm auf und liegen damit deutlich unterhalb der Auflösungsgrenze des bloßen Auges.

Auf der Unterseite der Abstandsschicht 22 weist das Sicherheitselement 20 weiter eine Motivschicht 26 auf, die eine ebenfalls regelmäßige Anordnung von identischen Mikromotivelementen 28 enthält. Auch die Anordnung der Mikromotivelemente 28 bildet ein zweidimensionales Bravais-Gitter mit einer vorgewählten Symmetrie. Wie in Fig. 2 angedeutet, unterscheidet sich das Bravais-Gitter der Mikromotivelemente 28 in seiner Symmetrie und/ oder in der Größe der Gitterparameter geringfügig von dem Bravais-Gitter der Mikrolinsen 24, um den gewünschten Moiré-Vergrößerungseffekt zu erzeugen. Die Gitterperiode der Anordnung der Mikromotivelemente 28 liegt in jedem Fall in derselben Größenordnung wie die der Mikrolinsen 24, so dass die Mikromotivelemente 28 selbst mit bloßem Auge ebenfalls nicht zu erkennen sind.

Die optische Dicke der Abstandsschicht 22 und die Brennweite der Mikrolinsen 24 sind so aufeinander abgestimmt, dass die Mikromotivelemente 28 sich in etwa im Abstand der Linsenbrennweite befinden. Aufgrund der sich geringfügig unterscheidenden Gitterparameter sieht der Betrachter bei Betrachtung des Sicherheitselements 20 von oben jeweils einen etwas anderen Teilbereich des Mikromotivelements 28, so dass die Vielzahl der Mikrolinsen insgesamt ein vergrößertes Bild der Mikromotivelemente 28 erzeugt.

Die Moire-Vergrößerung hängt dabei von dem relativen Unterschied der Gitterparameter der verwendeten Bravais-Gitter ab. Unterscheiden sich beispielsweise die Gitterperioden zweier hexagonaler Gitter um 1%, so beträgt die Moire-Vergrößerung 100-fach. Mit abnehmendem relativem Unterschied strebt die Moiré-Vergrößerung gegen unendlich. Wie weiter unten genauer erläutert, ist die Moiré-Vergrößerung bei allgemeineren Gittersymmetrien kein Skalar mehr, sondern wird durch eine 2 x 2- Vergrößerungsmatrix beschrieben. Dies trägt der Tatsache Rechnung trägt, dass der Vergrößerungsfaktor im allgemeinen Fall in verschiedenen Richtungen der Ebene verschieden groß ist, so dass auch Drehungen und Verzerrungen berücksichtigt werden müssen.

Die Brennweite der Mikrolinsen 24 hat keinen Einfluss auf die Moiré-Vergrößerung. Sie beeinflusst jedoch zusammen mit der Differenz der Gitterparameter die scheinbare Schwebehöhe oder Schwebetiefe, in der das vergrößerte Motivbild für den Betrachter vor bzw. hinter der Bildebene zu schweben scheint.

Die Gitterparameter der Bravais-Gitter der Mikromotivelemente 28 und der Mikrolinsen 24 können beispielsweise so aufeinander abgestimmt werden, dass sich beim Verkippen des Sicherheitselements 20 der Intuition zuwiderlaufende Bewegungseffekte ergeben, die mit Bezug auf Fig. 3 erläutert werden. Fig. 3 zeigt in (a) eine Aufsicht auf einen Fensterbereich 14 eines erfindungsgemäßen Sicherheitsfadens 12. Bei senkrechter Betrachtung zeigt der Fensterbereich zwei übereinander stehende Buchstaben "F" in der Mitte des Sicherheitsfadens 12. Dabei stellt, wie oben erläutert, das für den Betrachter sichtbare, einen oder mehrere Millimeter große Bild 36 der Buchstaben "F" eine Moire-vergrößerte Abbildung von Teilbereichen einer Vielzahl von Mikrobuchstaben "F" dar. Bei einem Moiré-Vergrößerungsfaktor von 100 führen beispielsweise Mikrobuchstaben mit einer Größe von lediglich 10 µm zu Bildbuchstaben 36 einer Größe von 1 mm.

Wird der Fensterbereich 14 um eine Achse 30 in Richtung 32 oder 34 verkippt, so bewegt sich das Bild 36 des Buchstabens "F" im Ausführungsbeispiel entgegen der Intuition nicht parallel, sondern senkrecht zur Richtung 32, 34, wie in Fig. 3(b) und (c) dargestellt. Durch diesen einprägsamen, im Moire-Magnifier realisierbaren optischen Effekt wird das Augenmerk des Betrachters stark auf das Sicherheitselement hingezogen.

Gemäß der Erfindung sind die Bravais-Gitter der Anordnung der Mikromotivelemente 28 und der Anordnung der Mikrolinsen 24 nun so gewählt, dass zumindest eines der beiden Bravais-Gitter keine Symmetrieachse in der Ebene der Anordnung aufweist. Im weiter unten beschriebenen, allgemeineren Fall, in dem sich die Gitterparameter der Bravais-Gitter über die Ausdehnung des Sicherheitselements langsam verändern können, bedeutet diese Bedingung, dass zumindest eines der jeweils lokal vorliegenden konstanten Bravais-Gitter keine Symmetrieachse in der Ebene der Anordnung aufweist.

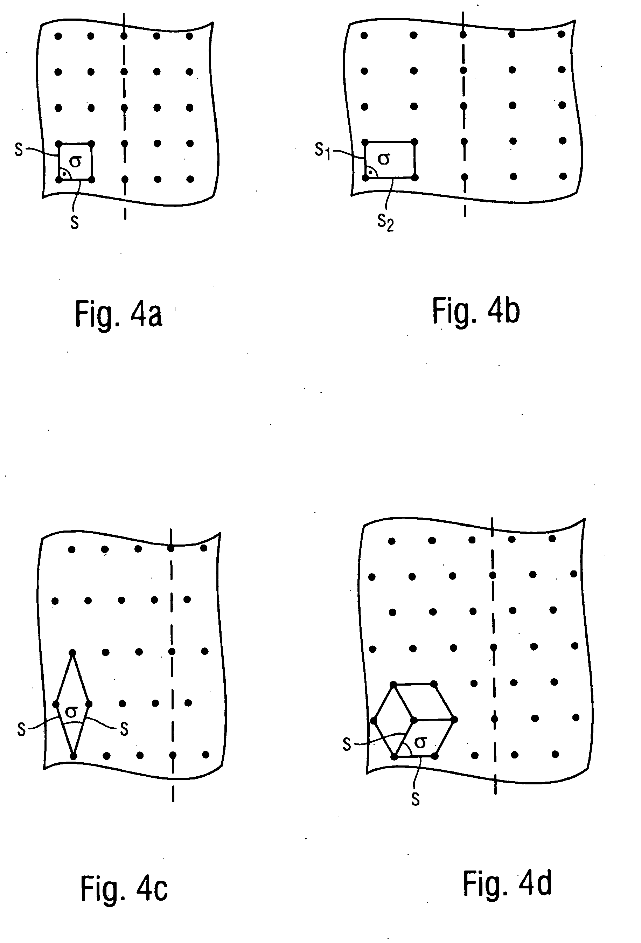

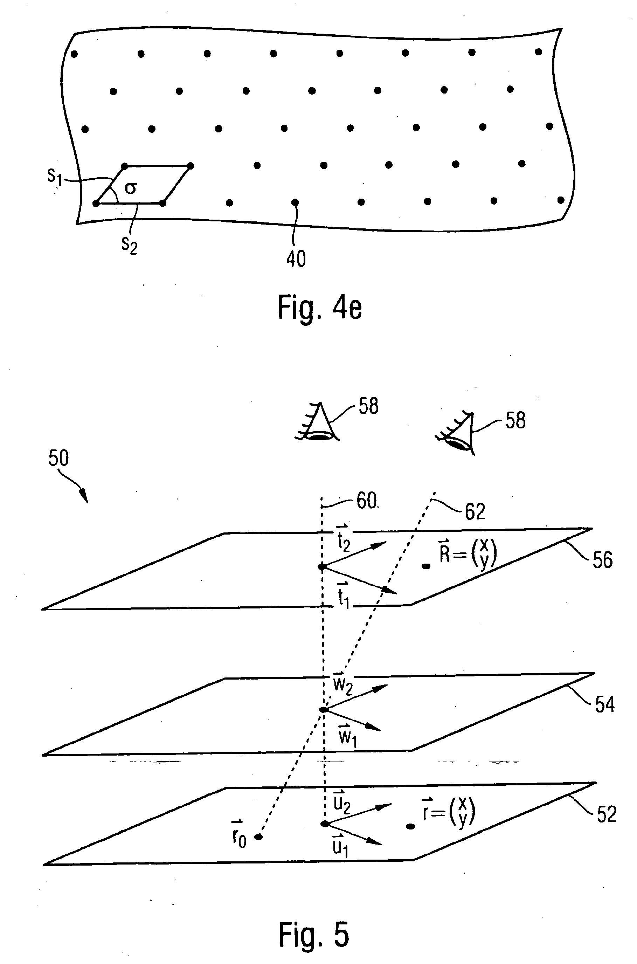

Zur näheren Erläuterung zeigt Fig. 4 in (a) bis (e) die fünf möglichen zweidimensionalen Bravais-Gitter. Alle periodischen ebenen Anordnungen lassen sich einem dieser Bravais-Gitter zuordnen, wobei zur eindeutigen Zuordnung das Bravais-Gitter mit der höchsten Symmetrie gewählt wird. Diese fünf Bravais-Gitter sind das Quadrat-Gitter mit einer Gitterzelle mit gleich langen Seiten s und einem Zwischenwinkel σ von 90° (Fig. 4(a)), das Rechteck-Gitter mit einer Gitterzelle mit ungleich langen Seiten s₁ und s₂ und einem Zwischenwinkel σ von 90° (Fig. 4(b)), das Rauten-Gitter mit einer Gitterzelle mit gleich langen Seiten s und beliebigem Zwischenwinkel σ (Fig. 4(c), teilweise auch als flächenzentriertes Rechteckgitter bezeichnet), das Sechseck-Gitter mit einer Gitterzelle mit gleich langen Seiten s und einem Zwischenwinkel σ von 60° (Fig. 4(d)), sowie das Parallelogramm-Gitter mit einer schiefwinkeligen Gitterzelle mit ungleich langen Seiten s₁ und s₂ und beliebigem Zwischenwinkel σ (Fig. 4(e)).

Die Bravais-Gitter aus Fig. 4(a) bis (d) weisen jeweils mindestens eine Symmetrieachse in der Ebene der Anordnung auf. Eine derartige Symmetrieachse ist in den Figuren jeweils eingezeichnet. Im Gegensatz dazu weist das Parallelogramm-Gitter der Fig. 4(e) keine Symmetrieachse in der Ebene der Anordnung auf. Es besitzt als einzige Symmetrie eine zweizählige Symmetrieachse senkrecht auf die Anordnungsebene.

Setzt man daher beispielsweise auf jeden Gitterpunkt 40 eines Parallelogramm-Gitters nach Fig. 4(e) ein Mikromotivelement 28, so weist die Anordnung der Mikromotivelemente 28 keine Symmetrieachse in der Ebene der Anordnung auf. Gleiches gilt für den Fall, dass auf jeden Gitterpunkt 40 eines Parallelogramm-Gitters nach Fig. 4(e) eine Mikrolinse 24 gesetzt wird, oder dass für beide Anordnungen Parallelogramm-Gitter nach Fig. 4(e) eingesetzt werden.

Die Verwendung von Bravais-Gittern mit niedriger Symmetrie für zumindest eine der Anordnungen von Mikromotivelementen bzw. von Mikrolinsen bietet gegenüber der Verwendung der höhersymmetrischen Bravais-Gitter folgende Vorteile:

Eine Moire-Vergrößerungsanordnung mit einer Gitteranordnung niederer Symmetrie lässt sich nur schwer nachahmen, da hierbei ein bestimmter Winkel in der Gitterzelle genau nachgestellt werden muss, sonst entsteht bei der Betrachtung nicht das richtige Bild. Genau bestimmte Winkel in den Gitterzellen können dabei zur verborgenen Kennzeichnung von erfindungsgemäß abgesicherten Produkten angewandt werden. Beispielsweise können unterschiedliche Produkte unterschiedliche Winkel erhalten, die so bestimmt werden können, dass für den Betrachter beim vergrößerten Bild kaum ein Unterschied festzustellen ist. Darüber hinaus muss betont werden, dass sich alle üblicherweise mit Moire-Vergrößerungsanordnungen höherer Symmetrie realisierbaren attraktiven Effekte auch mit den erfindungsgemäßen niedrigsymmetrischen Moire-Vergrößerungsanordnungen realisieren lassen.

Der Zusammenhang zwischen dem Motivbild, der Anordnung der Mikrolinsen und dem vergrößerten Bild ist bei den niedrigsymmetrischen Moire-Vergrößerungsanordnungen allerdings komplexer als bei den bekannten Anordnungen hoher Symmetrie. Eine Möglichkeit, ein geeignetes Motivbild aus einem vorgegebenen gewünschten vergrößerten Bild zu berechnet wird daher nachfolgend im Detail erläutert:

Fig. 5 zeigt zur Definition der auftretenden Größen zunächst schematisch die Verhältnisse bei der Betrachtung einer Moire-Vergrößerungsanordnung 50. Die nicht maßstäblich dargestellte Moire-Vergrößerungsanordnung 50 enthält eine Motivebene 52, in der das Motivbild angeordnet ist, eine Linsenebene 54, in der sich die Mikrolinsenanordnung befindet, und erzeugt eine Moire-Bildebene 56, in der das vom Betrachter 58 wahrgenommene vergrößerte Bild beschrieben wird.

Die Anordnung von Mikromotivelementen in der Motivebene 52 wird durch ein zweidimensionales Bravais-Gitter beschrieben, dessen Gitterzelle durch die Vektoren *̅u̅*̅₁ und *̅u̅*̅₂ (mit den Komponenten *̅u̅*̅₁₁, *̅u̅*̅₂₁, bzw. *̅u̅*̅₁₂, *̅u̅*̅₂₂) angegeben wird. Analog wird die Anordnung von Mikrolinsen in der Linsenebene 54 durch ein zweidimensionales Bravais-Gitter beschrieben, dessen Gitterzelle durch die Vektoren *̅w̅*̅₁ und *̅w̅*̅₂ (mit den Komponenten *w*₁₁, *w*₂₁ bzw. *w*₁₂, *w*₂₂) angegeben wird. Mit den Vektoren *̅t̅*̅₁ und *̅t̅*̅₂ (mit den Komponenten *t*₁₁, *t*₂₁, bzw. *t*₁₂*, t*₂₂) wird die Gitterzelle in der Moire-Bildebene 56 beschrieben.

Die Koordinaten der Punkte der Motivebene 52 werden mit Kleinbuchstaben, die der Punkte der Moire-Bildebene 56 mit Großbuchstaben benannt, so dass $\vec{r} = \left(\begin{matrix}x \\ y\end{matrix}\right)$ einen allgemeinen Punkt der Motivebene 52, $\vec{R} = \left(\begin{matrix}X \\ Y\end{matrix}\right)$ einen allgemeinen Punkt der Moire-Bildebene 56 angibt. Diese Größen genügen bereits, um eine senkrechte Betrachtung (Betrachtungsrichtung 60) der Moire-Vergrößerungsanordnung zu beschreiben. Um auch nicht-senkrechte Betrachtungsrichtungen, wie etwa die Richtung 62, berücksichtigen zu können, wird zusätzlich eine Verschiebung zwischen Linsenebene 54 und Motivebene 52 zugelassen, die durch einen Verschiebungsvektor $\vec{{r}_{0}} = \left(\begin{matrix}{x}_{0} \\ {y}_{0}\end{matrix}\right)$ in der Motivebene 52 angegeben wird.

Verwendet man der einfacheren Darstellung halber die Matrizen $\vec{U} = \left(\begin{matrix}{u}_{11} & {u}_{12} \\ {u}_{21} & {u}_{22}\end{matrix}\right) ,$ $\vec{W} = \left(\begin{matrix}{w}_{11} & {w}_{12} \\ {w}_{21} & {w}_{22}\end{matrix}\right) ,$ $\vec{T} = \left(\begin{matrix}{t}_{11} & {t}_{12} \\ {t}_{21} & {t}_{22}\end{matrix}\right) ,$ so ergibt sich das Moiré-Bild-Gitter aus den Gittervektoren der Mikromotivelement-Anordnung und der Mikrolinsen-Anordnung zu ${T}^{↔} = {W}^{↔} ⋅ {\left({W}^{↔}-{U}^{↔}\right)}^{- 1} ⋅ {U}^{↔} .$

Die Bildpunkte der Moire-Bildebene 56 können mithilfe der Beziehung $\vec{R} = {W}^{↔} ⋅ {\left({W}^{↔}-{U}^{↔}\right)}^{- 1} ⋅ \left(\vec{r}-{\vec{r}}_{0}\right)$ aus den Bildpunkten der Motivebene 52 bestimmt werden.

Bei der Herstellung von Moire-Vergrößerungsanordnungen geht man in der Regel den umgekehrten Weg. Das vergrößerte Moire-Bild und die Linsenanordnung werden vorgegeben und daraus ein - in der Regel verzerrtes - Motivbild berechnet. Anstatt die Linsenanordnung explizit vorzugeben, können auch nur gewisse Einschränkung oder Bedingungen an die Linsenanordnung gestellt werden, und das Motivbild zusammen mit der erforderlichen Linsenanordnung berechnet werden. Die Gittervektoren der Mikromotivelement-Anordnung ergeben sich dabei durch geeignete Umformung der Beziehung (1) zu $\vec{U} = {W}^{↔} ⋅ {\left({T}^{↔}-{W}^{↔}\right)}^{- 1} ⋅ {T}^{↔} .$

Die Bildpunkte der Motivebene können mithilfe der Beziehung $\vec{r} = {W}^{↔} ⋅ {\left({T}^{↔}+{W}^{↔}\right)}^{- 1} ⋅ \vec{R} + {\vec{r}}_{0}$ bestimmt werden.

Um zu einer allgemeinen Beschreibung zu gelangen, definiert man die Transformationsmatrix *A̅ = W̅ ·* (*W̅ - U̅*)⁻¹, die die Koordinaten der Punkte der Motivebene 52 und der Punkte der Moire-Bildebene 56 ineinander überführt, $\vec{R} = {A}^{↔} ⋅ \left(\vec{r}-{\vec{r}}_{0}\right)$ bzw. $\vec{r} = {{A}^{↔}}^{- 1} ⋅ \vec{R} + {\vec{r}}_{0} .$

Aus jeweils zwei der vier Matrizen *U̅,W̅,T̅,A̅* können die beiden anderen berechnet werden. Insbesondere gelten die Beziehungen ${T}^{↔} = {A}^{↔} ⋅ {U}^{↔} = {W}^{↔} ⋅ {\left({W}^{↔}-{U}^{↔}\right)}^{- 1} ⋅ {U}^{↔} = \left({A}^{↔}-{I}^{↔}\right) ⋅ {W}^{↔}$ ${U}^{↔} = {W}^{↔} ⋅ {\left({T}^{↔}+{W}^{↔}\right)}^{- 1} ⋅ {T}^{↔} = {{A}^{↔}}^{- 1} ⋅ {T}^{↔} = \left({I}^{↔}-{{A}^{↔}}^{- 1}\right) ⋅ {W}^{↔}$ ${W}^{↔} = {U}^{↔} ⋅ {\left({T}^{↔}-{U}^{↔}\right)}^{- 1} ⋅ {T}^{↔} = {\left({A}^{↔}-{I}^{↔}\right)}^{- 1} ⋅ {T}^{↔} = {\left({A}^{↔}-{I}^{↔}\right)}^{- 1} ⋅ {A}^{↔} ⋅ {U}^{↔}$ ${A}^{↔} = {W}^{↔} ⋅ {\left({W}^{↔}-{U}^{↔}\right)}^{- 1} = {\left({T}^{↔}+{W}^{↔}\right)}^{- 1} ⋅ {{W}^{↔}}^{- 1} = {T}^{↔} ⋅ {{U}^{↔}}^{- 1}$

Wie man sofort sieht, enthalten die Beziehungen (5a,b) und (6a-d) die oben angegebene Beziehungen (1) bis (4) als Spezialfall. Bei Vorgabe von zwei der drei Matrizen *U̅,W̅,T̅* können mithilfe der Beziehungen (6a-d) die dritte Matrix und die Transformationsmatrix *̅A̅*̅, und daraus mithilfe der Beziehungen (5a) bzw. (5b) die gewünschten Punktkoordinaten berechnet werden.

Es versteht sich, dass auch direkt die Transformationsmatrix *̅A̅*̅ und eine der drei Matrizen *U̅,W̅,T̅,* beispielsweise die Matrix der Mikrolinsen *̅W̅*̅ vorgegeben werden kann und die beiden anderen Matrizen und unter Verwendung der Beziehungen (6a-d) bestimmt werden können.

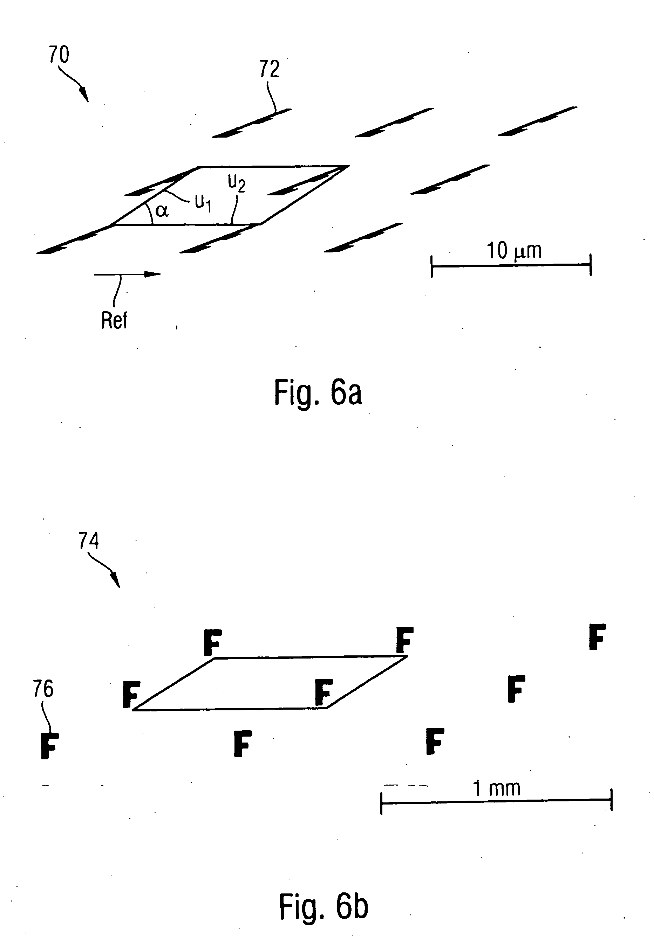

Die beschriebene Vorgehensweise wird nun anhand einiger konkreter Beispiele mit Bezug auf die Figuren 6 bis 8 näher erläutert.

Zunächst zeigt Fig. 6 in (a) ein Motivbild 70, dessen Mikromotivelemente 72 beispielhaft durch geeignet verzerrte, auf den Gitterplätzen eines niedrigsymmetrischen Bravais-Gitters liegende Buchstaben "F" gebildet sind. Konkret ist die Einheitszelle des Parallelogramm-Gitters der Fig. 6(a) durch Vektoren *̅u̅*̅₁ und *̅u̅*̅₂ mit u₁ = |*̅u̅*̅₁| = 9,1 µm, u₂ = |*̅u̅*̅₂| = 6,6 µm und α = ∠(*̅u̅*̅₁, *̅u̅*̅₂) = 32° gegeben. Die Gitterzellen selbst weisen einen Winkel von δ₁= 0° zu einer Bezugsrichtung Ref auf.

Dazugenommen ist eine selbst nicht gezeigte Anordnung von Mikrolinsen, die auf den Gitterplätzen eines zweiten Bravais-Gitters liegen. Im Ausführungsbeispiel ist das zweite Bravais-Gitter ebenfalls ein niedrigsymmetrisches Parallelogramm-Gitter, mit einer Einheitszelle, die durch die Vektoren w, und *̅w̅*̅₂ mit *w*₁ =|*̅w̅*̅₁| = 9,2 µm, w₂ = |*̅w̅*̅₂| = 6,5 µm und β = ∠(*̅w̅*̅₁, *̅w̅*̅₂) = 32° gegeben ist. Die Gitterzellen des zweiten Bravais-Gitters selbst weisen einen Winkel von δ₂ = 0° zur Bezugsrichtung Ref auf.

Wird der Verschiebungsvektor zu Null gesetzt (also x₀ = y₀ = 0), so ergibt sich für einen Betrachter, der aus einem normalen Betrachtungsabstand (der in jedem Fall groß gegen die Linsenbrennweite von ≈ 10 µm ist) auf die Moire-Vergrößerungsanordnung blickt, das in Fig. 6(b) dargestellte vergrößerte Moire-Bild 74. Wie deutlich zu erkennen, ist die Verzerrung der Buchstaben "F" im Motivbild 72 gerade so gewählt, dass sie durch den ebenfalls verzerrenden Moiré-Effekt ausgeglichen wird und der Betrachter unverzerrte und vergrößerte Buchstaben "F" 76 sieht. Man beachte, dass der Maßstab in Fig. 6(b) etwa 100-mal größer ist als in Fig. 6(a).

Die Abbildung von Fig. 6(a) nach Fig. 6(b) kann mithilfe der oben angegebenen Beziehungen (1) und (2) berechnet werden. Umgekehrt kann unter Verwendung der Beziehungen (3) und (4) auch von dem gewünschten Moire-Bild 74 der Fig. 6(b) ausgegangen werden, und das Motivbild 72 mit den erforderlichen Verzerrungen berechnet werden.

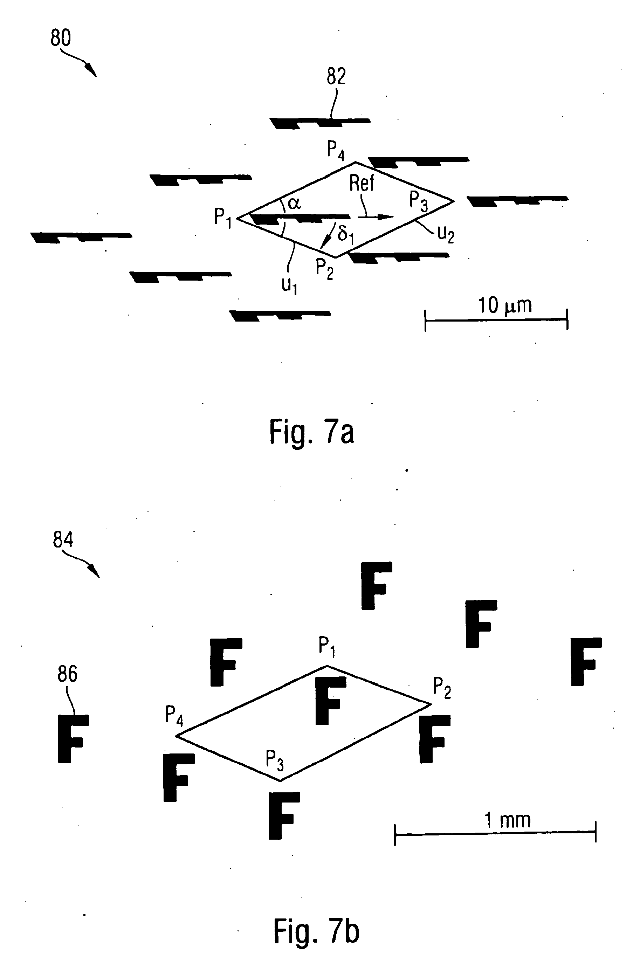

Ein weiteres Beispiel für ein Motivbild 80 und ein daraus erzeugtes Moire-Bild 84 ist in Fig. 7 gezeigt. Bei dem Ausführungsbeispiel der Fig. 7 liegen wieder durch geeignet verzerrte Buchstaben "F" repräsentierte Mikromotivelemente 82 auf den Gitterplätzen eines niedrigsymmetrischen Bravais-Gitters. Konkret ist die Einheitszelle des Parallelogramm-Gitters der Fig. 7(a) durch Vektoren *̅u̅*̅₁ und *̅u̅*̅₂ mit u₁ = |*̅u̅*̅₁| = 7,3 µm, u₂ = |*̅u̅*̅₂| = 9,3 µm und α = ∠(*̅u̅*̅₂, *̅u̅*̅₂) = 45° gegeben. Die Gitterzellen weisen einen Winkel von δ₁= -20,3° zu einer Bezugsrichtung Ref auf.
Dazugenommen ist eine Anordnung von Mikrolinsen, die auf den Gitterplätzen eines zweiten niedrigsymmetrischen Bravais-Gitters liegen. Im Ausführungsbeispiel ist das zweite Bravais-Gitter ebenfalls ein niedrigsymmetrisches Parallelogramm-Gitter mit einer Einheitszelle, die durch die Vektoren *̅w̅*̅₁ und *̅w̅*̅₂ mit w₁ = |*̅w̅*̅₁| = 7,4 µm, w₂ = |*̅w̅*̅₂| = 9,2 µm und β = ∠(*̅w̅*̅₁ , *̅w̅*̅₂) = 45° gegeben ist. Die Gitterzellen des zweiten Bravais-Gitters weisen einen Winkel von δ₂ = -20,3° zur Bezugsrichtung Ref auf.

Wird der Verschiebungsvektor zu Null gesetzt (also x₀ = y₀ = 0) so ergibt sich für einen Betrachter, der mit einem normalen Betrachtungsabstand auf die Moiré-Vergrößerungsanordnung blickt, das in Fig. 7(b) dargestellte vergrößerte Moire-Bild 84. Auch hier ist die Verzerrung der Buchstaben "F" 82 im Motivbild 80 gerade so gewählt, dass sie durch den ebenfalls verzerrenden Moire-Effekt ausgeglichen wird und der Betrachter unverzerrte und vergrößerte Buchstaben "F" 86 sieht.

Zusätzlich tritt aufgrund der für Fig. 7 gewählten Gitterparameter ein orthoparallaktischer Bewegungseffekt auf, der bereits im Zusammenhang mit Fig. 3 beschrieben wurde. Kippt man nämlich das Motivbild 80 der Fig. 7(a) seitlich, so bewegen sich die vergrößerten Buchstaben 86 senkrecht zur Kipprichtung und nicht parallel dazu, wie man intuitiv erwarten würde. Dieser orthoparallaktische Bewegungseffekt ergibt sich unmittelbar aus den Beziehungen (2) und (4), er lässt sich jedoch auch anschaulich leicht verstehen, wenn man sich vergegenwärtigt, dass eine seitliche Verkippung des Motivbildes 80 die Motivbuchstaben 82 parallel zur langen Rückenseite der Buchstaben "F" bewegt, und dass diese Bewegung parallel zur langen Rückenseite in dem Moire-vergrößerten Bild 84 aufgrund der gedrehten Lage der Bildbuchstaben 86 einer Auf- und Abbewegung entspricht.

Die Transformationsmatrix *̅A̅*̅ beschreibt im Allgemeinen eine Verzerrung des Motivs bei Moirebildung. In einem prominenter Sonderfall, bei dem das Motiv bei Moirebildung nicht verzerrt wird, sind die Matrizen *̅U̅*̅,*̅W̅*̅ so gewählt, dass sie gleiche Gestalt haben, das heißt, dass die Seitenlängen s₁ und s₂ sowie der Zwischenwinkel σ der Gitter der Motivebene und der Mikrolinsenanordnung gleich sind, die Gitter aber um einen gewissen Winkel ϕ ≠ 0 gegeneinander gedreht sind.

In diesem Fall beschreibt die Transformationsmatrix *̅A̅*̅ einen Vergrößerungsfaktor und eine Drehung, jedoch keine Verzerrung, so dass die Gestalt des Motivs bei der Betrachtung bis auf Vergrößerung und Drehung erhalten bleibt. Dies gilt unabhängig von der Art der gewählten Bravais-Gitter, insbesondere auch für die erfindungsgemäß bevorzugten Parallelogrammgitter. Vergrößerungsfaktor und Drehwinkel zwischen Bild- und Motivebene sind für diesen Sonderfall durch $V = 1 / \left(2sin\left(ϕ/2\right)\right) ,$ und $Δ = 90 ° - ϕ / 2$ gegeben, wie sich leicht aus einer expliziten Darstellung der Transformationsmatrix *̅A̅*̅ ersehen lässt.

Da ein Moire-Magnifier typischerweise mit hoher Vergrößerung, also mit kleinem Winkel ϕ ausgeführt wird, ist der Drehwinkel Δ zwischen Bild- und Motivebene annähernd 90°, so dass sich der oben beschriebene orthoparallaktische Bewegungseffekt ergibt.

Eine orthoparallaktische Bewegung erhält man jedoch nicht nur mit diesem Verfahren bei dem sonst gleichartige Motivraster und Linsenraster gegeneinander gedreht sind. Wie schon bei der Beschreibung von Fig. 7 erläutert, ergibt sich orthoparallaktische Bewegung auch bei bestimmten Verzerrungen der Gitter. Bei besonders einfachen Varianten zur Erzeugung exakter orthoparallaktischer Bewegungen hat die Bewegungs- und Vergrößerungsmatrix *̅A̅*̅ die Form ${A}^{↔} = v ⋅ \left(\begin{matrix}0 & 1 \\ 1 & 0\end{matrix}\right) oder {A}^{↔} = v ⋅ \left(\begin{matrix}0 & - 1 \\ 1 & 0\end{matrix}\right) oder {A}^{↔} = v ⋅ \left(\begin{matrix}0 & - 1 \\ - 1 & 0\end{matrix}\right) oder {A}^{↔} = v ⋅ \left(\begin{matrix}0 & - 1 \\ - 1 & 0\end{matrix}\right)$ wobei der Faktor v der gewünschte Vergrößerungsfaktor zwischen Motiv und Moire ist.

Falls die orthoparallaktischen Bewegungsgeschwindigkeiten senkrecht und waagrecht unterschiedlich sein sollen, nimmt die Matrix *̅A̅*̅ die folgende Form mit unterschiedlichen Vergrößerungsfaktoren in senkrechter und waagrechter Richtung an: ${A}^{↔} = \left(\begin{matrix}0 & b \\ a & 0\end{matrix}\right) oder {A}^{↔} = \left(\begin{matrix}0 & - b \\ a & 0\end{matrix}\right) oder {A}^{↔} = \left(\begin{matrix}0 & - b \\ - a & 0\end{matrix}\right) oder {A}^{↔} = \left(\begin{matrix}0 & - b \\ - a & 0\end{matrix}\right)$

Wie weiter unten gezeigt kann man auch beliebige Bewegungsrichtungen γ ungleich 0° und 90° durch entsprechende Wahl der Komponenten der Bewegungsmatrix *̅A̅*̅ realisieren.

Die Transformationsmatrix *̅A̅*̅ beschreibt auch die Bewegung eines Moire-Bildes bei der Bewegung der Moiré-bildenden Anordnung, die von der Verschiebung der Motivebene 52 gegen die Linsenebene 54 herrührt:

Verwendet man im Moire-Magnifier ein Linsengitter oder ein vom Motivgitter beabstandetes Lochgitter, so bedeutet eine Verkippung der Anordnung eine Verschiebung des Motivs, da der Betrachter dann schräg durch die Linsen oder Löcher blickt und damit durch die jeweilige Linse (bzw. das jeweilige Loch) eine andere Stelle des Motiv herausgeholt wird als ohne Verkippung.

Führt bei dem Moiré-Magnifier eine seitliche Verkippung zu einer seitlichen Verschiebung, so erscheint das Moirébild bei beidäugiger Betrachtung mit Tiefenwirkung: Wegen des seitlichen "Kippwinkels" von etwa 15° (zwischen den Augen bei normaler Betrachtungsentfernung von ca. 25 Zentimetern) werden die seitlich verschoben gesehenen Moirebilder vom menschlichen Gehirn so interpretiert, als liege das Motiv je nach Richtung der seitlichen Verschiebung vor oder hinter der tatsächlichen Substratebene. Die Tiefenwirkung richtet sich dabei nach der Größe der Verschiebung.

Will man mit einem Moire-Magnifier dreidimensionale Bildwirkung erzeugen, ist also das Bewegungsverhalten bei seitlicher Kippung entscheidend. Während eine seitliche Kippung vorzugsweise für 3D-Wirkung ausgenutzt werden kann, bietet es sich an, eine Vor-Rück-Kippung zur attraktiven Bewegung des Motivs im Bildkontext einzusetzen. Es ist also für das Design eines Moire-Magnifiers wichtig, sein Verhalten bei Kippung (seitlich und vor-rückwärts) zu kennen und gezielt zu beeinflussen. Das kann erfindungsgemäß beispielsweise aufgrund folgender Überlegungen geschehen:

Die Spalten der Transformationsmatrix *̅A̅*̅ lassen sich als Vektoren interpretieren, ${A}^{↔} = \left(\begin{matrix}{a}_{11} & {a}_{12} \\ {a}_{21} & {a}_{22}\end{matrix}\right) , {\vec{a}}_{1} = \left(\begin{matrix}{a}_{11} \\ {a}_{21}\end{matrix}\right) , {\vec{a}}_{2} = \left(\begin{matrix}{a}_{12} \\ {a}_{22}\end{matrix}\right) .$ Man sieht nun, dass der Vektor $\vec{{a}_{1}}$ angibt, in welcher Richtung sich das Moirebild bewegt, wenn man die Anordnung aus Motiv- und Linsenraster seitlich kippt, und dass der Vektor $\vec{{a}_{2}}$ angibt, in welcher Richtung sich das Moirebild bewegt, wenn man die Anordnung aus Motiv- und Linsenraster vor-rückwärts kippt.

Die Bewegungsrichtung ergibt sich bei vorgegebenem *̅A̅*̅ wie folgt: Bei seitlicher Kippung der Motivebene bewegt sich das Moiré unter einem Winkel γ₁ zur Waagrechten, gegeben durch $tan {γ}_{1} = \frac{{a}_{21}}{{a}_{11}} .$

Analog bewegt sich das Moire bei vor-rückwärtiger Kippung unter einem Winkel γ₂ zur Waagrechten, gegeben durch $tan {γ}_{2} = \frac{{a}_{22}}{{a}_{12}} .$

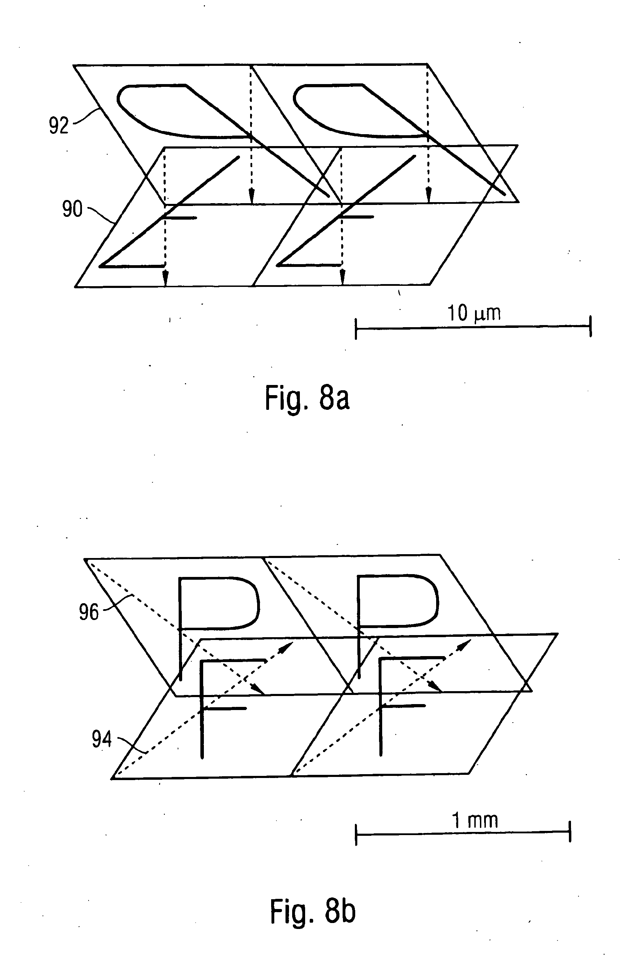

Bei einem konkreten Ausführungsbeispiel, das nunmehr mit Bezug auf Fig. 8 beschrieben wird, soll das Motiv aus zwei Buchstabenarrays mit den Buchstaben "F" und "P" bestehen, wobei die beiden Buchstaben in unterschiedlichen Arrays angeordnet sind. Beim beidäugigen Betrachten der Moire-Magnifier-Anordnung soll eines der Buchstabenarrays F oder P um ca. 1 mm vor der Substratebene schwebend erscheinen, das andere Buchstabenarray soll um ca.1 mm hinter der Substratebene schwebend erscheinen. Beim Vor-Rück-Kippen soll das eine Buchstabenarray F oder P von links oben nach rechts unten und zurücklaufen, das andere Buchstabenarray soll gleichzeitig von links unten nach rechts oben und zurücklaufen, jeweils unter einem beispielhaft gewählten Winkel von etwa 40°.

Der Moire-Magnifier soll mit Linsen mit Brennweite von etwa 10 Mikrometern und seitlichen Linsenabständen in gleicher Größenordnung aufgebaut werden. Die Buchstaben im Arraybild sollen etwa 1 mm groß erscheinen.

Zur Berechnung wird angenommen, dass w₁, w₂ die Seitenlängen der Linsenraster-Einheitszelle sind und α₁ der Zwischenwinkel zwischen den Seiten in der linken unteren Ecke der Einheitszelle ist, und dass u₁ , u₂ die Seitenlängen der Motivraster-Einheitszelle sind und α₂ der Zwischenwinkel zwischen den Seiten in der linken unteren Ecke der Einheitszelle ist.

In der Linsenebene werden Linsen mit einer Brennweite von 10 µm in einem Raster mit den Daten ${w}_{1} = {w}_{2} = 10 μm , {α}_{1} = 60 °$ angeordnet. In der Motivebene werden die Buchstaben F und P verzerrt angelegt, wie in Fig. 8(a) gezeigt. Der Buchstabe F wird dabei in einem Raster 90 mit den Daten ${u}_{1} = 10 , 1 μm , {u}_{2} = 9 , 9 μm , {α}_{2} = 60 ° ,$ angeordnet, der Buchstabe P in einem Raster 92 mit den Daten ${u}_{1} = 9 , 9 μm , {u}_{2} = 10 , 1 μm , {α}_{2} = 120 ° .$

Mit diesen Angaben kann mithilfe der Beziehung (6d) die Matrix *̅A̅*̅ und mit Beziehung (5b) die verzerrten Motive "F" und "P" berechnet werden, wie in Fig. 8(a) dargestellt. Dieses Muster mit den verzerrten und verschobenen Buchstaben F und P wird in eine Lackschicht auf einer Seite einer Folie geprägt, auf deren andere Seite man das oben spezifizierte Linsenraster anbringt. Dabei wird die Foliendicke so gewählt dass die Motive in der Brennebene der Linsen liegen.

Betrachtet man nun den so gebildeten Moiré-Magnifier, so sieht der Betrachter die unverzerrten, vergrößerten Buchstaben F und P, wie in Fig. 8(b) gezeigt. Die gemischten Gitter aus F's und P's stören sich gegenseitig nicht, da das Linsenraster nur die zu einer Blickrichtung gehörenden Bildpunkte herausholt und die anderen Partien verdeckt bleiben. Entscheidend ist dabei, dass die überlagerten F- und P-Arrays für ein und dasselbe Linsenarray konzipiert sind.

Nach Konstruktion bewegen sich die vergrößerten Buchstaben "F" und "P" beim Kippen der Anordnung in den gewünschten Richtungen, die in Fig. 8(b) durch die Pfeile 94 für die Buchstaben F und die Pfeile 96 für die Buchstaben P angedeutet sind.

Zurückkommend auf die weiter oben bereits angesprochene Vorgehensweise bei der Herstellung von Moire-Vergrößerungsanordnungen kann in einer besonders bevorzugten Variante wie folgt vorgegangen werden. Zur Erläuterung wird die Beziehung (6b) in der für die nachfolgende Diskussion besonders geeigneten Form ${U}^{↔} = {W}^{↔} - {{A}^{↔}}^{- 1} ⋅ {W}^{↔}$ verwendet wird.

Zunächst wird ein Soll-Motiv, wie etwa eine Buchstabenfolge, gewählt, und ein 3D-Verhalten und/ oder ein Bewegungsverhalten für seitliches und Vor-Rück-Kippen konzipiert. Dann wird die Transformationsmatrix *̅A̅*̅ wie oben beschrieben festgelegt, die die gewünschten Bewegungen des Moirebildes und den 3D-Eindruck erzeugt. Falls erforderlich, wird das Motiv nochmals überarbeitet, um es der Transformation anzupassen.

Das einzubringende Motiv selbst erhält man aus dem gewünschten Motiv, indem man auf das gewünschte Motiv die Umkehrmatrix *̅A̅*̅⁻¹ anwendet. Diese Umwandlung kann in üblichen Zeichenprogrammen, wie "Corel Draw" oder "Illustrator" erfolgen, wenn man die Transformation *̅A̅*̅⁻¹ aus Skalierung, Spiegelung, Scherung und Drehung aufbaut, da diese Transformationsmöglichkeiten von derartigen Zeichenprogrammen bereitgestellt werden. Die Matrix *̅A̅*̅ wie auch die Umkehrmatrix *̅A̅*̅⁻¹ stellen lineare Transformationen dar, die sich als Produkt einer Skalierung, einer Scherung und einer Drehung, darstellen lassen. Die Skalierung mit Vorzeichen umfasst dabei auch Vergrößerung, Verkleinerung, Dehnung, Stauchung und Spiegelung.

Anstatt mit einem Zeichenprogramm zu arbeiten, kann auch mit mathematischen Computerprogrammen, wie etwa "Mathematica", jede Transformationsmatrix oder Matrixkombination auf ein als Pixel- oder Vektorgraphik gegebenes gewünschtes Motiv angewandt werden, um das einzubringende Motiv zu erzeugen.

Man kann nun ein Linsenraster W als Bravais-Gitter mit beliebiger Symmetrie wählen, ohne dass dies einen inhaltlichen Einfluss auf das Moirebild und auf seine Bewegung hat. Das Linsenraster legt bei dieser Konzeption lediglich fest, in welchen Abständen und in welchen Richtungen sich das Moirebild wiederholt.

Mit der Umkehrmatrix *̅A̅*̅⁻¹ bildet man nun *̅A̅*̅⁻¹*· W̅,* so dass, wenn *̅A̅*̅ beispielsweise eine 100-fache Vergrößerung und eine Drehung um den Winkel ϕ darstellt, die Transformation *̅A̅*̅⁻¹ ·*̅W̅*̅ bedeutet, dass das Gitter *̅W̅*̅ um den Winkel -ϕ gedreht und auf ein 100stel verkleinert wird.

Im nächsten Schritt erhält man das Motivraster *̅U̅*̅ als Differenzmatrix *W̅ - A̅*⁻¹ *· W̅.* Das so gewonnene Motivraster *̅U̅*̅ hat nun die Eigenschaft zusammen mit dem vorher frei gewählten Linsenraster *̅W̅*̅ die gewünschten Motivbewegungen *̅A̅*̅ zu erzeugen.

Das frei gewählte Linsenraster-Bravaisgitter *̅W̅*̅ kann hohe oder niedere Symmetrie haben, durch das Anhängen von - *̅A̅*̅⁻¹ · *̅W̅*̅ ergibt sich im Allgemeinen für das Motivraster *̅U̅*̅ ein Bravais-Gitter mit niederer Parallelogrammsymmetrie. Im letzten Schritt wird das mit *̅A̅*̅⁻¹ umgewandelte einzubringende Motiv nun als Array angeordnet mit den Arrayraster-Daten *U̅.*

Das beschriebene Verfahren lässt sich auch anwenden, wenn die Matrizen ortsabhängig variieren:

Variiert man die Matrix *̅A̅*̅ ortsabhängig, hält das Linsenraster *̅W̅*̅ konstant und bestimmt das Motivraster nach der Beziehung *̅U̅*̅ = *W̅ - A̅*⁻¹ *W ,* so erhält man eine ortsabhängig variierende Verzerrung und/oder Bewegung und/ oder 3D-Tiefe.

Analog gilt: Variiert man die Matrix *̅A̅*̅ ortsabhängig, hält das Motivraster Ü konstant und bestimmt das Linsenraster nach der Beziehung *̅W̅*̅ = (*̅A̅*̅- *̅I̅*̅)⁻¹ · *̅A̅*̅ · *U̅,* so erhält man eine ortsabhängig variierende Verzerrung und/ oder Bewegung und/ oder 3D-Tiefe.

Umgekehrt gilt: Hält man die Matrix *̅A̅*̅ konstant und variiert die Raster *̅W̅*̅ und *̅U̅*̅ in einer Weise, dass die Beziehung *̅U̅*̅ = *W̅ - A̅*⁻¹ *- W̅* erfüllt wird, so bleiben das Aussehen, die Bewegungs- und 3D-Eigenschaften der Motive im Moirebild ortsunabhängig, jedoch die Abstände der Moirebilder im Gitter variieren ortsabhängig.
Natürlich kann man auch alle Größen *A̅, W̅, U̅* unter Berücksichtigung der Beziehung (7) ortsabhängig variieren, was zur Folge hat, dass sowohl Motivaussehen als auch Motivabstände im Moiregitter ortsabhängig variieren.

Ein weiteres Problem stellt die Frage dar, wie die in Rastern angeordneten Motivelemente und Linsenelemente passend zu den Rastereigenschaften optimiert werden können.

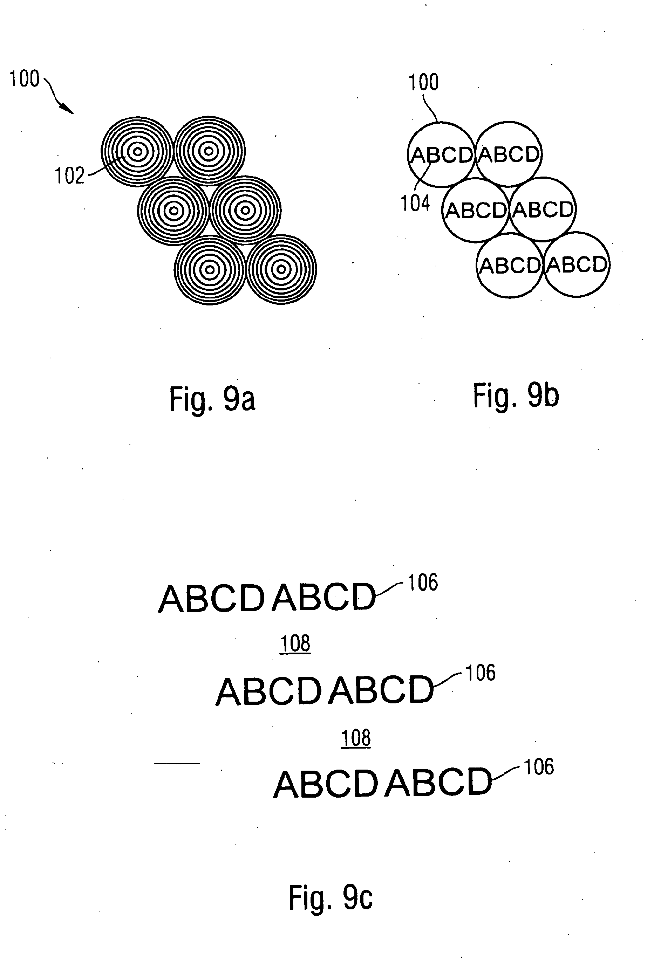

Zur Illustration zeigt Fig. 9 als Motivelement die Buchstabenfolge "ABCD", die sich periodisch wiederholend unter rasterförmig angeordneten Linsen mit kreisförmigem Umriss angeordnet ist. In Fig. 9(a) sind in den Umrisslinien des Linsenarrays 100 konzentrische Kreise 102 eingezeichnet, die bei konventionellen Linsen die Höhenlinien auf den Linsenflächen andeuten sollen. Bei speziellen Linsen können die konzentrischen Kreise auch andere Bedeutung haben, z.B. Stufengrenzen bei Fresnellinsen, optische Gitterlinien bei holographischen Linsen, Linien mit gleichem Brechzahlgradienten bei Gradientenlinsen usw. In Fig. 9(b) ist die Buchstabenfolge 104 "ABCD" in das Linsenraster 100 eingepasst und Fig. 9(c) zeigt den als Moire erscheinenden Text 106, wobei deutlich wird, dass die einfache Einpassung der Fig. 9(b) zu viel ungenutztem Leerraum 108 führt. Auch kann die Schriftgröße nicht optimal im Verhältnis zur verfügbaren Fläche gewählt werden.

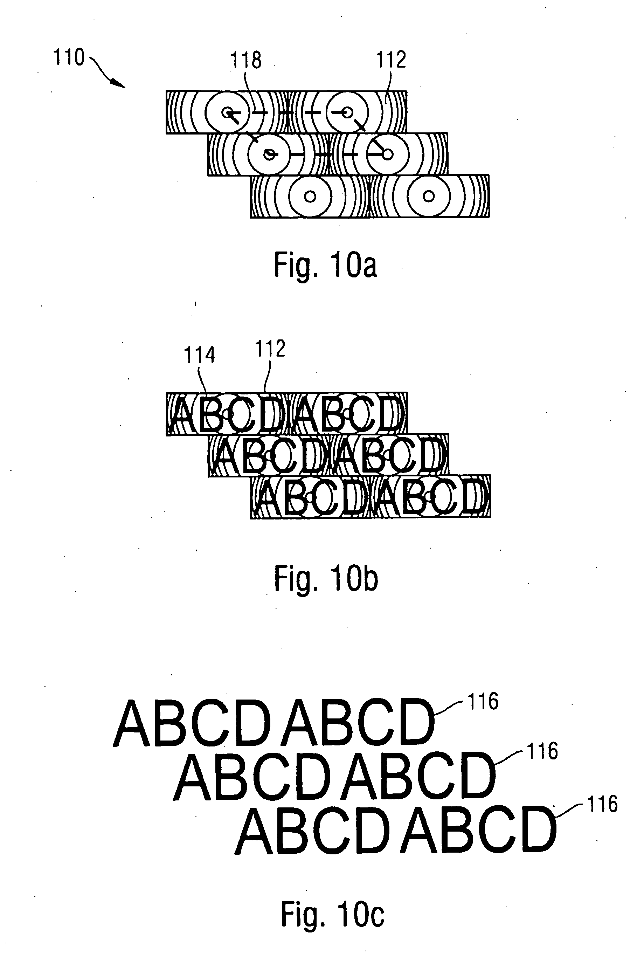

Eine mögliche Vorgehensweise zur Lösung des Problems ist in der Fig.10 illustriert. Dabei zeigt Fig.10(a) ein Linsenarray 110, bei dem die Einzellinsen 112 passend zur Form der Motivelemente 114, hier wieder der Buchstabenfolge "ABCD", zurechtgeschnitten sind. Fig.10(b) zeigt die in die Linsen 112 eingepassten Motive 114 und Fig.10(c) das als Moire ohne ungenutzte Zwischenräume erscheinende Motiv 116. In diesem Beispiel haben sowohl das Linsenarray als auch das Motivarray Parallelogrammsymmetrie, wobei in Fig.10(a) eine Parallelogramm-Einheitszelle 118 eingezeichnet ist. Die Umrisse der Linsen 112 und Motive 114 müssen keine Parallelogramme sein, sie können prinzipiell beliebig gestaltet sein, und etwa wie im Ausführungsbeispiel als Rechtecke oder mit beliebigen Rändern zusammengefügt werden.

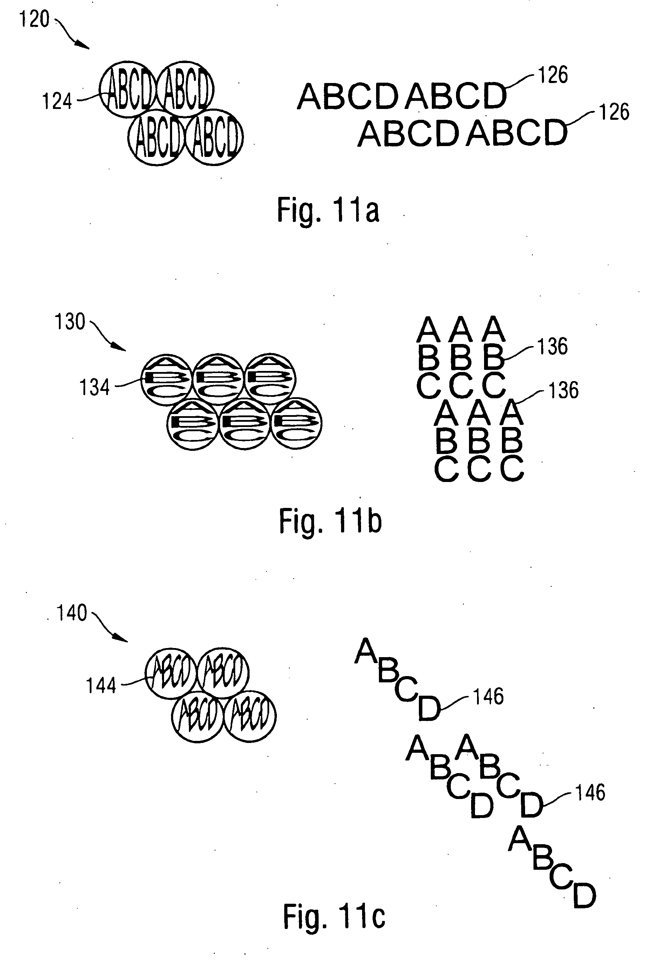

Fig. 11 zeigt weitere Möglichkeiten, ungenutzte Zwischenräume im Rahmen der Erfindung vermeiden. Bei dieser Erfindungsvariante werden die Motivelemente passend zum Linsenraster verzerrt gestaltet und es wird durch geeignete Wahl der Abbildungsmatrix *̅A̅*̅ sicherstellt, dass das in der Moireanordnung vergrößert erscheinende Motiv unverzerrt erscheint.

Fig.11(a) zeigt in der linken Bildhälfte ein passend horizontal gestauchtes Motiv 124 unter einem Linsenraster 120, und in der rechten Bildhälfte das bei der Betrachtung vergrößert erscheinende Moiremotiv 126 ohne ungenutzte Zwischenräume. Analog zeigt Fig.11(b) die Vorgehensweise für ein vertikal gestauchtes Motiv 134 und Fig.11(c) für ein schräg angeordnetes Motiv 144, die jeweils unter einem Linsenraster 130 bzw. 140 angeordnet sind. Bei der Betrachtung ergeben sich die Moirebilder 136 bzw. 146, die keine überflüssigen Zwischenräume aufweisen.

Weitere Möglichkeiten zur Vermeidung ungenutzter Zwischenräume ergeben sich erfindungsgemäß durch den Einsatz spezieller Linsensysteme im Linsenraster.

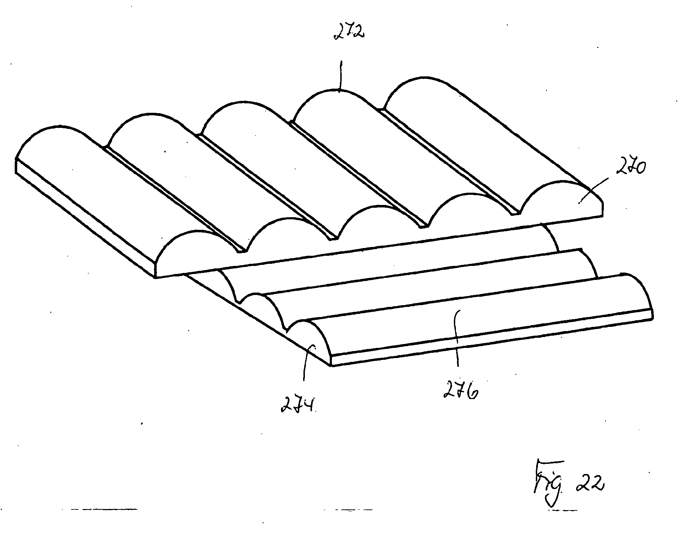

Anstelle konventioneller Linsen kann insbesondere bei Gittern mit stark unterschiedlichen Seitenlängen ein anamorphotisches Linsengitter eingesetzt werden. Ein solches anamorphotisches Linsengitter besteht im einfachsten Fall aus sich kreuzenden, übereinander liegenden Zylinderlinsen-Gittern 270 und 274, wie in Fig. 22 gezeigt. Die Zylinderlinsen 272 bzw. 276 in den beiden Gittern haben unterschiedliche Krümmung so dass in der Bildebene scharf, aber verzerrt abgebildet wird (im Gegensatz zu astigmatischen ellipsenförmigen Linsen die keine einheitliche Bildebene haben und damit unscharf abbilden). Bei nicht rechtwinkligen Gittern benötigt man mehr als zwei überlagerte Zylinderlinsengitter für eine anamorphotische Abbildung.

Die Zylinderlinsen in den linearen Zylinderlinsen-Gittern werden erfindungsgemäß so angeordnet dass das gewünschte zweidimensionale Bravais-Gitter $W = \left(\begin{matrix}{w}_{11} & {w}_{12} \\ {w}_{21} & {w}_{22}\end{matrix}\right)$ entsteht.

Erfindungsgemäß anzuwendende anamorphotisch wirkende Gitter können auch durch beabstandet übereinander liegende Arrays aus Spalten anstelle von übereinander liegenden Arrays aus Zylinderlinsen realisiert werden. Erfindungsgemäß einzusetzende anamorphotische Systeme können auch aus Kombinationen von normalen Linsen und Zylinderlinsen oder Kombinationen von Linsen und Prismen etc. aufgebaut werden.

### Ausführungsbeispiele mit Moiré-Magnifier-Anordnungen mit Zylinderlinsen:

Einen vorteilhaften Spezialfall stellt der Moire-Magnifier mit Zylinderlinsen dar. Abbildende Systeme in Moire-Magnifiern können neben sphärischen, asphärischen, astigmatischen, anamorphotischen auch zylindrische Linsen oder Linsensysteme sein.

Moiré-Magnifier mit Zylinderlinsen unterscheiden sich von den im Stand der Technik in vielen Varianten beschriebenen Zylinderlinsen -Wechselbild-Verfahren durch folgende Merkmale wesentlich:

Herkömmliche Wechselbilder mit Zylinderlinsen enthalten unter dem Zylinderlinsenarray in Streifen aufgeteilte und so ineinander verschachtelte Bilder, dass je nach Betrachtungsrichtung unterschiedliche Bilder zu sehen sind. Dabei sind folgende Varianten von besonderem Interesse:
Variante 1: Man erhält Bilder, die sich bei Änderung der Betrachtungsrichtung bewegen, wenn man Bilder des gleichen Motivs mit unterschiedlichen Bewegungszuständen verschachtelt.
Variante 2: Dreidimensional plastisch wirkende Bilder erhält man, wenn man Bilder verschachtelt, die Ansichten des gleichen Motivs aus unterschiedlichen Richtungen enthalten.
Variante 3: Flip-Wechselbilder erhält man, wenn verschiedene Bilder so verschachtelt sind, dass aus unterschiedlichen Richtungen jeweils andere Bilder zu sehen sind.

Dagegen enthalten die erfindungsgemäßen Moiré-Magnifier mit Zylinderlinsen unter jeder Linse im Zylinderlinsenarray ein vollständiges Bild des verkleinerten und verzerrten Motivs. Dabei unterscheiden sich die Array-Anordnungen von Motivarray und Linsenarray so, dass beim Betrachten des Motivarrays durch das Linsenarray infolge des Moire-Effekts das Motivarray vergrößert und entzerrt erscheint.

Zylinderlinsen-Moire-Magnifier unterscheiden sich von den im Stand der Technik beschriebenen Moire-Magnifiern mit normalen Linsen durch folgende Merkmale wesentlich:

Moiré-Magnifier mit normalen Linsen sind nach dem Stand der Technik mit zweidimensionalen Linsen- und Motivarrays aufgebaut, welche Arrays durch zwei Verschiebungsvektoren in unterschiedlichen Richtungen gekennzeichnet sind, welche Verschiebungsvektoren eine Einheitszelle definieren

Zylinderlinsen-Moire-Magnifier sind aufgebaut aus Linsen- und Motivarrays, die nur einen Verschiebungsvektor in einer Richtung besitzen. Wenn man hier eine Einheitszelle konstruiert, ist diese durch zwei in beliebiger Richtung (außer der Richtung des Verschiebungsvektors) gelegte Geraden durch die Endpunkte des Verschiebungsvektors begrenzt und unendlich groß.

Damit kann man im Zylinderlinsen-Moire-Magnifier ohne Überlappungen beliebig lange Motive unterbringen, während man beim Moire-Magnifier mit normalen Linsen nach dem Stand der Technik auf Motive beschränkt ist, die in die endlich große Einheitszelle passen, wenn man Überschneidungen vermeiden will.

Die Moirebilder können, wie schon bei Moire-Magnifiern mit normalen Linsen diskutiert, auch beim Zylinderlinsen-Moiré-Magnifier bei geeigneter Wahl der Array-Rasterparameter dreidimensional erscheinen und sich beim Kippen der Anordnung in bestimmten Richtungen bewegen, da die durch die Linsen sichtbaren virtuellen und reellen Bilder nach den Regeln der geometrischen Optik hinter bzw. vor der Anordnung aus Linsen und Motiven liegen.

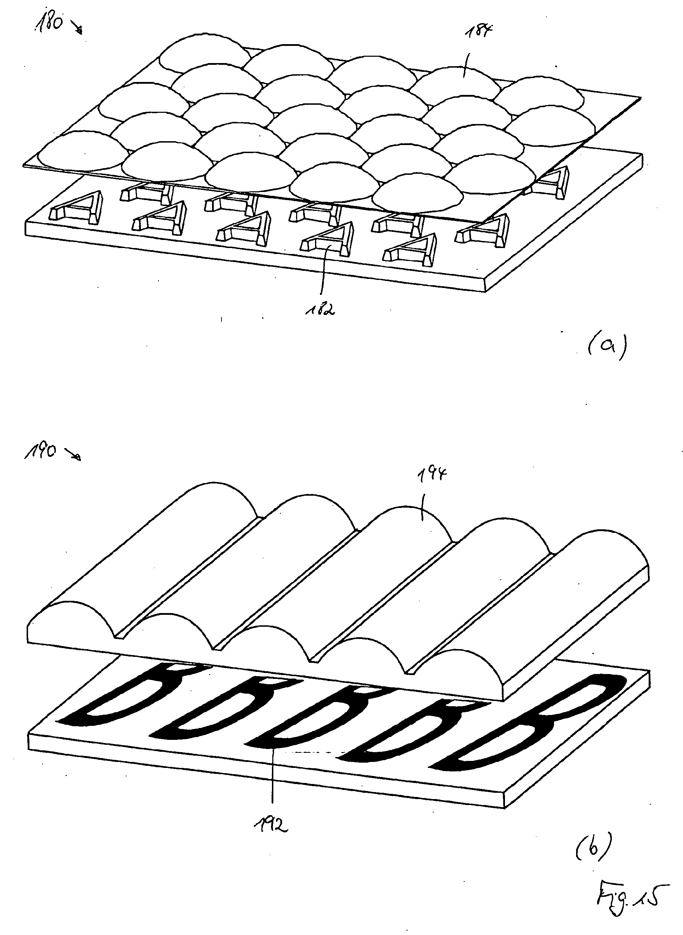

Zur Illustration zeigt Fig. 15(a) schematisch einen Moire-Magnifier 180 mit einer Anordnung von Mikromotivelementen 182 und sphärischen Linsen 184 in zweidimensionaler Gitternetz-Anordnung, wobei wie oben beschrieben, alle in Fig. 4 gezeigten, zweidimensionalen Bravais-Gitternetzanordnungen infrage kommen. Die Berechnung von Linsengitter und Motivgitter erfolgt gemäß den oben angegebenen Beziehungen (1) bis (7).

Fig.15(b) zeigt schematisch einen Moiré-Magnifier 190 mit Zylinderlinsen 194 in Strichgitter-Anordnung und einer zugehörigen Anordnung von Mikromotivelementen 192. Die Beziehungen (1) bis (7) lassen sich auch für eine solche Anordnung anwenden, wenn man folgende Besonderheiten beachtet:

Ein Zylinderlinsengitter erhält man formal, wenn man bei der zweidimensionalen Gitterzelle eine Seitenlänge unendlich groß werden lässt. Dazu bringt man das Linsengitter $W = \left(\begin{matrix}{w}_{11} & {w}_{12} \\ {w}_{21} & {w}_{22}\end{matrix}\right)$ mit dem Gitterlinien-Abstand d und der Zylinderrichtung φ in folgende Form, wobei ohne Einschränkung der Allgemeinheit bei φ = 0 die Zylinderrichtung in Richtung der y-Achse liegen soll. $W = \left(\begin{matrix}cos φ & - sin φ \\ sin γ & cos φ\end{matrix}\right) ⋅ \left(\begin{matrix}d & 0 \\ 0 & ∞\end{matrix}\right) {W}^{- 1} = \left(\begin{matrix}{/}_{d} 1 & 0 \\ 0 & 0\end{matrix}\right) ⋅ \left(\begin{matrix}cos φ & sin φ \\ - sin γ & cos φ\end{matrix}\right)$

Das Motivgitter U und das Moiregitter T können auch hier durch $U = \left(\begin{matrix}{u}_{11} & {u}_{12} \\ {u}_{21} & {u}_{22}\end{matrix}\right) und T = \left(\begin{matrix}{t}_{11} & {t}_{12} \\ {t}_{21} & {t}_{22}\end{matrix}\right)$ angesetzt werden. Die hiermit nachfolgend berechneten Beziehungen zeigen, dass die Komponenten in der zweiten Spalte dieser Matrizen in diesen Beziehungen nicht vorkommen, was der Tatsache Rechnung trägt, dass U und T bei dieser Art von Moire-Magnifier nur einfache Translationen sind.

Die Beziehung (6d) lässt sich nun so umformen, dass die Matrix W, die in der oben angegebenen Schreibweise das Symbol ∞ (unendlich) enthält, und damit nicht für Berechnungen geeignet ist, durch die Matrix W⁻¹ ersetzt wird, mit der problemlos gerechnet werden kann. $A = {\left(I-U{W}^{- 1}\right)}^{- 1} = T {W}^{- 1} + I$

Mit der Beziehung (6d') lässt sich nun die Moire-Bewegungs- und Vergrößerungs-Matrix A aus Linsenmatrix W und Motivmatrix U berechnen: $A = \frac{1}{d - {u}_{11} cos φ - {u}_{21} sin φ} \left(\begin{matrix}d - {u}_{21} sin φ & {u}_{11} sin φ \\ {u}_{21} cos φ & d - {u}_{11} cos φ\end{matrix}\right) = \frac{1}{d} \left(\begin{matrix}d + {t}_{11} cos φ & {t}_{11} sin φ \\ - {t}_{21} sin φ & d + {t}_{21} cos φ\end{matrix}\right)$

Dabei gilt: Bei hoher Vergrößerung, wie man sie beim Moire-Magnifier im Allgemeinen vorliegen hat, ergibt sich für beliebige Kipprichtung der Anordnung (waagrecht, senkrecht oder schräg, eine Ausnahme bildet nur das Kippen in Richtung der Zylinderachse, in welchem Fall sich keine Bewegung ergibt) als Bewegungsrichtung stets fast genau die Richtung des Verschiebungsvektors $\vec{{u}_{1}} = \left(\begin{matrix}{u}_{11} \\ {u}_{21}\end{matrix}\right) ⋅$ Die gleiche Richtung oder entgegen gesetzte Richtung hat auch der Verschiebungsvektor im Moirébild $\vec{{t}_{1}} = \left(\begin{matrix}{t}_{11} \\ {t}_{21}\end{matrix}\right) ⋅$ Die Bewegungsrichtung beim Verkippen ist dann also $actan \left({u}_{21}/{u}_{11}\right) = arctan \left({t}_{21}/{t}_{11}\right) ,$ bezogen auf x-Achse, und die Vergrößerung in Richtung des Verschiebungsvektors $\vec{{t}_{1}}$ ist gegeben durch $v = \frac{{t}_{11}}{{u}_{11}} = \frac{{t}_{21}}{{u}_{21}} = \frac{d}{d - {u}_{11} cos φ - {u}_{21} sin φ} = \frac{d + {t}_{11} cos φ + {t}_{21} sin φ}{d}$

Die Vergrößerung in der Richtung der Zylinderachsen (also in Richtung φ) beträgt 1.

Beim beidäugigen Betrachten erscheint das Motiv vor der Substratebene schwebend, wenn die Vergrößerung negativ ist, d.h. wenn *d* kleiner als *u*₁₁ cosφ + *u*₂₁ sin φ ist, und scheint hinter der Substratebene zu liegen, wenn die Vergrößerung positiv ist, also wenn *d* größer als *u*₁₁ cos φ *u*₂₁ sin φ.

Ein Motiv mit den Sollkoordinaten X, Y wird im Motivraster verzerrt angelegt, wobei für die Koordinaten x, y im Motivraster gilt: $\left(\begin{matrix}x \\ y\end{matrix}\right) = {A}^{- 1} \left(\begin{matrix}X \\ Y\end{matrix}\right) = \frac{1}{d} \left(\begin{matrix}d - {u}_{11} cos φ & - {u}_{11} sin φ \\ - {u}_{21} cos φ & d - {u}_{21} sin φ\end{matrix}\right) ⋅ \left(\begin{matrix}X \\ Y\end{matrix}\right)$

In einem bevorzugten Spezialfall liegt das Linsenraster senkrecht (parallel zur y-Achse), so dass φ = 0 ist. Damit erhält man: $W = \left(\begin{matrix}d & 0 \\ 0 & ∞\end{matrix}\right) , {W}^{- 1} = \left(\begin{matrix}{/}_{d} 1 & 0 \\ 0 & 0\end{matrix}\right) , U = \left(\begin{matrix}{u}_{11} & {u}_{12} \\ {u}_{21} & {u}_{22}\end{matrix}\right) , A = \left(\begin{matrix}\frac{d}{d - {u}_{11}} & 0 \\ \frac{{u}_{21}}{d - {u}_{11}} & 1\end{matrix}\right)$

Der Form der Bewegungsmatrix A bei senkrecht angeordnetem Linsengitter entnimmt man:
- Beim seitlichen Kippen der Moiré-Magnifier-Anordnung bewegt sich das im Gitter U angebrachte Motiv in Richtung arctan (*u₂₁*/*_{d}*) bezogen auf x-Achse.
- Beim senkrechten Kippen der Moiré-Magnifier-Anordnung ergibt sich keine Bewegung.
- Beim beidäugigen Betrachten erscheint das Motiv vor der Substratebene schwebend, wenn *d* kleiner ist als *u₁₁,* und scheint hinter der Substratebene zu liegen, wenn *d* größer als *u₁₁* ist.
- *In* x-Richtung beträgt die Vergrößerung *d*/(*d-u₁₁*)*.*
- In y-Richtung beträgt die Vergrößerung 1.

Das Motiv mit den Sollkoordinaten X, Y wird im Motivraster verzerrt angelegt , wobei für die Koordinaten x, y im Motivraster gilt: $\left(\begin{matrix}x \\ y\end{matrix}\right) = {A}^{- 1} \left(\begin{matrix}X \\ Y\end{matrix}\right) = \left(\begin{matrix}\frac{d - {u}_{11}}{d} & 0 \\ - \frac{{u}_{21}}{d} & 1\end{matrix}\right) ⋅ \left(\begin{matrix}X \\ Y\end{matrix}\right)$

Der Moire-Magnifier mit Zylinderlinsen hat gegenüber dem Moire-Magnifier mit normalen Linsen den Vorteil, dass beliebig lange Motive, beispielsweise Zeichenfolgen oder Codierungen, untergebracht werden können.

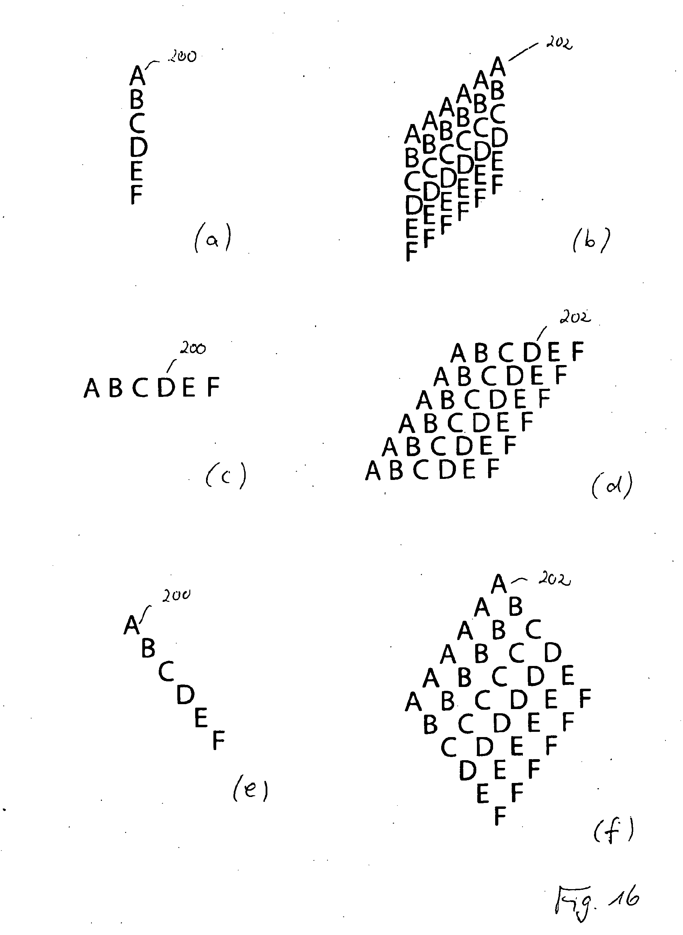

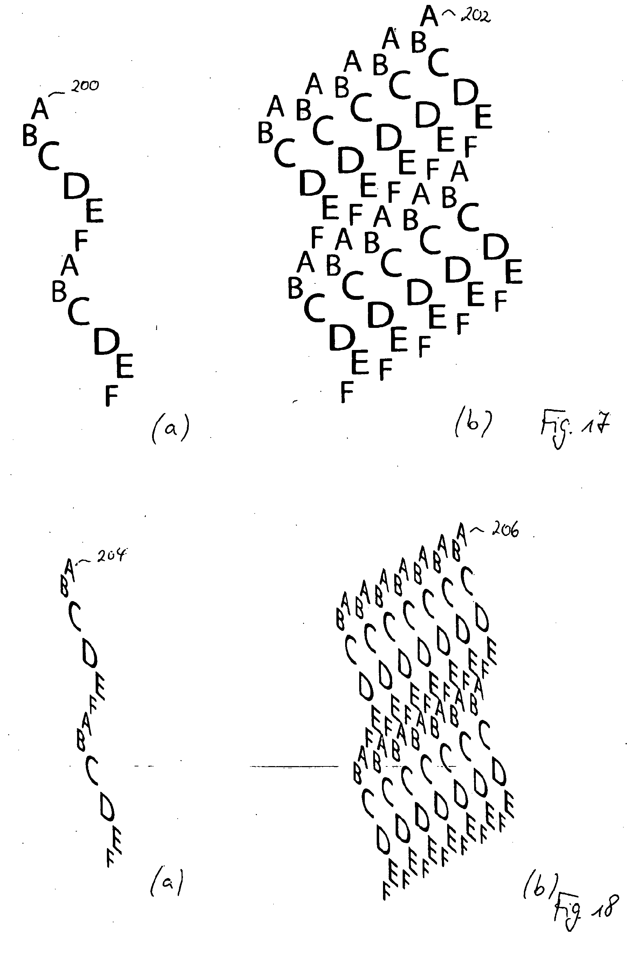

Ein solches langes Motivelement 200, für das in den Figuren beispielhaft die Buchstabenfolge "A B C D E F" verwendet ist, kann in beliebigen Richtungen vorliegen und kann beispielsweise senkrecht (Fig. 16(a)), waagrecht (Fig. 16(c)), schräg (Fig. 16(e)) oder auch entlang einer gekrümmten Linie angeordnet sein, wie in Fig. 17(a) dargestellt.

Im Moiré-vergrößerten Bild 202 wiederholt sich das lange Motivelement 200 dann jeweils unverzerrt periodisch mit dem Verschiebungsvektor ${\overline{t}}_{1} = \left(\begin{matrix}{t}_{11} \\ {t}_{21}\end{matrix}\right) = \frac{d}{d - {u}_{11} cos φ - {u}_{21} sin φ} \left(\begin{matrix}{u}_{11} \\ {u}_{21}\end{matrix}\right) ,$ wie in den Figuren 16(b), 16(d), 16(f) und 17(b) dargestellt.

Dieses visuelle Erscheinungsbild des Moire-vergrößerten Bilds 202 wird mit einem Moire-Magnifier erreicht, bei dem das mit der Matrix ${A}^{- 1} = \frac{1}{d} \left(\begin{matrix}d - {u}_{11} cos φ & - {u}_{11} sin φ \\ - {u}_{21} cos φ & d - {u}_{21} sin φ\end{matrix}\right)$ verzerrte, in Fig.18(a) dargestellte Mikromotivelement 204 mit dem Verschiebungsvektor $\vec{{u}_{1}} = \left(\begin{matrix}{u}_{11} \\ {u}_{21}\end{matrix}\right)$ periodisch als Motivraster 206 angeordnet ist, wie in Fig.18(b) gezeigt, und bei dem das Motivraster 206 durch ein Zylinderlinsenraster mit Linsenabstand d und Achsenrichtung φ betrachtet wird, wie in Figur 15(b) gezeigt.

Nunmehr wird eine bevorzugte Vorgehensweise zur Wahl der Parameter für einen Moire-Magnifier mit Zylinderlinsen beschrieben:
- Zunächst wird ein Zylinderlinsenraster mit Linsenabstand d gewählt.
- Dann wird ein passendes Motiv festgelegt, das im Moire-vergrößerten Bild erscheinen soll. Damit steht die Sollhöhe und Sollbreite b des Motivs fest.
- Weiter wird festgelegt, wie sich das Motiv bewegen soll. Die Bewegungsrichtung ist dabei ungefähr gleich der Richtung, in der das Motiv im Motivarray angeordnet wird. Dadurch ist u₂₁/u₁₁ = t₂₁/t₁₁ festgelegt.
- Die Lage für das Linsenraster, d.h. der Winkel φ kann beliebig festgelegt werden, mit der Einschränkung dass φ vorteilhaft nicht in der Richtung arctan (u₂₁/u₁₁) liegt. Um nicht zu stark verzerrte Motive im Motivraster anlegen zu müssen, sollte die Differenz zwischen der Linsenzylinderrichtung und der Bewegungsrichtung zwischen 30° und 90° betragen.
- Damit ein Motiv ohne Überschneidungen ins Raster passt, legt man das Soll-Motiv mit Verschiebung in einem Zeichenprogramm an und bestimmt die Größe der Verschiebung t₁₁, t₂₁ so dass Überschneidungen vermieden werden. Mit den nun festgelegtem Größen d, φ, t₁₁, t₂₁ kann man v, u₁₁, u₂₁ bestimmen unter Benutzung der Beziehung $v = \frac{{t}_{11}}{{u}_{11}} = \frac{{t}_{21}}{{u}_{21}} = \frac{d}{d - {u}_{11} cos φ - {u}_{21} sin φ} = \frac{d + {t}_{11} cos φ + {t}_{21} sin φ}{d}$
- Die Vergrößerung v ist negativ, wenn *d* kleiner als *u*₁₁ cos φ + *u*₂₁ sin φ ist. Beim beidäugigen Betrachten erscheint das das Motiv vor der Substratebene zu schweben. Hinter der Substratebene zu liegen scheint das Motiv, wenn *d* größer als *u*₁₁ cos φ + *u*₂₁ sin φ, also wenn die Vergrößerung positiv ist.

Nun stehen alle Daten u₁₁, u₂₁, d, φ für den Zylinderlinsen-Moire-Magnifier zur Verfügung und es kann die Verzerrungsmatrix A⁻¹ berechnet werden, die benötigt wird um aus dem gewünschten Bild das im Motivarray anzulegende Bild zu berechnen.

Wie oben beschrieben, erhält man nun aus den Koordinaten X,Y eines Punktes im Sollbild die Koordinaten x,y des entsprechenden Punktes im Motivraster durch die Transformation $\left(\begin{matrix}x \\ y\end{matrix}\right) = {A}^{- 1} \left(\begin{matrix}X \\ Y\end{matrix}\right) = \frac{1}{d} \left(\begin{matrix}d - {u}_{11} cos φ & - {u}_{11} sin φ \\ - {u}_{21} cos φ & d - {u}_{21} sin φ\end{matrix}\right) ⋅ \left(\begin{matrix}X \\ Y\end{matrix}\right)$

Diese Berechnung wird für alle Punkte des Sollbildes durchgeführt. Die Berechnung kann im Computer erfolgen, wenn das Sollbild als Bit-Map oder als Vektorgrafik in einem geeigneten Computer-Format vorliegt. Das so berechnete x-y-Bild wird mit dem Verschiebungsvektor $\vec{{u}_{1}} = \left(\begin{matrix}{u}_{11} \\ {u}_{21}\end{matrix}\right)$ verschoben periodisch angeordnet, womit das Motivraster erzeugt ist.

Ein derartiger Zylinderlinsen-Moire-Magnifier hat gegenüber einem Moiré-Magnifier mit normalen Linsen in der im Stand der Technik beschriebenen Form den weiteren Vorteil, dass die Moire-Bilder schärfer und kontrastreicher sind, da die Vergrößerungsunschärfe nur in Richtung senkrecht zur Zylinderrichtung eingeht und die Bilder in der Zylinderrichtung scharf wie gedruckt sind.

Nachfolgend werden einige konkrete Rechenbeispiele zur Illustration der oben geschilderten Prinzipien und Vorgehensweisen angegeben.

### Beispiel 1:

Ein Moiré-Magnifier-Aufbau soll eine Dicke von ungefähr 30 µm haben. Um das zu erreichen, liegt der Zylinderlinsenabstand d bei 30 µm. Im Moire-vergrößerten Bild sollen sich senkrecht angeordnete lange Buchstabenfolgen beim seitlichen Kippen schräg unter 35° bezogen auf die x-Achse bewegen. Die Buchstaben sollen bei beidäugiger Betrachtung hinter der Substratebene liegend erscheinen. Die Buchstaben im Moire-vergrößerten Bild sollen eine Höhe von etwa 3 mm haben.

### Damit ergibt sich:

Linsenrasterdaten: w₁₁ = d = 0.03 mm, ϕ = 0°.
Motivrasterdaten: u₁₁ = 0.0297 mm, u₂₁ = 0.0207962 mm
Verzerrungsmatrix: ${A}^{- 1} = \left(\begin{matrix}0 , 01 & 0 \\ - 0 , 693205 & 1\end{matrix}\right)$

### Beispiel 2:

Vorgaben wie bei Beispiel 1, aber die Buchstaben sollen bei beidäugiger Betrachtung vor der Substratebene schweben.

### Damit ergibt sich:

Linsenrasterdaten: d = 0.03 mm, ϕ = 0°.
Motivrasterdaten: u₁₁ = 0.0303 mm, u₂₁ = 0.0212163 mm,
Verzerrungsmatrix: ${A}^{- 1} = \left(\begin{matrix}- 0 , 01 & 0 \\ - 0 , 70721 & 1\end{matrix}\right)$ mit seitenverkehrten Buchstaben

### Beispiel 3:

Vorgaben wie bei Beispiel 1, aber die Buchstabenfolgen sollen sich beim Kippen des Moire-Magnifiers in beliebiger Richtung senkrecht bewegen und hinter der Substratebene zu liegen scheinen.

### Damit ergibt sich:

Linsenrasterdaten: d = 0.03 mm, ϕ = 45°
Motivrasterdaten: u₁₁ = 0 mm, u₂₁ = 0.0420021 mm,
Verzerrungsmatrix: ${A}^{- 1} = \left(\begin{matrix}1 & 0 \\ - 0 , 99 & 0 , 01\end{matrix}\right)$

### Beispiel 4:

Vorgaben wie bei Beispiel 1, aber die Buchstabenfolgen sollen sich beim Kippen des Moire-Magnifiers in beliebiger Richtung waagrecht bewegen und vor der Substratebene zu schweben scheinen.

### Damit ergibt sich:

Linsenrasterdaten: d = 0.03 mm, ϕ = 45°
Motivrasterdaten: u₁₁ = 0.0428507 mm, u₂₁ = 0 mm
Verzerrungsmatrix: ${A}^{- 1} = \left(\begin{matrix}- 0 , 01 & - 1 , 01 \\ 0 & 1\end{matrix}\right)$ mit seitenverkehrten Buchstaben

### Beispiel 5:

Vorgaben wie bei Beispiel 1, aber mit zwei verschiedenen Buchstabenfolgen, die sich beim seitlichen Kippen des Moire-Magnifiers einander durchdringend bewegen. Die erste Buchstabenfolge soll vor der Substratebene zu schweben scheinen, die zweite Buchstabenfolge hinter der Substratebene zu liegen scheinen.

Damit ergibt sich für die erste Buchstabenfolge bei einer Bewegungsrichtung von 35°:
Linsenraster: d = 0.03 mm, ϕ = 0°.
Motivraster: u₁₁ = 0.0303 mm, u₂₁ = 0.0212163 mm,
Verzerrungsmatrix: ${A}^{- 1} = \left(\begin{matrix}- 0 , 01 & 0 \\ - 0 , 70721 & 1\end{matrix}\right)$ (seitenverkehrte Buchstaben)
und für die zweite Buchstabenfolge bei einer Bewegungsrichtung von -35°:
Linsenraster: d = 0.03 mm, ϕ = 0°.
Motivraster: u₁₁ = 0.0297 mm, u₂₁ = -0.0207962 mm,
Verzerrungsmatrix: ${A}^{- 1} = \left(\begin{matrix}0 , 01 & 0 \\ 0 , 693205 & 1\end{matrix}\right)$

Bei den Moire-Magnifiern sind insbesondere folgende Weiterbildungen möglich:

Die Linsen im Moire-Magnifier (das gilt sowohl für die zweidimensionale Bravaisgitter-Anordnung als auch für Zylinderlinsen) können als normale optische Linsen bzw. Linsensysteme aus brechenden Medien ausgeführt werden, aber auch als Fresnel-Linsen, als Elemente variabler Brechzahl (gradient refractive index = GRIN), als diffraktive Elemente mit Linsenwirkung, als holographische Elemente mit Linsenwirkung, als Zonenplatten oder durch sonstige Maßnahmen mit abbildenden Eigenschaften realisiert werden. Beispielsweise kann, wenn das Motivgitter durchsichtig ausgeführt ist, ein hinter der Motivebene angeordnetes Zylinderspiegel-Gitter eingesetzt werden, analog wie beim normalen Moire-Magnifier normale Hohlspiegel, Fresnelspiegel, diffraktive fokussierende Spiegel, usw. eingesetzt werden können.

Für die zweidimensionale Bravaisgitter-Anordnung kommen wie oben beschrieben auch Lochblenden infrage, entsprechend für Zylinderlinsen Schlitzblenden, wobei der Abstand der Blendenebene von der Motivebene vorteilhafter Weise ungefähr gleich dem Abstand der im Raster nebeneinander liegenden Blenden ist.

Der Begriff Mikrofokussierelemente soll demgemäß auch abbildende Systeme ohne fokussierende Wirkung, wie Loch- und Schlitzblenden, umfassen.

Die weiter unten beschriebenen Maßnahmen zur Erzeugung gekrümmter Moire-Magnifier gelten auch für Moire-Magnifier mit Zylinderlinsen.

Moire-Magnifier, die nach den hier aufgeführten Formeln wirken, können als Verbund von Linsenraster und Motivraster oder als getrennte Linsenraster und Motivraster ausgeführt werden, wobei im letzteren Fall der Betrachter das Linsenraster auf das Motivraster legt, um den Moireeffekt zu sehen.

Moire-Magnifier in Folienform können beispielsweise nach den in der deutschen Patentanmeldung 10 2005 007 749.8 und 10 2005 028162.1 oder den in der internationalen Anmeldung PCT/EP2006/001169 beschriebenen Verfahren hergestellt werden. Die Offenbarung der genannten Druckschriften wird vollinhaltlich und insbesondere, soweit sie die Herstellung der Moire-Magnifier in Folienform betreffen, in die vorliegende Anmeldung aufgenommen.

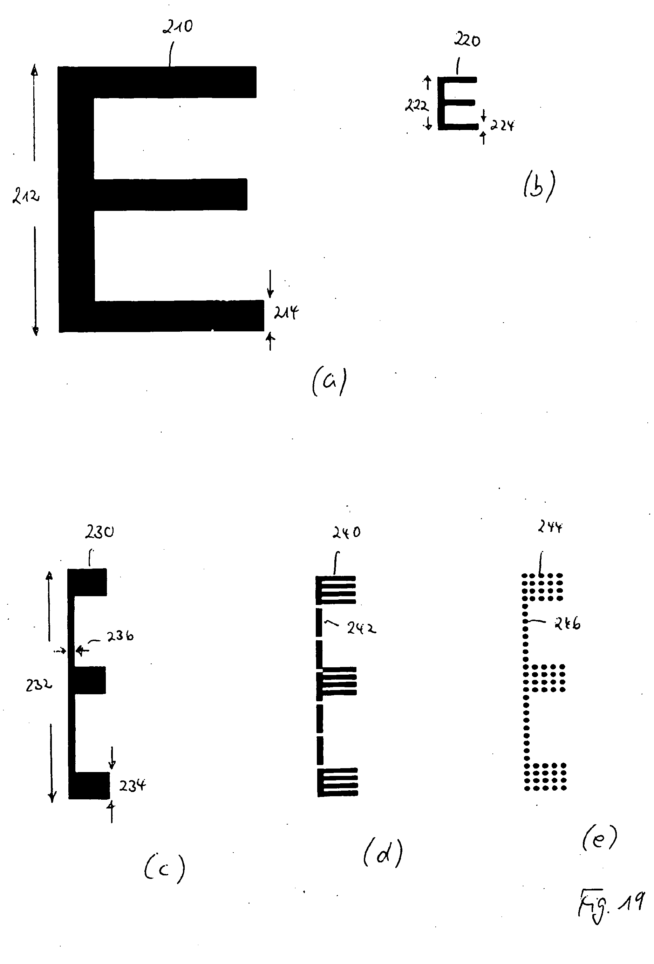

Zur Illustration stellt Fig. 19 einen Vergleich der Verzerrungsverhältnisse bei einem Zylinderlinsen-Moiré-Magnifier und einem Moiré-Magnifier mit normalen Linsen dar.

Dabei zeigt Fig. 19(a) einen Buchstaben 210 "E" im Sollbild eines Moire-vergrößerten Bilds, wobei der Buchstabe 210 zu Illustration eine Höhe 212 in y-Richtung von 1 mm und eine Strichbreite 214 von 0,1 mm aufweisen soll. Die Strichbreite in x- und y-Richtung ist dabei gleich.

Fig. 19(b) zeigt die Größenverhältnisse für das zugehörige Mikromotivelement 220 im Motivbild für eine Gestaltung, bei der der Moire-Magnifier 100-fach vergrößert und ein normales Linsenraster, wie Fig. 15(a) dargestellt, vorliegt. Die Buchstabenhöhe 222 und die Strichbreiten 224 in x- und y-Richtung müssen dann jeweils um einen Faktor 100 verkleinert ausgeführt sein, so dass die Buchstabenhöhe 222 im Mikromotivbild 10 µm und die Strichbreite 224 jeweils 1 µm beträgt.

Fig. 19(c) zeigt die Größenverhältnisse für das zugehörige Mikromotivelement 230 im Motivbild bei Einsatz eines Zylinderlinsen-Moire-Magnifiers nach Fig. 15(b), welcher ebenfalls 100-fach vergrößern soll. Beim Zylinderlinsen-Moire-Magnifier bleibt die Buchstabenhöhe 232 und die Strichbreite in y-Richtung 234 unverändert und beträgt somit 1 mm bzw. 0,1 mm. Die Buchstabenbreite und die Strichbreite in x-Richtung 236 müssen dagegen um einen Faktor 100 verringert sein. Die Mikromotivelemente 230 des Mikromotivbilds liegen daher mit sehr unterschiedliche Strichbreiten und Strichlängen vor.

Diese unterschiedlichen Strichbreiten und Strichlängen können beispielsweise dadurch zuverlässig erzeugt werden, dass die Mikromotivelemente gerastert ausgeführt werden, wie anhand der Strichrasterausführung 240 der Fig. 19(d) und der Punktrasterausführung 244 der Fig. 19(e) illustriert. Die Strichbreiten bzw. Punktgrößen der Teilstriche 242 bzw. der Rasterpunkte 246 sind dabei auf die kleinsten vorkommenden Strichbreiten abgestimmt; breitere und längere Striche werden durch eine Nebeneinander- oder Übereinanderanordnung einer Mehrzahl einzelner Striche 242 bzw. Rasterpunkte 246 erzeugt, wie in Fig. 19(d) und (e) illustriert.

Das Linsenraster und das Motivraster müssen nicht örtlich konstant sein. Man kann die Größen t₁₁, t₂₁, u₁₁, u₂₁, d, φ auch ortsabhängig so variieren dass sich unterschiedliche vorbestimmbare Vergrößerungen, Verzerrungen und/ oder unterschiedliches Bewegungsverhalten an unterschiedlichen Orten im Moirebild ergeben. Bei ortsabhängiger Veränderung einer oder mehrerer der Größen t₁₁, t₂₁, u₁₁, u₂₁, d, φ wird auch die Matrix A⁻¹ ${A}^{- 1} = \frac{1}{d} \left(\begin{matrix}d - {u}_{11} cos φ & - {u}_{11} sin φ \\ - {u}_{21} cos φ & d - {u}_{21} sin φ\end{matrix}\right)$ ortsabhängig. Dieses ortsabhängige A⁻¹ wird benutzt, um die ortsabhängige Verzerrung des im Motivarray anzulegenden verkleinerten Motivs zu berechnen. Wie oben beschrieben, erhält man aus den Koordinaten X,Y eines Punktes im Sollbild die Koordinaten x,y des entsprechenden Punktes im Motivraster durch die Transformation $\left(\begin{matrix}x \\ y\end{matrix}\right) = {A}^{- 1} \left(\begin{matrix}X \\ Y\end{matrix}\right) = \frac{1}{d} \left(\begin{matrix}d - {u}_{11} cos φ & - {u}_{11} sin φ \\ - {u}_{21} cos φ & d - {u}_{21} sin φ\end{matrix}\right) ⋅ \left(\begin{matrix}X \\ Y\end{matrix}\right)$

Die Berechnung wird für alle Punkte des Sollbildes durchgeführt. Die Berechnung kann im Computer erfolgen, wenn das Sollbild als Bit-Map oder als Vektorgrafik in einem geeigneten Computer-Format vorliegt. Das so berechnete x-y-Bild wird mit dem gegebenenfalls ortsabhängigen Verschiebungsvektor ${\overline{u}}_{1} = \left(\begin{matrix}{u}_{11} \\ {u}_{21}\end{matrix}\right)$ verschoben wiederholt angeordnet, womit das Motivraster erzeugt ist.

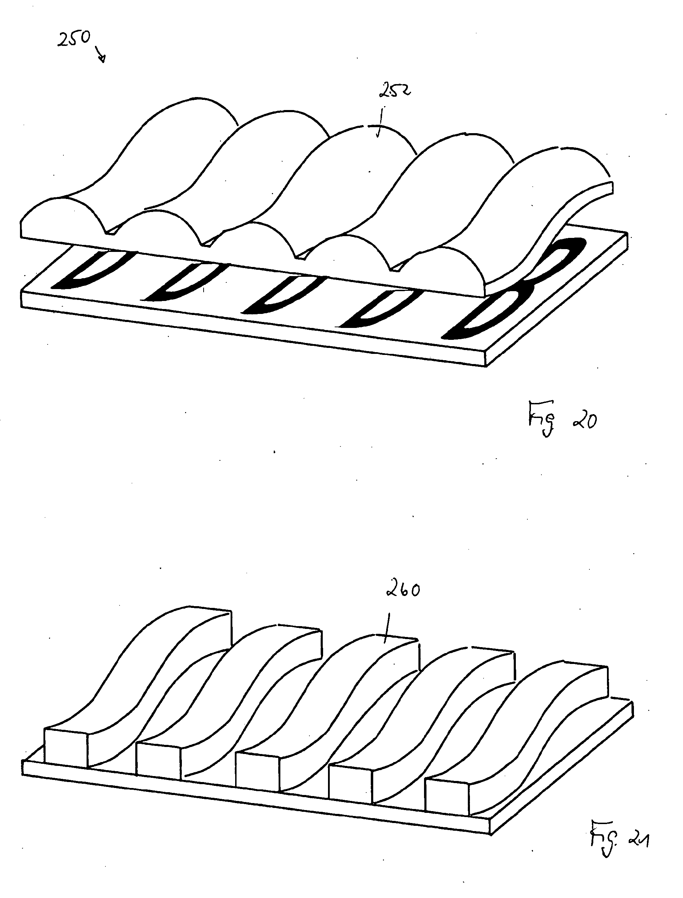

Zur Veranschaulichung zeigt Fig. 20 einen Moiré-Magnifier 250 mit einem örtlich variierendem Zylinderlinsenraster 252, während Fig. 15(b) ein örtlich konstantes Zylinderlinsenraster 194 zeigt.

Solche Rasterarten können auf einer Folie hergestellt werden, indem man zunächst einen Prägestempel bereitstellt, der eine Negativform des erforderlichen Linsenrasters enthält. Mithilfe dieser Prägeform wird in eine Lackschicht geprägt, die auf der Folie aufgebracht ist, die mit dem Linsenraster versehen werden soll. Die Lackschicht kann beispielsweise thermoplastisch oder UV-härtbar sein. Entsprechende Verfahren sind dem Fachmann bekannt und im Stand der Technik beschrieben.

Auch zur Herstellung der Prägeform findet man im Stand der Technik diverse Verfahren, hier einige Beispiele, die wie bei Moire-Magnifiern mit normalen Linsen auch beim Zylinderlinsen-Moiré-Magnifier angewandt werden können:
1) Mittels eines geeigneten Stichels wird in einer computergesteuerten mechanischem Präzisions-Gravieranlage das gewünschte Linsenraster bzw. die Negativform in geeignetes Material gefräst.
2) Mittels computergesteuerter Laserablation wird in eine laserbearbeitbare Schicht das gewünschte Linsenraster eingraviert. Einen metallischen Negativform-Prägestempel erhält man durch galvanische Ablagerung einer Nickelschicht.
3) Bei einer Variante des sogenannten "Thermal Reflow Process" wird eine Photoresistschicht mit Elektronenstrahl- oder Laser-Gravur so abgetragen dass eine Mesa-Struktur 260, wie in Fig. 21 gezeigt, entsteht. Bei gezielt durchgeführter Erwärmung und bei entsprechend angepasster Mesa-Struktur verfließt die Struktur in einer Weise, dass gewölbte Strukturen entstehen, die die gewünschte Linsenform von Fig. 15(a), 15(b) oder 20 aufweisen. Durch galvanische Abformung erhält man eine Negativform.

### Ausführungsbeispiele mit Moiré-Magnifier-Anordnungen mit ausgedehnten Motiven und nicht-zylinderförmigen Linsen :

Alle im Stand der Technik beschriebenen Moire-Magnifier sind aus einem zweidimensionalen Linsenarray aus gleichartigen Linsen und einem angepassten Motivarray aus identischen Motiven aufgebaut. Das Motiv kann dabei nicht größer sein als die unter einer Linse im Array zur Verfügung stehende Fläche.

In einer Richtung beliebig ausgedehnte Motive kann man bei den oben beschriebenen Zylinderlinsen-Moire-Magnifiern unterbringen. Auch dabei enthalten die Magnifier unter jeder Linse des Zylinderlinsenarrays ein vollständiges, wenn auch verkleinertes und verzerrtes Bild des darzustellenden Motivs.

Im Folgenden wird ein weiteres Verfahren beschrieben, ausgedehnte Motive in einem Moiré-Magnifier unterzubringen:

Diese weitere Moire-Magnifier-Variante verhält sich wie ein Zylinderlinsen-Moire-Magnifier, kann aber wie ein normaler Moire-Magnifier ein normales Linsenraster mit sphärischen Linsen 184, wie in Fig. 15(a) gezeigt, enthalten. Anstelle des Motivarrays 182 der Fig. 15(a) wird dazu ein Array aus lang gestreckten Motiven verwendet, die wie beim Zylinderlinsen- Moire-Magnifier in einer Richtung für 1:1 Abbildung (Vergrößerungsfaktor 1), in einer anderen Richtung für eine vorgegebene Moiré-Vergrößerung (Vergrößerungsfaktor > 1) konzipiert sind.

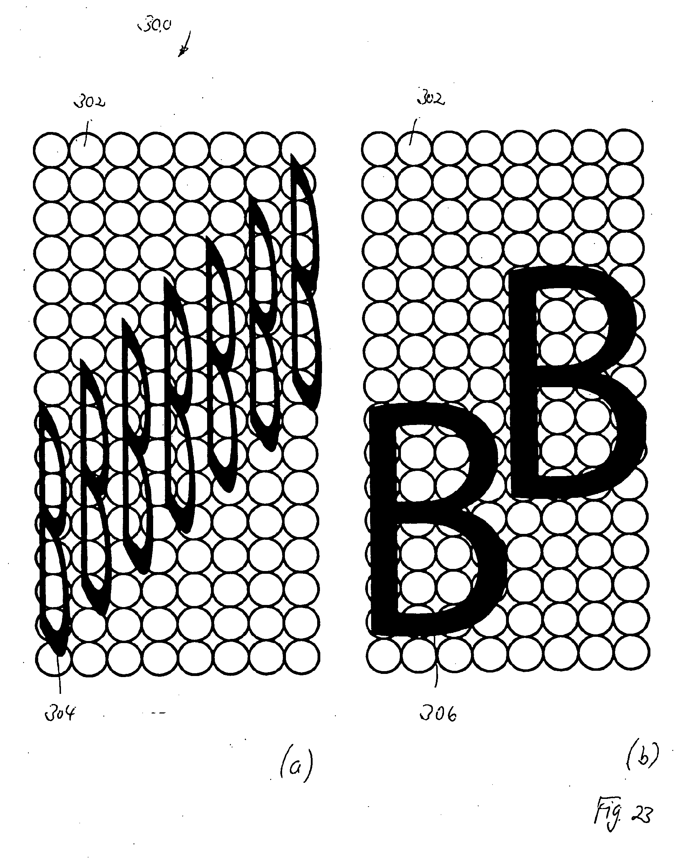

Fig. 23(a) zeigt schematisch eine Aufsicht auf eine derartige Moire-Magnifier-Anordnung 300, die die relative Lage und Größe des Arrays aus sphärischen Linsen 302 und den lang gestreckten Mikromotivelementen 304 illustriert. Fig. 23(b) zeigt, wie ein Betrachter das gewählte Motiv 306, hier den Buchstaben "B", im Moirebild unverzerrt sieht, wenn das Motivraster 304 mit verzerrten Buchstaben "B" und das Linsenraster 302, wie in Fig. 23 (a) angedeutet, übereinander gelegt wird.

Zur Illustration des Rechenwegs wird ein normales Linsengitter $W = \left(\begin{matrix}{w}_{11} & {w}_{12} \\ {w}_{21} & {w}_{22}\end{matrix}\right)$ verwendet, sowie ein Motivgitter $U = \left(\begin{matrix}{u}_{11} & {u}_{12} \\ {u}_{21} & {u}_{22}\end{matrix}\right) ,$ das in einer Richtung ψ für eine Moiré-Vergrößerung ausgelegt ist. In einer anderen Richtung soll 1:1-Abbildung vorliegen. Die Motiv-Gitterzelle ist entartet mit dem Nullvektor als einem Seitenvektor. Der andere Seitenvektor stellt einen Translationsrapport der Länge b in Richtung ψ dar.
Ein solches Gitter U wird beschrieben durch $U = \left(\begin{matrix}b ⋅ cos ψ & 0 \\ b ⋅ sin ψ & 0\end{matrix}\right) = \left(\begin{matrix}{u}_{11} & 0 \\ {u}_{21} & 0\end{matrix}\right)$

Um für ein solches Motivraster U und für ein beliebiges Linsenraster W die Matrix A bzw. A-1 zu berechnen, wird Formel (6d) angewandt $A = W ⋅ {\left(W-U\right)}^{- 1} {A}^{- 1} = \left(W-U\right) ⋅ {W}^{- 1}$ und man erhält ${A}^{- 1} = \frac{1}{DetW} \left(\begin{matrix}DetW - {u}_{11} {w}_{22} & {u}_{11} {w}_{12} \\ - {u}_{21} {w}_{22} & DetW + {u}_{21} {w}_{12}\end{matrix}\right)$ ${A}^{- 1} = \frac{1}{Det \left(W-U\right)} \left(\begin{matrix}DetW + {u}_{21} {w}_{12} & {u}_{11} {w}_{12} \\ {u}_{21} {w}_{22} & DetW - {u}_{11} {w}_{22}\end{matrix}\right)$ mit den Determinanten $DetW = {w}_{11} {w}_{22} - {w}_{12} {w}_{21} ,$ und $Det \left(W-U\right) = {w}_{11} {w}_{22} - {w}_{12} {w}_{21} - {u}_{11} {w}_{22} + {w}_{12} {u}_{21}$

Im Spezialfall ψ = 0 , u₂₁ = 0 gilt $U = \left(\begin{matrix}{u}_{11} & 0 \\ 0 & 0\end{matrix}\right)$ ${A}^{- 1} = \left(\begin{matrix}1 - {/}_{DetW} {u}_{11} {w}_{22} & {/}_{DetW} - {u}_{11} {w}_{12} \\ 0 & 1\end{matrix}\right)$ $A = \left(\begin{matrix}\frac{DetW}{DetW - {u}_{11} {w}_{22}} & \frac{{u}_{11} {w}_{12}}{DetW - {u}_{11} {w}_{22}} \\ 0 & 1\end{matrix}\right)$

Ein anderer interessanter Spezialfall liegt vor wenn ein Vektor des Linsengitters in x-Richtung liegt, also w₂₁=0 ist: $U = \left(\begin{matrix}{u}_{11} & 0 \\ {u}_{21} & 0\end{matrix}\right) , W = \left(\begin{matrix}{w}_{11} & {w}_{12} \\ 0 & {w}_{22}\end{matrix}\right) ,$ so dass Det W=w₁₁w₂₂ ist, und ${A}^{- 1} = \left(\begin{matrix}1 - {/}_{{w}_{11}} {u}_{11} & {/}_{{w}_{11} {w}_{22}} {u}_{11} {w}_{12} \\ {/}_{{w}_{11}} - {u}_{21} & 1\end{matrix}\right) .$

Ein weiterer Spezialfall entspricht der in Fig. 23 dargestellten Situation, bei der das Linsengitters in x-y-Richtung liegt, also w₁₂=0, w₂₁=0 ist. Dann gilt $U = \left(\begin{matrix}{u}_{11} & 0 \\ {u}_{21} & 0\end{matrix}\right) , W = \left(\begin{matrix}{w}_{11} & 0 \\ 0 & {w}_{22}\end{matrix}\right) , DetW = {w}_{11} {w}_{22} ,$ ${A}^{- 1} = \left(\begin{matrix}1 - {/}_{{w}_{11}} {u}_{11} & 0 \\ - {/}_{{w}_{11}} {u}_{21} & 1\end{matrix}\right) , A = \left(\begin{matrix}\frac{{w}_{11}}{{w}_{11} - {u}_{11}} & 0 \\ \frac{{u}_{21}}{{w}_{11} - {u}_{11}} & 1\end{matrix}\right) .$

In einem weiteren Spezialfall liegt U in x-Richtung, W liegt in x- und y-Richtung, so dass gilt: $\begin{matrix}U = \left(\begin{matrix}{u}_{11} & 0 \\ 0 & 0\end{matrix}\right) , W = \left(\begin{matrix}{w}_{11} & 0 \\ 0 & {w}_{22}\end{matrix}\right) , A = \left(\begin{matrix}\frac{{w}_{11}}{{w}_{11} - {u}_{11}} & 0 \\ 0 & 1\end{matrix}\right) , \\ {A}^{- 1} = \left(\begin{matrix}1 - {/}_{{w}_{11}} {u}_{11} & 0 \\ 0 & 1\end{matrix}\right)\end{matrix}$

Über diese illustrativen Spezialfälle hinaus ist die Gittermatrix T = A U für das entstehende Moirebild mit U aus der Beziehung (N1) und A aus Beziehung (N2b) allgemein gegeben durch: $T = \left(\begin{matrix}{t}_{11} & 0 \\ {t}_{21} & 0\end{matrix}\right)$

Der Rapport $\vec{{t}_{1}} = \left(\begin{matrix}{t}_{11} \\ {t}_{21}\end{matrix}\right)$ des entstehenden Moirébildes liegt in der gleichen oder entgegengesetzten Richtung wie $\vec{{u}_{1}} = \left(\begin{matrix}{u}_{11} \\ {u}_{21}\end{matrix}\right) ⋅$ Dies ist auch die Richtung in welcher sich das Motiv beim Kippen der Moire-Magnifier Anordnung bewegt. In dieser Richtung ist der Vergrößerungsfaktor durch $\begin{matrix}v = \frac{{t}_{11}}{{u}_{11}} = \frac{{t}_{21}}{{u}_{21}} & = \frac{DetW}{Det \left(W-U\right)} = \frac{{w}_{11} {w}_{22} - {w}_{12} {w}_{21}}{{w}_{11} {w}_{22} - {w}_{12} {w}_{21} - {u}_{11} {w}_{22} + {w}_{12} {u}_{21}} \\ & = \frac{DetW}{Det \left(W+T\right)} = \frac{{w}_{11} {w}_{22} - {w}_{12} {w}_{21}}{{w}_{11} {w}_{22} - {w}_{12} {w}_{21} + {t}_{11} {w}_{22} - {w}_{12} {t}_{21}}\end{matrix}$ gegeben. Mit diesen Beziehungen lassen sich t₁₁, t₂₁ und u₁₁, u₂₁ ineinander umrechnen. Beim beidäugigen Betrachten erscheint das Motiv vor der Substratebene schwebend, wenn v positiv ist, und hinter der Substratebene zu liegen, wenn v negativ ist.

Bei einer bevorzugten Vorgehensweise zur Wahl der Parameter für einen derartigen Moire-Magnifier geht man wie folgt vor:
- Zunächst wird passendes Motiv X,Y gewählt, wie es im Moire erscheinen soll. Beispielsweise kann das Motiv wie in Fig. 17(a) gewählt werden.
- Dann wird festgelegt, wie sich das Motiv bewegen soll. Die Bewegungsrichtung ψ ist gleich der Richtung der Translationsvektoren, wobei tan ψ = u_{21/}u₁₁ = t₂₁/t₁₁.
- Damit ein Motiv ohne Überschneidungen ins Raster passt, legt man das Soll-Motiv X,Y und die Moiré-Verschiebung t₁₁, t₂₁ in einem Zeichenprogramm an und bestimmt Motiv und Verschiebung so, dass Überschneidungen vermieden werden, siehe zur Illustration Fig. 17(b).
- Nun wird ein Linsenraster gewählt.
- Mithilfe des Formelsatzes (N6) lässt sich die Motivtranslation u₁₁, u₂₁ aus der Moiré-Verschiebung t₁₁, t₂₁ berechnen.
- Dann wird die Verzerrungsmatrix A⁻¹ berechnet.
- Mit der Verzerrungsmatrix wird aus den Koordinaten X,Y des Sollmotivs das anzulegende Motiv x,y berechnet: $\left(\begin{matrix}x \\ y\end{matrix}\right) = {A}^{- 1} \left(\begin{matrix}X \\ Y\end{matrix}\right)$
- Liegt das Sollmotiv beispielsweise als Vektordatei oder Bitmap vor, so kann die Berechnung mit einem Computer durchgeführt werden. Wie das Ergebnis aussehen kann zeigt Fig. 18(a).
- Das so berechnete, anzulegende Motiv wird mit dem Translationsvektor u₁₁, u₂₁ wiederholt verschoben angeordnet wie in Fig. 18(b) gezeigt.
- Betrachtet man das so erzeugte Motivarray durch das der Berechnung zugrunde gelegte Linsenarray, sieht man das Sollmotiv als Moire. Einen Ausschnitt zeigt Fig. 23, wobei Fig. 23(b) das visuelle Erscheinungsbild der Buchstaben "B" im Moire zeigt, wenn Motivraster und Linsenraster so übereinander gelegt werden, wie in Fig. 23(a) angedeutet.

Die nachfolgend beschriebenen Verfahren für gekrümmte Moire-Magnifier können selbstverständlich auch bei der eben behandelten Moire-Magnifier-Variante eingesetzt werden.

### Ausführungsbeispiele mit gekrümmten Moiré-Magnifier-Anordnungen:

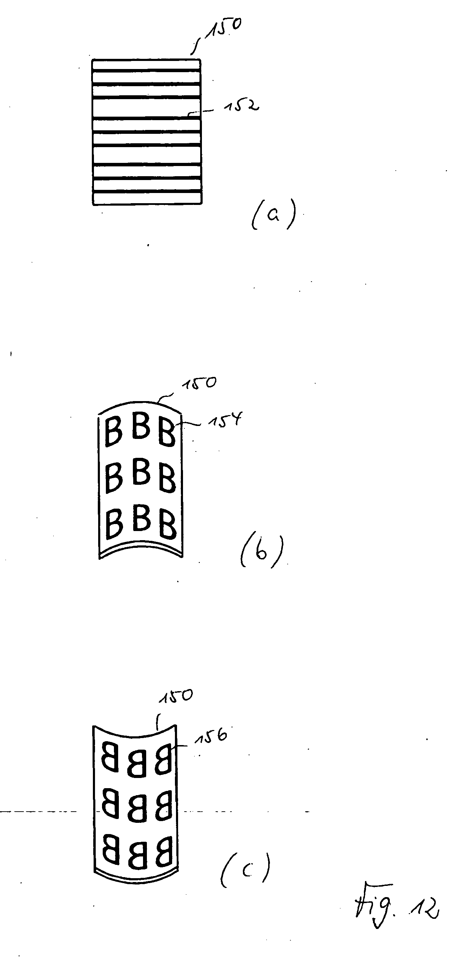

Mit Bezug auf die Figuren 12 bis 14 werden nunmehr einige Ausführungsbeispiele zur Illustration von gekrümmten Moiré-Magnifier-Anordnungen erläutert.

Krümmt oder verbiegt man einen planar berechneten Moire-Magnifier, der ein Motivarray auf einer Seite und ein Linsenarray auf der anderen Seite einer biegsamen Folie aufweist, so ändert sich das visuelle Erscheinungsbild des Motivs. Dieser Effekt wird erfindungsgemäß gezielt eingesetzt, indem das Motivbild so berechnet wird, dass es sich beim Verbiegen bzw. Krümmen der Folie in gewünschter Weise verändert.

Dabei kann sich das Erscheinungsbild eines bereits im planaren Zustand sichtbaren Bildmotivs verändern, oder das Bildmotiv kann erst beim Verbiegen bzw. Krümmen der Folie erscheinen oder verschwinden. Ein solcher gekrümmter Moire-Magnifier kann somit als verborgenes Merkmal zur Absicherung von Dokumenten eingesetzt werden.

Das Ausführungsbeispiel der Fig. 12 zeigt einen Moire-Magnifier 150, der im planaren Zustand kein Motiv, sondern lediglich eine Reihe paralleler Streifen 152 zeigt, wie in Fig. 12(a) dargestellt. Wird der Moiré-Magnifier 150 konvex verbogen, erscheint das vorgewählte Motiv 154, im Ausführungsbeispiel ein Array aus Buchstaben "B", wie in Fig. 12(b) gezeigt. Wird die Folie mit dem Moire-Magnifier 150 andererseits konkav verbogen, wie in Fig. 12(c) dargestellt, so erscheint das vorgewählte Motiv in spiegelverkehrter Darstellung 156. Unverzerrte Darstellungen ergeben sich jeweils bei einem vorbestimmten positiven oder negativen Biegeradius, bei anderen Biegeradien ergeben sich verzerrte Motivbilder.

Zur Illustration des Rechenwegs wird ein einfaches, rechtwinklig orientierten Linsenraster angenommen, bei dem die Linsen einen Abstand von 30 µm haben, also $W = \left(\begin{matrix}30 μm & 0 \\ 0 & 30 μm\end{matrix}\right) .$

Ein Motiv B soll 20 µm hoch sein und in planarem Zustand in einem Raster U₁ angeordnet sein, das durch die Rastermatrix ${U}_{1} = W - {A}^{- 1} W mit {A}^{- 1} = \left(\begin{matrix}0 & 0 \\ 0 & 0.01\end{matrix}\right)$ gegeben ist. Linsen- und Motivarray sind auf gegenüberliegenden Seiten einer biegsamen, 30 µm starken Folie angebracht. Bei einem so aufgebauten Moire-Magnifier 150 erscheinen in planarem Zustand nur die Streifen 152 der Fig. 12(a), ein Bildmotiv ist nicht erkennbar.

Um eine Verbiegung einbeziehen zu können, werden Verbiegungsmatrizen definiert. Diese sind für die Verbiegung von Linsenraster und Motivraster in waagrechter Richtung gegeben durch

Linsenverbiegung ${V}_{L} = \left(\begin{matrix}1 \pm \frac{d}{2 r} & 0 \\ 0 & 1\end{matrix}\right) ,$ Motivverbiegung ${V}_{M} = \left(\begin{matrix}1 ∓ \frac{d}{2 r} & 0 \\ 0 & 1\end{matrix}\right) ,$ wobei *r* den Biegeradius und *d* die Foliendicke darstellt. Die positiven bzw. negativen Vorzeichen gelten für konvexe bzw. konkave Verbiegung. In gebogenem Zustand ergibt sich dann für die Vergrößerungsmatrix $Aʹ = {\left(I-{V}_{M}\left(I-{A}^{- 1}\right){V}_{L}^{- 1}\right)}^{- 1}$

Bei einem Biegeradius von 3 mm ergibt sich für die konvexe Verbiegung der Fig. 12(b) damit $Aʹ = {\left(I-\left(\begin{matrix}0.995 & 0 \\ 0 & 1\end{matrix}\right)⋅\left(\begin{matrix}1 & 0 \\ 0 & 0.99\end{matrix}\right)⋅\left(\begin{matrix}0.995025 & 0 \\ 0 & 1\end{matrix}\right)\right)}^{- 1} = \left(\begin{matrix}100.5 & 0 \\ 0 & 100\end{matrix}\right)$ und für die in Fig. 12(c) gezeigte konkave Verbiegung $Aʹ = {\left(I-\left(\begin{matrix}1.005 & 0 \\ 0 & 1\end{matrix}\right)⋅\left(\begin{matrix}1 & 0 \\ 0 & 0.99\end{matrix}\right)⋅\left(\begin{matrix}1.00503 & 0 \\ 0 & 1\end{matrix}\right)\right)}^{- 1} = \left(\begin{matrix}- 99.5 & 0 \\ 0 & 100\end{matrix}\right)$

Wie aus der modifizierten Vergrößerungsmatrix *A*' ersichtlich, zeigt der mit einem Biegeradius vom 3 mm konvex verbogene Moiré-Magnifier das Motiv seitenrichtig und 100-mal vergrößert, während der mit einem Biegradius vom 3 mm konkav verbogene Moire-Magnifier das Motiv ebenfalls 100-mal vergrößert aber seitenverkehrt zeigt. Sind die Buchstaben "B" im Motivbild 20 µm hoch, erscheinen bei der Verbiegung somit 2 mm hoch.

Darüber hinaus scheint das Motiv bei beidäugiger Betrachtung und konvexer Verbiegung hinter der Folienebene zu liegen, während es bei konkaver Verbiegung vor der Folienebene zu liegen scheint.

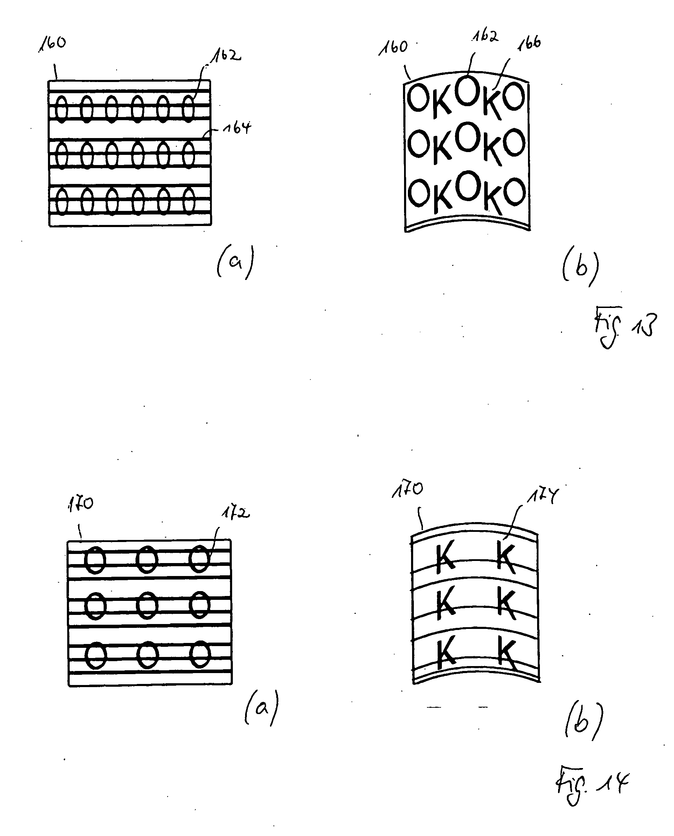

Bei dem Ausführungsbeispiel der Fig. 13 ist eine planare Motivkomponente durch einen Motivteil ergänzt, der erst bei Verbiegung des Moire-Magnifiers 160 sichtbar wird. Dabei ist der Moire-Magnifier 160 in Fig. 13(a) im planaren Zustand dargestellt, in dem ein Array 162 von Buchstaben "O" vor einem Streifenhintergrund 164 erscheint.

In Fig. 13(b) ist der Moiré-Magnifier 160 in gebogenem Zustand dargestellt. Dabei erscheinen zwischen den Buchstaben "O" weitere Motivkomponenten 166 aus Buchstaben "K", die bei Änderung des Biegungsradius ihre Breite verändern und sich relativ zu den Buchstaben "O" bewegen. Wieder mit Bezug auf ein einfaches Rechenbeispiel kann eine solche Gestaltung erhalten werden, indem ein Linsenraster $W = \left(\begin{matrix}30 μm & 0 \\ 0 & 30 μm\end{matrix}\right)$ vorgegeben wird. Die Motivbuchstaben "O" sind 20 µm hoch und in einem Raster *U₁* angeordnet mit *U₁* = *W-A₁⁻¹W* wobei ${{A}_{1}}^{- 1} = \left(\begin{matrix}- 0.0201 & 0 \\ 0 & 0.01\end{matrix}\right) .$

Die Motivbuchstaben "K" sind ebenfalls 20 µm hoch und in einem Raster *U₂* angeordnet mit *U₂* = W- *A₂⁻¹W,* wobei ${{A}_{2}}^{- 1} = \left(\begin{matrix}0 & 0 \\ 0 & 0.01\end{matrix}\right)$ ist. Bei horizontaler konvexer Verbiegung der biegsamen 30 µm starken Folie mit einem Biegeradius von 3 mm ergeben sich die Verbiegungsmatrizen ${V}_{L} = \left(\begin{matrix}1.005 & 0 \\ 0 & 1\end{matrix}\right) und {V}_{M} = \left(\begin{matrix}0.995 & 0 \\ 0 & 1\end{matrix}\right)$

Für die Motivbuchstaben "O" erhält man dann ${A}_{1} ʹ = {\left(I-\left(\begin{matrix}0.995 & 0 \\ 0 & 1\end{matrix}\right)⋅\left(\begin{matrix}1.0201 & 0 \\ 0 & 0.99\end{matrix}\right)⋅\left(\begin{matrix}0.995025 & 0 \\ 0 & 1\end{matrix}\right)\right)}^{- 1} = \left(\begin{matrix}- 100.5 & 0 \\ 0 & 100\end{matrix}\right) ,$ so dass die Buchstaben "O" bei Verbiegung mit einem Biegeradius von 3 mm 100-fach vergrößert, also 2 mm hoch erscheinen und bei beidäugiger Betrachtung vor der Folienebene schweben. Für die Motivbuchstaben "K" erhält man ${A}_{2} ʹ = {\left(I-\left(\begin{matrix}0.995 & 0 \\ 0 & 1\end{matrix}\right)⋅\left(\begin{matrix}1 & 0 \\ 0 & 0.99\end{matrix}\right)⋅\left(\begin{matrix}0.995025 & 0 \\ 0 & 1\end{matrix}\right)\right)}^{- 1} = \left(\begin{matrix}100.5 & 0 \\ 0 & 100\end{matrix}\right) ,$ so dass die Buchstaben "K" bei Verbiegung mit einem Biegeradius von 3 mm 100-fach vergrößert, also ebenfalls 2 mm hoch erscheinen und bei beidäugiger Betrachtung hinter der Folienebene liegen.

Bei dem weiteren Ausführungsbeispiel der Fig. 14 erscheint im planaren Zustand (Fig. 14(a)) des Moiré-Magnifiers 170 ein erstes Motiv 172, das bei Verbiegung (Fig. 14(b)) des Moiré-Magnifiers in den vorbestimmten Biegeradius durch ein zweites Motiv 174 ersetzt wird. Bei anderen als dem vorbestimmten Biegeradius ist eine Mischung der beiden Motive erkennbar.

Auch bei dem Ausführungsbeispiel der Fig. 14 wird von dem oben angegeben Linsenraster *W* ausgegangen. Die 20 µm hohen Motivbuchstaben "O" sind in einem Raster *U₁* angeordnet mit *U₁= W- A₁⁻¹W,* wobei ${{A}_{1}}^{- 1} = \left(\begin{matrix}- 0.01005 & 0 \\ 0 & 0.01\end{matrix}\right)$ ist, die 20 µm hohen Motivbuchstaben "K" sind in einem Raster *U*₂ angeordnet mit *U₂* = *W- A*2*⁻¹W*, wobei ${{A}_{2}}^{- 1} = \left(\begin{matrix}0 & 0 \\ 0 & 0.01\end{matrix}\right)$

Im planaren Zustand der Fig. 14(a) erscheinen die Buchstaben "O" des ersten Motivs 172 mit 100-facher Vergrößerung, die Buchstaben "K" des zweiten Motivs mit unendlicher Vergrößerung, sind also nicht sichtbar.

Bei horizontaler konvexer Verbiegung der biegsamen 30 µm starken Folie mit dem Biegeradius 3 mm ergeben sich die Verbiegungsmatrizen ${V}_{L} = \left(\begin{matrix}1.005 & 0 \\ 0 & 1\end{matrix}\right) und {V}_{M} = \left(\begin{matrix}0.995 & 0 \\ 0 & 1\end{matrix}\right)$

Im verbogenen Zustand der Fig. 14(b) ergibt sich dann für die Buchstaben "O" des ersten Motivs: ${A}_{1} ʹ = {\left(I-\left(\begin{matrix}0.995 & 0 \\ 0 & 1\end{matrix}\right)⋅\left(\begin{matrix}1.01005 & 0 \\ 0 & 0.99\end{matrix}\right)⋅\left(\begin{matrix}0.995025 & 0 \\ 0 & 1\end{matrix}\right)\right)}^{- 1} = {\left(\begin{matrix}0 & 0 \\ 0 & 0.1\end{matrix}\right)}^{- 1} = \left(\begin{matrix}∞ & 0 \\ 0 & 100\end{matrix}\right)$

Die Buchstaben "O" des ersten Motivs 172 erscheinen bei diesem Biegeradius also unendlich vergrößert und sind daher unsichtbar. Für die Buchstaben "K" des zweiten Motivs 174 ergibt sich dagegen ${A}_{2} ʹ = {\left(I-\left(\begin{matrix}0.995 & 0 \\ 0 & 1\end{matrix}\right)⋅\left(\begin{matrix}1 & 0 \\ 0 & 0.99\end{matrix}\right)⋅\left(\begin{matrix}0.995025 & 0 \\ 0 & 1\end{matrix}\right)\right)}^{- 1} = \left(\begin{matrix}100.5 & 0 \\ 0 & 100\end{matrix}\right) ,$ das heißt, die Buchstaben "K" des zweiten Motivs 174 erscheinen nunmehr 100-fach vergrößert. Bei anderen Biegeradien als den vorgewählten 3 mm erscheint eine Mischung aus verzerrten Buchstaben "O" und "K", wobei die Buchstaben "O" für den Betrachter vor den Buchstaben "K" zu schweben scheinen.

Nachfolgend sollen die notwendigen mathematischen Beziehungen für die illustrierten Verbiegungen sowie für allgemeine Verbiegungen bzw. Krümmungen erfindungsgemäßer Moiré-Magnifier zusammengestellt werden. Dabei bezeichnet *r* stets den Biegeradius, *d* die Foliendicke. Es werden übliche Annahmen über das Biegeverhalten für das Folienmaterial vorausgesetzt.

Für konvexe bzw. konkave Verbiegung in horizontaler Richtung sind die Verbiegungsmatrizen V_{L,M} gegeben durch ${V}_{L , M} = \left(\begin{matrix}1 \pm \frac{d}{2 r} & 0 \\ 0 & 1\end{matrix}\right)$

Für Verbiegung in vertikaler Richtung sind die Verbiegungsmatrizen gegeben durch ${V}_{L , M} = \left(\begin{matrix}1 & 0 \\ 0 & 1 \pm \frac{d}{2 r}\end{matrix}\right)$

Für zylindrische Verbiegung in beliebiger Richtung γ sind die Verbiegungsmatrizen gegeben durch ${V}_{L , M} = \left(\begin{matrix}cos γ & sin γ \\ sin γ & cos γ\end{matrix}\right) ⋅ \left(\begin{matrix}1 \pm \frac{d}{2 r} & 0 \\ 0 & 1\end{matrix}\right) ⋅ {\left(\begin{matrix}cos γ & sin γ \\ sin γ & cos γ\end{matrix}\right)}^{- 1}$

Für kugelkalottenförmige Verbiegung sind die Verbiegungsmatrizen gegeben durch ${V}_{L , M} = \left(1 \pm \frac{d}{2 r}\right) ⋅ \left(\begin{matrix}1 & 0 \\ 0 & 1\end{matrix}\right)$

Für beliebige kalottenförmige oder sattelförmige Verbiegung mit den Biegerichtungen $\vec{{c}_{1}} = \left(\begin{matrix}{c}_{11} \\ {c}_{12}\end{matrix}\right)$ und $\vec{{c}_{2}} = \left(\begin{matrix}{c}_{21} \\ {c}_{22}\end{matrix}\right)$ sind die Verbiegungsmatrizen gegeben durch ${V}_{L , M} = \left(\begin{matrix}{c}_{11} & {c}_{21} \\ {c}_{12} & {c}_{22}\end{matrix}\right) ⋅ \left(\begin{matrix}1 \pm d / \left(2{r}_{1}\right) & 0 \\ 0 & 1 \pm d / \left(2{r}_{2}\right)\end{matrix}\right) ⋅ {\left(\begin{matrix}{c}_{11} & {c}_{21} \\ {c}_{12} & {c}_{22}\end{matrix}\right)}^{- 1}$ wobei r₁, r₂ die Biegeradien und d wieder die Foliendicke ist.

Gibt man allgemein ein Bewegungs- und Vergrößerungsverhalten für den planaren Zustand durch eine Matrix *A* vor, so erhält man in gebogenem Zustand die Bewegungs- und Vergrößerungsmatrix *A'* mit $Aʹ = {\left(I-{V}_{M}\left(I-{A}^{- 1}\right){V}_{L}^{- 1}\right)}^{- 1}$

Gibt man andererseits ein in gebogenen Zustand erwünschtes Bewegungs- und Vergrößerungsverhalten durch eine Matrix *A*' vor, so muss man im planaren Zustand die Bewegungs- und Vergrößerungsmatrix anlegen durch: $A = {\left(I-{{V}_{M}}^{- 1}\left(I-{Aʹ}^{- 1}\right){V}_{L}\right)}^{- 1}$

Im allgemeinen Fall wird bevorzugt eine Verbiegung nach einer der Formeln (8) bis (12), ein Linsenraster W sowie ein erwünschtes Bewegungs- und Vergrößerungsverhalten entweder vor oder nach der Verbiegung durch eine Matrix A oder *A*' vorgegeben. Dann werden die benötigten fehlenden Größen, insbesondere das Motivraster U nach Formel (7) und die Matrix *A*' bzw. A nach Formel (13) oder (14) berechnet.

Alternativ kann man andere Größen-Matrizen aus der Gruppe *W*, *U*, *A*, *A', T, V_{L},_{M}* vorgeben, und die benötigten Matrizen aus den angegebenen Matrixbeziehungen berechnen. Gegebenenfalls werden die Beziehungen (6), (7), (13) und (14) dazu anders aufgelöst.

Die hier durchgeführten Überlegungen und Formeln zum gekrümmten Moiré-Magnifier gelten sowohl beim Moire-Magnifier mit normalen Linsen als auch beim Zylinderlinsen- Moire-Magnifier.

## Patentansprüche

1. Sicherheitselement für Sicherheitspapiere, Wertdokumente und dergleichen, mit einer mikrooptischen Moiré-Vergrößerungsanordnung mit
- einem Motivbild, das aus einer planaren periodischen oder zumindest lokal periodischen Anordnung einer Mehrzahl von Mikromotivelementen besteht, und
- einer planaren periodischen oder zumindest lokal periodischen Anordnung einer Mehrzahl von Mikrofokussierelementen zur Moire-vergrößerten Betrachtung der Mikromotivelemente des Motivbilds,
wobei die Anordnung von Mikromotivelementen und/oder die Anordnung von Mikrofokussierelementen in ihren periodischen oder zumindest lokal periodischen Bereichen keine Symmetrieachse in der Ebene der Anordnung aufweist.

2. Sicherheitselement nach Anspruch 1, **dadurch gekennzeichnet, dass** sowohl die Mehrzahl von Mikromotivelementen als auch die Mehrzahl von Mikrofokussierelementen periodisch angeordnet sind.

3. Sicherheitselement nach Anspruch 2, **dadurch gekennzeichnet, dass** die Periodizitätslänge zwischen 3 µm und 50 µm, bevorzugt zwischen 5 µm und 30 µm, besonders bevorzugt zwischen etwa 10 µm und etwa 20 µm liegt.

4. Sicherheitselement nach wenigstens einem der Ansprüche 1 bis 3, **dadurch gekennzeichnet, dass** die Anordnung von Mikromotivelementen und die Anordnung von Mikrofokussierelementen jeweils ein zweidimensionales Bravais-Gitter bilden, wobei die Anordnung von Mikromotivelementen ein Bravais-Gitter mit der Symmetrie eines Parallelogramm-Gitters bildet.

5. Sicherheitselement nach Anspruch 4, **dadurch gekennzeichnet, dass** die Gitterzellen der beiden Bravais-Gitter durch eine erste Seitenlänge s₁, eine zweite Seitenlänge s₂ und einen Zwischenwinkel σ beschrieben werden, wobei sich das Parallelogramm-Gitter der Mikromotivelemente von dem Bravais-Gitter der Mikrofokussierelemente in zumindest einem der Gitterparameter s₁, s₂ und σ um 0,01% bis 5%, vorzugsweise um 0,1% bis 2% unterscheidet.

6. Sicherheitselement nach wenigstens einem der Ansprüche 1 bis 5, **dadurch gekennzeichnet, dass** die Anordnung von Mikromotivelementen und die Anordnung von Mikrofokussierelementen jeweils ein zweidimensionales Bravais-Gitter bilden, wobei die Anordnung von Mikrofokussierelementen ein Bravais-Gitter mit der Symmetrie eines Parallelogramm-Gitters bildet.

7. Sicherheitselement nach Anspruch 6, **dadurch gekennzeichnet, dass** die Gitterzellen der beiden Bravais-Gitter durch eine erste Seitenlänge s₁, eine zweite Seitenlänge s₂ und einen Zwischenwinkel σ beschrieben werden, wobei sich das Parallelogramm-Gitter der Mikrofokussierelemente von dem Bravais-Gitter der Mikromotivelemente in zumindest einem der Gitterparameter s₁, s₂ und σ um 0,01% bis 5%, vorzugsweise um 0,1% bis 2% unterscheidet.

8. Sicherheitselement nach Anspruch 1, **dadurch gekennzeichnet, dass** sowohl die Mehrzahl von Mikromotivelementen als auch die Mehrzahl von Mikrofokussierelementen lokal periodisch angeordnet sind, wobei sich die lokalen Periodenparameter im Verhältnis zur Periodizitätslänge nur langsam ändern.

9. Sicherheitselement nach Anspruch 8, **dadurch gekennzeichnet, dass** die lokalen Periodenparameter über die Ausdehnung des Sicherheitselements periodisch moduliert sind, wobei die Modulationsperiode vorzugsweise mindestens 20-mal, bevorzugt mindestens 50-mal, besonders bevorzugt mindestens 100-mal größer ist als die lokale Periodizitätslänge.

10. Sicherheitselement nach Anspruch 8 oder 9, **dadurch gekennzeichnet, dass** die lokale Periodizitätslänge zwischen 3 µm und 50 µm, bevorzugt zwischen 5 µm und 30 µm, besonders bevorzugt zwischen etwa 10 µm und etwa 20 µm liegt.

11. Sicherheitselement nach wenigstens einem der Ansprüche 1 oder 8 bis 10, **dadurch gekennzeichnet, dass** die Anordnung von Mikromotivelementen und die Anordnung von Mikrofokussierelementen lokal jeweils ein zweidimensionales Bravais-Gitter bilden, wobei die Anordnung von Mikromotivelementen lokal ein Bravais-Gitter mit der Symmetrie eines Parallelogramm-Gitters bildet.

12. Sicherheitselement nach Anspruch 11, **dadurch gekennzeichnet, dass** die Gitterzellen der beiden Bravais-Gitter lokal jeweils durch eine erste Seitenlänge s₁, eine zweite Seitenlänge s₂ und einen Zwischenwinkel σ beschrieben werden, wobei sich das Parallelogramm-Gitter der Mikromotivelemente von dem Bravais-Gitter der Mikrofokussierelemente in zumindest einem der Gitterparameter s₁, s₂ und σ um 0,01% bis 5%, vorzugsweise um 0,1% bis 2% unterscheidet.

13. Sicherheitselement nach wenigstens einem der Ansprüche 1 oder 8 bis 12, **dadurch gekennzeichnet, dass** die Anordnung von Mikromotivelementen und die Anordnung von Mikrofokussierelementen lokal jeweils ein zweidimensionales Bravais-Gitter bilden, wobei die Anordnung von Mikrofokussierelementen lokal ein Bravais-Gitter mit der Symmetrie eines Parallelogramm-Gitters bildet.

14. Sicherheitselement nach Anspruch 13, **dadurch gekennzeichnet, dass** die Gitterzellen der beiden Bravais-Gitter lokal jeweils durch eine erste Seitenlänge s₁, eine zweite Seitenlänge s₂ und einen Zwischenwinkel σ beschrieben werden, wobei sich das Parallelogramm-Gitter der Mikrofokussierelemente von dem Bravais-Gitter der Mikromotivelemente in zumindest einem der Gitterparameter s₁, s₂ und σ um 0,01% bis 5%, vorzugsweise um 0,1% bis 2% unterscheidet.

15. Sicherheitselement nach wenigstens einem der Ansprüche 1 bis 14, **dadurch gekennzeichnet, dass** die Mikrofokussierelemente durch nichtzylindrische Mikrolinsen, insbesondere durch Mikrolinsen mit einer kreisförmigen oder polygonal begrenzten Basisfläche gebildet sind.

16. Sicherheitselement nach wenigstens einem der Ansprüche 1 bis 15, **dadurch gekennzeichnet, dass** das Sicherheitselement ein Sicherheitsfaden, ein Aufreißfaden, ein Sicherheitsband, ein Sicherheitsstreifen, ein Patch oder ein Etikett zum Aufbringen auf ein Sicherheitspapier, Wertdokument oder dergleichen ist.

17. Verfahren zum Herstellen eines Sicherheitselements mit einer mikrooptischen Moiré-Vergrößerungsanordnung, bei dem ein Motivbild, das aus einer planaren periodischen oder zumindest lokal periodischen Anordnung einer Mehrzahl von Mikromotivelementen besteht, und eine planare periodische oder zumindest lokal periodische Anordnung einer Mehrzahl von Mikrofokussierelementen so angeordnet werden, dass die Mikromotivelemente bei Betrachtung durch die Mikrofokussierelemente vergrößert erkennbar sind, und wobei die Anordnung von Mikromotivelementen und/oder die Anordnung von Mikrofokussierelementen so gewählt werden, dass sie in ihren periodischen oder zumindest lokal periodischen Bereichen keine Symmetrieachse in der Ebene der Anordnung aufweisen.

18. Sicherheitspapier für die Herstellung von Sicherheits- oder Wertdokumenten, wie Banknoten, Schecks, Ausweiskarten, Urkunden oder dergleichen, das mit einem Sicherheitselement nach wenigstens einem der Ansprüche 1 bis 16 ausgestattet ist.

19. Sicherheitspapier nach Anspruch 18, **dadurch gekennzeichnet, dass** das Sicherheitspapier ein Trägersubstrat aus Papier oder Kunststoff umfasst.

20. Datenträger, insbesondere Markenartikel, Wertdokument oder dergleichen, mit einem Sicherheitselement nach einem der Ansprüche 1 bis 16.

21. Datenträger nach Anspruch 20, **dadurch gekennzeichnet, dass** das Sicherheitselement in einem Fensterbereich des Datenträgers angeordnet ist.

## Claims

1. A security element for security papers, value documents and the like, having a micro-optical moire magnification arrangement having
- a motif image that consists of a periodic or at least locally periodic arrangement of a plurality of micromotif elements that is planar, and
- a periodic or at least locally periodic arrangement of a plurality of microfocusing elements that is planar for moire-magnified viewing of the micromotif elements of the motif image,
the arrangement of micromotif elements and/ or the arrangement of microfocusing elements exhibiting no symmetry axis in the plane of the arrangement in its periodic or at least locally periodic regions.

2. The security element according to claim 1, **characterized in that** both the plurality of micromotif elements and the plurality of microfocusing elements are arranged periodically.

3. The security element according to claim 2, **characterized in that** the periodicity length is between 3 µm and 50 µm, preferably between 5 µm and 30 µm, particularly preferably between about 10 µm and about 20 µm.

4. The security element according to at least one of claims 1 to 3, **characterized in that** the arrangement of micromotif elements and the arrangement of microfocusing elements each forms a two-dimensional Bravais lattice, the arrangement of micromotif elements forming a Bravais lattice having the symmetry of a parallelogram lattice.

5. The security element according to claim 4, **characterized in that** the lattice cells of the two Bravais lattices are described by a first side length s₁, a second side length s₂ and an angle σ in between, the parallelogram lattice of the micro-motif elements differing from the Bravais lattice of the micro-focusing elements in at least one of the lattice parameters s₁, s₂ and σ by 0.01% to 5%, preferably by 0.1 % to 2%.

6. The security element according to at least one of claims 1 to 5, **characterized in that** the arrangement of micromotif elements and the arrangement of microfocusing elements each forms a two-dimensional Bravais lattice, the arrangement of microfocusing elements forming a Bravais lattice having the symmetry of a parallelogram lattice.

7. The security element according to claim 6, **characterized in that** the lattice cells of the two Bravais lattices are described by a first side length s₁, a second side length s₂ and an angle σ in between, the parallelogram lattice of the micro-focusing elements differing from the Bravais lattice of the micro-motif elements in at least one of the lattice parameters s₁, s₂ and σ um 0.01 % to 5%, preferably um 0.1% to 2%.

8. The security element according to claim 1, **characterized in that**, locally, both the plurality of micromotif elements and the plurality of microfocusing elements are arranged periodically, the local period parameters changing only slowly in relation to the periodicity length.

9. The security element according to claim 8, **characterized in that** the local period parameters are periodically modulated across the dimension of the security element, the modulation period being especially at least 20 times, preferably at least 50 times, particularly preferably at least 100 times greater than the local periodicity length.

10. The security element according to claim 8 or 9, **characterized in that** the local periodicity length is between 3 µm and 50 µm, preferably between 5 µm and 30 µm, particularly preferably between about 10 µm and about 20 µm.

11. The security element according to at least one of claims 1 or 8 to 10, **characterized in that**, locally, the arrangement of micromotif elements and the arrangement of microfocusing elements each forms a two-dimensional Bravais lattice, the arrangement of micromotif elements locally forming a Bravais lattice having the symmetry of a parallelogram lattice.

12. The security element according to claim 11, **characterized in that**, locally, the lattice cells of the two Bravais lattices are each described by a first side length s₁, a second side length s₂ and an angle σ in between, the parallelogram lattice of the micromotif elements differing from the Bravais lattice of the microfocusing elements in at least one of the lattice parameters s₁, s₂ and σ by 0.01% to 5%, preferably by 0.1% to 2%.

13. The security element according to at least one of claims 1 or 8 to 12, **characterized in that**, locally, the arrangement of micromotif elements and the arrangement of microfocusing elements each forms a two-dimensional Bravais lattice, the arrangement of microfocusing elements locally forming a Bravais lattice having the symmetry of a parallelogram lattice.

14. The security element according to claim 13, **characterized in that**, locally, the lattice cells of the two Bravais lattices are each described by a first side length s₁, a second side length s₂ and an angle σ in between, the parallelogram lattice of the microfocusing elements differing from the Bravais lattice of the micromotif elements in at least one of the lattice parameters s₁, s₂ and σ by 0.01% to 5%, preferably by 0.1% to 2%.

15. The security element according to at least one of claims 1 to 14, **characterized in that** the microfocusing elements are formed by non-cylindrical microlenses, especially by microlenses having a circular or polygonally delimited base area.

16. The security element according to at least one of claims 1 to 15, **characterized in that** the shape and arrangement of the microfocusing elements and the shape and arrangement of the micromotif elements are coordinated with each other to prevent unused spaces in the magnified motif image.

17. A method for manufacturing a security element having a micro-optical moiré magnification arrangement, in which a motif image that consists of a periodic or at least locally periodic arrangement of a plurality of micromotif elements that is planar, and a periodic or at least locally periodic arrangement of a plurality of microfocusing elements that is planar, are arranged in such a way that the micromotif elements are perceptible in magnification when viewed through the microfocusing elements, and the arrangement of micromotif elements and/or the arrangement of microfocusing elements being chosen such that they exhibit no symmetry axis in the plane of the arrangement in their periodic or at least locally periodic regions.

18. A security paper for manufacturing security or value documents, such as banknotes, checks, identification cards, certificates or the like, that are furnished with a security element according to at least one of claims 1 to 16.

19. The security paper according to claim 18, **characterized in that** the security paper comprises a carrier substrate composed of paper or plastic.

20. A data carrier, especially a branded article, value document or the like, having a security element according to one of claims 1 to 16.

21. The data carrier according to claim 20, **characterized in that** the security element is arranged in a window region of the data carrier.

## Revendications

1. Élément de sécurité pour des papiers de sécurité, des documents de valeur et similaires, avec un dispositif micro-optique de grossissement par effet de moiré, comprenant :
- une image de motif constituée d'un ensemble planaire périodique ou du moins localement périodique, formé par une pluralité de microéléments de motif, et
- un ensemble planaire périodique ou du moins localement périodique, formé par une pluralité de microéléments de focalisation pour l'observation grossie par effet de moiré des microéléments de motif de l'image de motif,
dans lequel l'ensemble de microéléments de motif et/ou l'ensemble de microéléments de focalisation ne présentent aucun axe de symétrie dans le plan du dispositif dans leurs zones périodiques ou du moins localement périodiques.

2. Élément de sécurité selon la revendication 1, **caractérisé en ce qu'**aussi bien la pluralité de microéléments de motif que la pluralité de microéléments de focalisation est agencée périodiquement.

3. Élément de sécurité selon la revendication 2, **caractérisé en ce que** la longueur de périodicité varie entre 3 µm et 50 µm, de préférence entre 5 µm et 30 µm, de façon particulièrement préférée entre environ 10 µm et environ 20 µm.

4. Élément de sécurité selon l'au moins une des revendications 1 à 3, **caractérisé en ce que** l'ensemble de microéléments de motif et l'ensemble de microéléments de focalisation forment respectivement un réseau de Bravais bidimensionnel, l'ensemble de microéléments de motif formant un réseau de Bravais avec la symétrie d'un réseau en parallélogramme.

5. Élément de sécurité selon la revendication 4, **caractérisé en ce que** les mailles de réseau des deux réseaux de Bravais sont définies par une première longueur de côté s₁, une deuxième longueur de côté s₂ et un angle intermédiaire σ, le réseau en parallélogramme de microéléments de motif variant de 0,01% à 5%, de préférence de 0,1% à 2%, par rapport au réseau de Bravais de microéléments de focalisation, concernant au moins l'un des paramètres de réseau s₁, s₂ et σ.

6. Élément de sécurité selon l'au moins une des revendications 1 à 5, **caractérisé en ce que** l'ensemble de microéléments de motif et l'ensemble de microéléments de focalisation forment respectivement un réseau de Bravais bidimensionnel, l'ensemble de microéléments de motif formant un réseau de Bravais avec la symétrie d'un réseau en parallélogramme.

7. Élément de sécurité selon la revendication 6, **caractérisé en ce que** les mailles de réseau des deux réseaux de Bravais sont définies par une première longueur de côté s1, une deuxième longueur de côté s2 et un angle intermédiaire σ, le réseau en parallélogramme de microéléments de focalisation variant de 0,01% à 5%, de préférence de 0,1% à 2%, par rapport au réseau de Bravais de microéléments de motif, concernant au moins l'un des paramètres de réseau s₁, s₂ et σ.

8. Élément de sécurité selon la revendication 1, **caractérisé en ce qu'**aussi bien la pluralité de microéléments de motif que la pluralité de microéléments de focalisation est agencée de façon localement périodique, les paramètres périodiques locaux variant seulement lentement par rapport à la longueur de périodicité.

9. Élément de sécurité selon la revendication 8, **caractérisé en ce que** les paramètres périodiques locaux sont modulés périodiquement sur l'étendue des éléments de sécurité, la période de modulation étant de préférence au moins 20 fois supérieure à la longueur de périodicité locale, de préférence au moins 50 fois et de façon particulièrement préférée au moins 100 fois.

10. Élément de sécurité selon la revendication 8 ou 9, **caractérisé en ce que** la longueur de périodicité locale varie entre 3 µm et 50 µm, de préférence entre 5 µm et 30 µm, de façon particulièrement préférée entre environ 10 µm et environ 20 µm.

11. Élément de sécurité selon l'au moins une des revendications 1 ou 8 à 10, **caractérisé en ce que** l'ensemble de microéléments de motif et l'ensemble de microéléments de focalisation forment respectivement localement un réseau de Bravais bidimensionnel, l'ensemble de microéléments de motif formant localement un réseau de Bravais avec la symétrie d'un réseau en parallélogramme.

12. Élément de sécurité selon la revendication 11, **caractérisé en ce que** les mailles de réseau des deux réseaux de Bravais sont respectivement définies localement par une première longueur de côté s₁, une deuxième longueur de côté s₂ et un angle intermédiaire σ, le réseau en parallélogramme de microéléments de motif variant de 0,01% à 5%, de préférence de 0,1% à 2%, par rapport au réseau de Bravais de microéléments de focalisation, concernant au moins l'un des paramètres de réseau s₁, s₂ et σ.

13. Élément de sécurité selon l'au moins une des revendications 1 ou 8 à 12, **caractérisé en ce que** l'ensemble de microéléments de motif et l'ensemble de microéléments de focalisation forment respectivement localement un réseau de Bravais bidimensionnel, l'ensemble de microéléments de focalisation formant localement un réseau de Bravais avec la symétrie d'un réseau en parallélogramme.

14. Élément de sécurité selon la revendication 13, **caractérisé en ce que** les mailles de réseau des deux réseaux de Bravais sont respectivement définies localement par une première longueur de côté s₁, une deuxième longueur de côté s₂ et un angle intermédiaire σ, le réseau en parallélogramme de microéléments de focalisation variant de 0,01% à 5%, de préférence de 0,1% à 2%, par rapport au réseau de Bravais de microéléments de focalisation, concernant au moins l'un des paramètres de réseau s₁, s₂ et σ.

15. Élément de sécurité selon l'au moins une des revendications 1 à 14, **caractérisé en ce que** les microéléments de motif sont formés par des microlentilles non cylindriques, en particulier par des microlentilles avec une surface de base délimitée de façon polygonale ou circulaire.

16. Élément de sécurité selon l'au moins une des revendications 1 à 15, **caractérisé en ce que** l'élément de sécurité est un fil de sécurité, un fil de déchirure, une bande de sécurité, un ruban de sécurité, un patch ou une étiquette, destiné(e) à être appliqué(e) sur un papier de sécurité, un document de valeur ou similaire.

17. Procédé pour la réalisation d'un élément de sécurité avec un dispositif micro-optique de grossissement par effet de moiré, dans lequel une image de motif constituée d'un ensemble planaire périodique ou du moins localement périodique, formé par une pluralité de microéléments de motif, et un ensemble planaire périodique ou du moins localement périodique, formé par une pluralité de microéléments de focalisation, sont agencés de manière à ce que les microéléments de motif puissent être reconnus avec grossissement par une observation à travers les microéléments de focalisation, et dans lequel l'ensemble de microéléments de motif et/ou l'ensemble de microéléments de focalisation sont choisis de manière à ne présenter aucun axe de symétrie dans le plan du dispositif dans leurs zones périodiques ou du moins localement périodiques.

18. Papier de sécurité pour la réalisation de documents de sécurité ou de valeur, tels que des billets de banque, des cartes d'identité, des certificats ou similaires, lequel est doté d'un élément de sécurité selon l'au moins une des revendications 1 à 16.

19. Papier de sécurité selon la revendication 18, **caractérisé en ce que** le papier de sécurité comprend un substrat de support en papier ou en plastique.

20. Support de données, en particulier un article de marque, un document de valeur ou similaire, avec un Élément de sécurité selon l'une des revendications 1 à 16.

21. Support de données selon la revendication 20, **caractérisé en ce que** l'élément de sécurité est disposé dans une zone de fenêtre du support de données.
